# FASCICULE DE BREVET EUROPEEN

(11) **EP 4 330 781 B1**
(45) Date de publication et mention de la délivrance du brevet: **28.01.2026**
(21) Numéro de dépôt: 22725742.5
(22) Date de dépôt: 26.04.2022
(51) Int. Cl.: G05B 23/02, G06Q 50/04, G06Q 10/00

(54) **SYSTÈME DE SUPERVISION DE L'EXPLOITATION ET DE LA MAINTENANCE D'ÉQUIPEMENTS INDUSTRIELS**
SYSTEM ZUR ÜBERWACHUNG DES BETRIEBS UND DER WARTUNG VON INDUSTRIEANLAGEN
SYSTEM FOR SUPERVISION OF THE OPERATION AND MAINTENANCE OF INDUSTRIAL EQUIPMENT

(30) Priorité: 28.04.2021 FR 2104418
(43) Date de publication de la demande: 06.03.2024
(73) Titulaire: Seadvance, 13013 Marseille (FR)
(72) Inventeur: RAVIGNON, Fabrice, 83000 Toulon (FR)
(74) Mandataire: Axe PI
(86) Numéro de dépôt international: PCT/EP2022/060969
(87) Numéro de publication internationale: WO 2022/229135

(56) Documents cités:
- WO-A1-2015/091752
- WO-A1-2017/149500
- WO-A2-2014/197299
- "IAEA-TECDOC-1551 Implementation Strategies and Tools for Condition Based Maintenance at Nuclear Power Plants", 1 May 2007 (2007-05-01), XP055100361, Retrieved from the Internet <URL:http://www-pub.iaea.org/MTCD/publications/PDF/te_1551_web.pdf> [retrieved on 20140205]

## Description

La présente invention entre dans le domaine de la supervision d'équipements industriels en vue de gérer leur cycle de vie :
- optimiser leur fabrication, adapter leur fabrication pour un profil d'utilisation donné ;
- optimiser et adapter leur maintenance à un profil d'utilisation souhaité ;
- déterminer leur maintenance ainsi optimisée sur le long terme de leur durée de vie ;
- identifier les utilisations compatibles avec une absence de panne en fonctionnement jusqu'au prochain entretien (zéro-panne) ;
- identifier les utilisations compatibles avec le zéro-panne sur le long terme de leur durée de vie ;
- instruire et optimiser leur prolongement de durée de vie pour un profil d'utilisation souhaité.

### Domaine technique

L'invention trouvera une application préférentielle, mais non limitative, dans la supervision d'équipements et installations industriels à enjeu moyen à élevé, au sens où les équipements considérés sont soumis à des exigences de fiabilité, et ce d'autant lorsque l'exigence de fiabilité se double d'exigence de sécurité. Ces équipements sont notamment :
- ceux dont l'indisponibilité interrompt la production d'un service ou d'un produit de l'installation plus globale à laquelle ces équipements appartiennent ;
- ceux dont l'indisponibilité induit ou aggrave une situation incidentelle ou accidentelle de l'installation.

L'invention trouve ainsi des applications non limitatives dans le segment des transports (routier, aérien, maritime, ferroviaire), mais aussi dans le segment des industries de process (utilities pour « services de collectivités », comme la production d'électricité, d'eau, de carburant), ou encore dans le segment de la défense.

Dans le cadre de la présente invention, le terme générique « équipement » englobe ainsi un composant d'une installation, composant fonctionnel et essentiel au bon fonctionnement et/ou à la sécurité de cette installation.

Les équipements considérés sont donc des composants d'installations mobiles, comme des engins ou véhicules (par exemple des submersibles, navires, aéronefs ou engins spatiaux), ou encore des composants d'installations fixes, comme des structures ou infrastructures (par exemple des centrales de production d'électricité, des plateformes pétrolières ou des raffineries).

Parce que l'invention permet ainsi des garanties supérieures de fiabilité en matière de fabrication, maintenance et exploitation, l'invention répond aux attentes fortes des acteurs industriels impliqués dans la chaîne de valeur de ce type d'équipements, en particulier les concepteurs, les fabricants, les maintenanciers et les exploitants.

La fiabilité des équipements considérés est primordiale puisque leur défaillance induit l'arrêt de la production de l'installation. La fiabilité de tels équipements est d'autant plus primordiale, lorsque leur fiabilité est une exigence de sécurité pour l'installation à laquelle ils appartiennent.

Dans ce contexte, l'invention prend les partis-pris suivants : la fiabilité de l'équipement dépend de la qualité de sa fabrication, de ses maintenances passées et de son utilisation passée, ainsi que de l'utilisation future que l'on compte faire de l'équipement.

Les enjeux de la fiabilité des équipements désignent ainsi tout l'intérêt de maîtriser l'impact de la conception et de la fabrication, des maintenances et de l'utilisation desdits équipements sur la fiabilité de ces derniers.

C'est ainsi tout l'intérêt de répondre aux questions suivantes :
- quelles sont les tâches (gestes, pièces et réglages) pour la fabrication de l'équipement qui optimisent le comportement de l'équipement en fonctionnement, compte tenu de l'utilisation que l'on souhaite en faire ?
- quelles sont les tâches pour une maintenance de l'équipement à réaliser, qui permettent l'optimum entre le coût de maintenance et le potentiel redonné à l'équipement pour un zéro-panne jusqu'à la prochaine maintenance (compte tenu de l'utilisation future que l'on souhaite faire de l'équipement et compte tenu de son propre historique de fabrication, de maintenance et d'utilisation) ?
- quelle est l'utilisation limite de l'équipement à respecter en fonctionnement jusqu'à la prochaine maintenance, à savoir l'utilisation maximale compatible avec le zéro-panne jusqu'à la prochaine maintenance ?

Il est aussi utile de déterminer à tout moment les tâches optimales pour chacune des maintenances dans le reste à venir de la durée de vie de l'équipement, ainsi que sa durée de vie résiduelle (compte tenu de ladite utilisation future et dudit propre historique). Cela permet en effet :
- d'individualiser à chaque équipement de la série son programme de maintenance ;
- de réactualiser et anticiper les approvisionnements des pièces de rechange (nature des pièces et échéance de remplacement) ;
- de réactualiser et d'anticiper la programmation de la maintenance industrielle ;
- de réactualiser et d'anticiper le coût total des maintenances à venir dans la durée de vie de l'équipement.

Il est aussi utile de déterminer à tout moment :
- l'utilisation limite de l'équipement compatible avec le zéro-panne à respecter sur chacune des périodes de fonctionnement à venir dans la vie de l'équipement ;
- la durée de vie résiduelle de l'équipement (compte tenu de ladite utilisation future et dudit propre historique).

Cela permet en effet la planification réaliste de l'utilisation qui pourra être faite de l'équipement sur le reste à venir de sa durée de vie donc sur le long terme.

En outre, pouvoir ainsi réactualiser et anticiper les utilisations limites de l'équipement pour le reste à venir de sa durée de vie, ainsi que les coûts totaux des maintenances optimales à venir, permet de déterminer à tout moment la valeur résiduelle de l'équipement dans l'optique d'une éventuelle revente.

En somme, l'enjeu de pouvoir maîtriser l'impact des fabrication, maintenances et utilisations de l'équipement sur la fiabilité de l'équipement est significatif puisque a minima cette maîtrise :
- déverrouille l'accès à l'optimisation de la fabrication et des maintenances ;
- facilite l'interaction avec les acteurs de la maintenance industrielle ;
- déverrouille l'accès à la maîtrise de la fiabilité de l'équipement (en gommant l'incertitude sur la fiabilité en fonctionnement) ;
- déverrouille l'accès à la maîtrise et l'optimisation de la gestion de l'actif que représente l'équipement.

### État de la technique

WO2014197299 A2 montre un système permettant de développer un profil santé d'un actif industriel d'après les données relatives à cet actif industriel.

A ce jour, les méthodologies existantes les plus à même de traiter de la fiabilité de l'équipement sont :
- la maintenance prédictive ;
- les modèles physiques ;
- les programmes de qualification sur bancs d'essai ;
- le retour d'expérience (communément désigné « REX »).

Néanmoins, ces méthodologies n'ont pas accès à la simulation requise pour maîtriser l'impact des fabrication, maintenances et utilisation de l'équipement sur sa fiabilité. En ce sens, elles ne répondent que trop partiellement aux attentes des industriels.

Concernant la Maintenance Prédictive, cette technologie observe et analyse le fonctionnement de l'équipement, attendant de détecter une dégradation. Une fois la dégradation détectée, elle construit une première tendance de l'évolution de la dégradation pour afficher une première prédiction de l'échéance d'une panne future. Cette tendance de l'évolution et cette échéance de panne sont ensuite affinées avec les observations ultérieures, de manière itérative.

Ce faisant, la Maintenance Prédictive comporte plusieurs biais méthodologiques :
- elle s'attache à déduire le comportement futur de l'équipement à partir du comportement passé observé, s'attachant ainsi à déduire la conséquence future du vieillissement, indépendamment des causes passées et futures du vieillissement ;
- elle suppose que l'utilisation future sera identique à l'utilisation passée - ce qui est presque toujours faux ;
- elle exploite les données de fonctionnement seules, indépendamment de l'expertise fonctionnelle.

Par conséquent, la Maintenance Prédictive est :
- approximative et lente dans ses premières prédictions, nécessitant un délai d'observation, de l'ordre de quinze jours de fonctionnement à l'issue d'une maintenance ;
- lente pour afficher une prédiction juste ;
- myope : son horizon de prédiction est limité à une durée à moyen terme, au plus de l'ordre de six mois.

Autres conséquences de ses biais méthodologiques, la Maintenance Prédictive est insuffisamment proactive. En effet, elle ne fait que réagir à l'apparition d'une dégradation en fonctionnement et anticipe d'autant moins l'apparition de la dégradation. De surcroît, elle nécessite le fonctionnement de l'équipement pour élaborer ses prédictions : ce qui est un inconvénient opérationnel rédhibitoire. De façon plus générale, la Maintenance Prédictive se prive de l'accès à toute simulation, en particulier de la simulation du comportement de l'équipement selon la fabrication ou la maintenance de l'équipement et l'utilisation prévisionnelle de cet équipement.

La Maintenance Prédictive se réduit donc à fournir uniquement une prédiction d'échéance de panne qui est insuffisamment précise et proactive. Elle n'a pas la capacité à fournir de recommandation en termes de fabrication, de maintenance ou d'utilisation, pour optimiser le comportement de l'équipement, en particulier en vue de repousser toute échéance de panne ou d'allonger la durée de vie.

Les différentes solutions de Maintenance Prédictive se sont développées avec l'essor des moyens informatiques et la valorisation grandissante des données. Au demeurant, elles n'exploitent que les données de fonctionnement, sont entachées des mêmes biais méthodologiques, souffrent en conséquence des mêmes limitations et ont une différenciation faible entre elles.

Concernant les modèles physiques, la modélisation complète et individualisée d'un équipement donné par les modèles physiques n'est pas réaliste d'un point de vue aussi bien technique que notamment économique. Très coûteux, ces modèles couvrent un champ trop restreint de phénomènes physiques. En outre, ces modèles physiques sont approximatifs.

En effet, un modèle physique est à même de caractériser seulement le comportement d'une partie élémentaire d'un composant de l'équipement soumis à un phénomène physique. Cette modélisation est par ailleurs une approche de la réalité : elle comporte une part d'inexactitude. Associé à la recherche fondamentale, le développement d'un modèle physique engage par ailleurs des ressources considérables en temps et coûts. En outre, pour caractériser le vieillissement de chacune des parties élémentaires d'un équipement, avant de parvenir à la modélisation globale de l'équipement, il conviendrait également de générer une multitude de modèles physiques, de l'ordre de plusieurs centaines.

La modélisation du comportement d'un équipement type de la série par les modèles physiques appelle donc des ressources considérables en coûts et délais. En outre, cette modélisation d'ensemble à base de ces modèles physiques est difficilement individualisable au cas de chaque équipement, en particulier à son propre historique complet.

Concernant les essais sur banc, réalisés en cours de conception de l'équipement de référence d'une série donnée, notamment lors de sa qualification, ces essais permettent d'approcher théoriquement le comportement de l'équipement de référence de la série tout au long de sa durée de vie, pour une ou plusieurs contraintes simulant une utilisation et un vieillissement. Ces essais donnent des tendances et ordres de grandeur : l'indication n'est donc qu'approximative.

Décorrélés de la spécificité d'un équipement donné de la série pris dans son individualité (c'est-à-dire ne prenant pas en compte l'historique de fabrication, de maintenance et d'utilisation d'un équipement donné que ces essais ne peuvent en effet anticiper), ces essais ne peuvent caractériser réellement le comportement futur de cet équipement, en réponse à l'utilisation future qui en sera faite, encore moins déterminer les paramètres des maintenances à réaliser qui permettraient d'optimiser le comportement de cet équipement en fonctionnement.

En effet, les essais sur bancs consistent à caractériser le comportement de l'équipement de référence de la série considérée (par exemple un point de fonctionnement en régime établi ou une réponse à un transitoire), lorsque soumis à un ou plusieurs profils d'utilisation et de vieillissement donnés : les équipements échantillonnés représentatifs de la série sont alors soumis à des vieillissements accélérés, réputés représentatifs du vieillissement réel. La caractérisation du comportement reste alors approximative, car le vieillissement durant l'essai est accéléré et l'utilisation prise en compte au cours de l'essai est distincte des utilisations réelles qui seront faites de chacun des équipements de la série au cours de leur vie respective.

Le comportement de l'équipement de référence de la série et en particulier sa durée de vie ne sont ainsi qu'approchés.

Concernant le retour d'expérience, communément désigné « REX», il complète les tendances et les ordres de grandeur approchés par les essais sur banc. Le REX ne peut pas non plus prendre en compte la spécificité d'un équipement donné de la série, en particulier son historique complet, ni donc caractériser le comportement futur de l'équipement considéré en réponse à une utilisation future donnée, encore moins déterminer les paramètres de maintenance qui optimiseront le comportement en fonctionnement. Les données issues du REX sont par ailleurs insuffisantes du fait d'une exploitation non systématique et insuffisamment régulière.

En effet, le REX consiste à rapprocher un comportement moyen, comme la durée de vie, à une utilisation moyenne. Cette approche ne permet pas d'obtenir des données précises.

Par ailleurs, le REX n'est pas systématiquement exploité. Lorsque le REX est exploité, il l'est irrégulièrement et la fréquence de réactualisation du REX est trop faible, associée à une périodicité de l'ordre d'un à deux ans.

L'invention a pour but de pallier les inconvénients de l'état de la technique, en proposant un système numérique de supervision de l'exploitation et de la maintenance d'au moins un équipement industriel au sein d'une installation, à même de générer et utiliser un modèle de comportement propre à l'équipement de la série.

Ce modèle de comportement généré est pertinent :
- il corrèle les causes et les conséquences du vieillissement de l'équipement ;
- il est spécifique aux phénomènes physiques dont chaque équipement de la série est le siège ;
- il est individualisable à chaque équipement de la série ;
- il a la précision des modèles empiriques qui sont appris des données observées (modèles « data-driven »).

Le modèle de comportement généré est puissant : il permet de simuler le comportement d'un équipement de la série, pour une décision de maintenance donnée et une utilisation prévisionnelle de l'équipement donnée, qui plus est compte tenu de l'historique de fabrication, de maintenance et d'utilisation de l'équipement. Le modèle est d'autant plus puissant qu'il permet ce type de simulation sur le long terme de la durée de vie de l'équipement.

Pour un équipement donné de la série considérée, compte tenu de l'utilisation prévisionnelle souhaitée de l'équipement et de son historique de fabrication, de maintenance et d'utilisation, l'invention permet ainsi d'obtenir des propositions de valeurs globales, notamment :
- pour une étape donnée de maintenance de l'équipement, le système permet de déterminer la décision optimale de maintenance. Cette décision est celle qui permet l'optimum entre les contraintes de maintenance et le potentiel redonné à l'équipement pour un zéro-panne jusqu'à la prochaine maintenance et pour l'utilisation prévisionnelle souhaitée. Cette décision optimale est par ailleurs individualisée à l'historique de fabrication, de maintenance et d'utilisation de l'équipement;
- pour une période de fonctionnement de l'équipement au cours de sa durée de vie, le système permet de déterminer l'utilisation limite, c'est-à-dire l'utilisation maximale possible compatible avec le zéro-panne jusqu'à la prochaine maintenance ;
- le système permet, en cours de fonctionnement de l'installation, de réactualiser l'utilisation limite de l'équipement, compte tenu de l'utilisation réellement faite de l'équipement depuis sa dernière maintenance et compte tenu de l'utilisation prévisionnelle souhaitée jusqu'à la prochaine maintenance ;
- le système permet de même de déterminer à tout moment le programme des maintenances optimales à venir de l'équipement sur le reste de sa durée de vie ainsi que les utilisations limites de l'équipement à respecter pour chaque période de fonctionnement sur le reste de sa durée de vie ;
- le système détermine à tout moment l'échéance de fin de durée de vie de l'équipement ;
- enfin, le système permet de déterminer les tâches de fabrication (gestes, pièces, réglages) qui optimisent la vie de l'équipement de référence de la série, pour un scénario d'utilisation prévisionnelle donné, en particulier un scénario dépendant du segment d'utilisation croisé avec un segment géographique d'utilisation.

Pour ce faire, l'invention raisonne à l'échelle d'une série d'équipements. Pour une série donnée, l'invention détermine, dans un premier temps, une corrélation entre causes et conséquences du vieillissement des équipements de la série considérée. Cette corrélation lie l'historique de fabrication et de maintenance et l'historique d'utilisation d'un équipement donné de la série à l'état de cet équipement induit par ces historiques. La corrélation déterminée est spécifique aux phénomènes physiques dont chaque équipement de la série est le siège. Dans un deuxième temps, l'invention modélise cette corrélation, sous la forme d'un modèle virtuel appris à partir des données de fabrication, de maintenance, d'utilisation et d'état des équipements de la série considérée. Dans un troisième temps, l'invention utilise ce modèle comme simulateur individualisé à chaque équipement de la série : le modèle permet en effet de simuler l'état de l'équipement à un instant donné pour une décision de maintenance et pour l'utilisation qui suivra jusqu'à cet instant et ce, compte tenu de l'historique de fabrication et de maintenance et l'historique d'utilisation propres à l'équipement et précédant la maintenance considérée. Ce modèle permet d'accéder aux propositions de valeur de l'invention.

Par ailleurs, en modélisant ainsi le comportement de l'équipement type de la série, l'invention corrèle, à l'échelle de la série, le comportement observé des équipements à la fabrication, la maintenance et l'utilisation faites pour chacun desdits équipements : l'invention est donc une forme d'exploitation du retour d'expérience. Ce retour d'expérience tire son caractère supérieur de la pertinence, du point de vue fonctionnel, de la corrélation modélisée. L'invention permet aussi une exploitation du retour d'expérience systématisée de façon continue ou quasi continue, en relançant l'apprentissage du modèle à partir des données réactualisées de fabrication, de maintenance, d'utilisation et d'état des équipements de la série considérée, selon une périodicité déterminée comme la plus adaptée, par le concepteur, le fabricant, le maintenancier et les exploitants.

Pour ce faire, l'invention vise un système numérique de supervision de l'exploitation et de la maintenance d'au moins un équipement industriel au sein d'une installation selon la revendication 1.

### Présentation des figures

D'autres caractéristiques et avantages de l'invention ressortiront de la description détaillée qui va suivre des modes de réalisation non limitatifs de l'invention, en référence aux figures annexées, dans lesquelles :

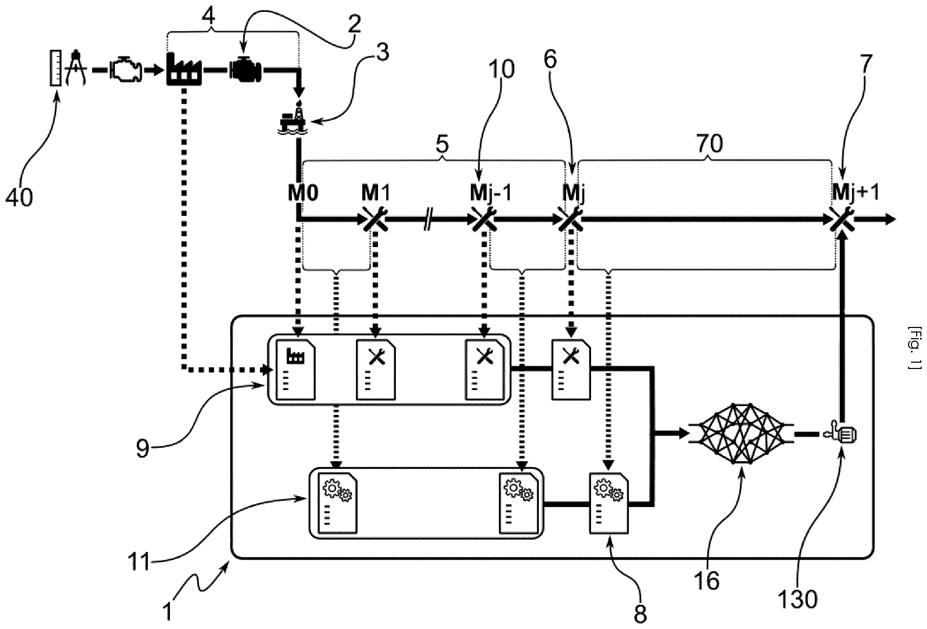

[Fig. 1] représente schématiquement une vue d'une architecture du système mis en œuvre dans la supervision d'un équipement, montrant notamment, à la veille d'une maintenance à réaliser de l'équipement, la soumission au modèle virtuel appris, d'une part de l'historique de fabrication et de maintenance et de l'historique d'utilisation dudit équipement, et d'autre part des tâches de la maintenance à réaliser et des conditions prévisionnelles d'utilisation du scénario, ledit modèle virtuel générant un état prévisionnel dudit équipement à l'échéance de la maintenance prévisionnelle suivante ;

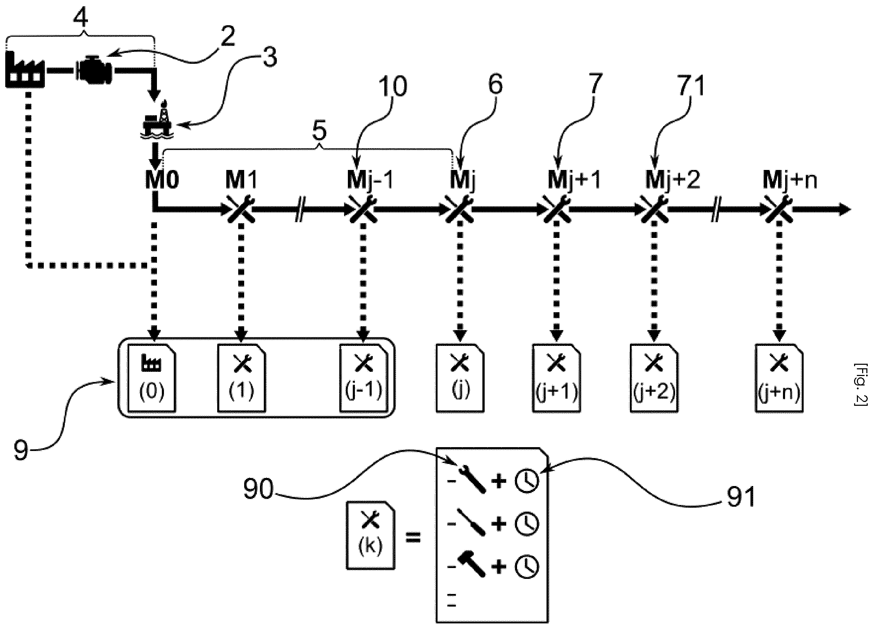

[Fig. 2] représente schématiquement une vue d'un détail de l'architecture, montrant notamment, d'une part un historique de fabrication et de maintenance comprenant la décision de fabrication de l'équipement jusqu'à son implantation, ainsi que les décisions des maintenances préalables de l'équipement, et d'autre part les décisions de la maintenance à réaliser et celles des maintenances prévisionnelles, mettant notamment en évidence les tâches de chacune desdites décisions et leur temporalité ;

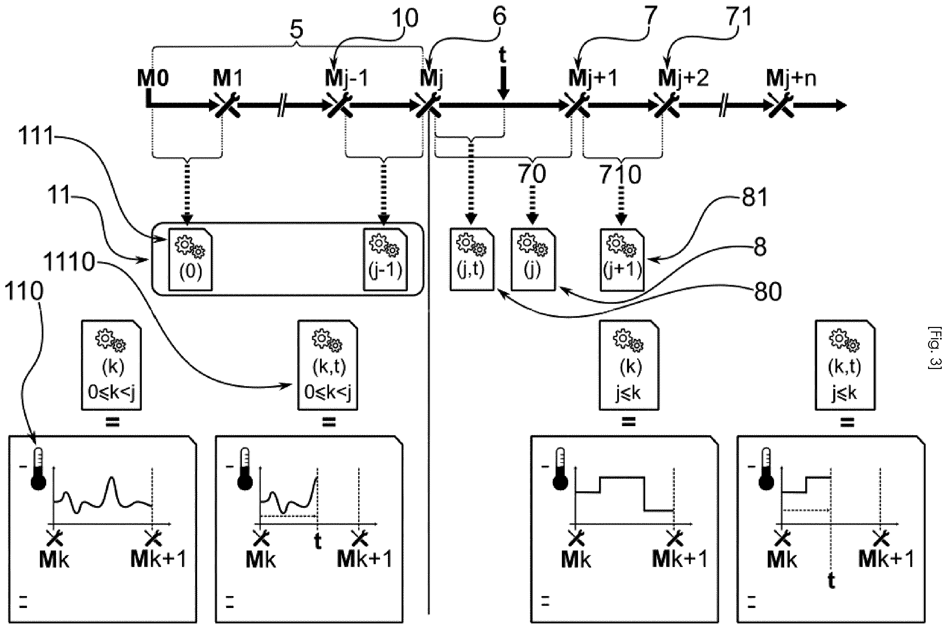

[Fig. 3] représente schématiquement une vue d'un détail de l'architecture, montrant notamment d'une part l'historique d'utilisation de l'équipement entre l'implantation et la maintenance à réaliser, et d'autre part le scénario prévisionnel d'utilisation, mettant en évidence que ledit historique d'utilisation et ledit scénario comprennent des conditions d'utilisation dudit équipement associées à leur période respective ;

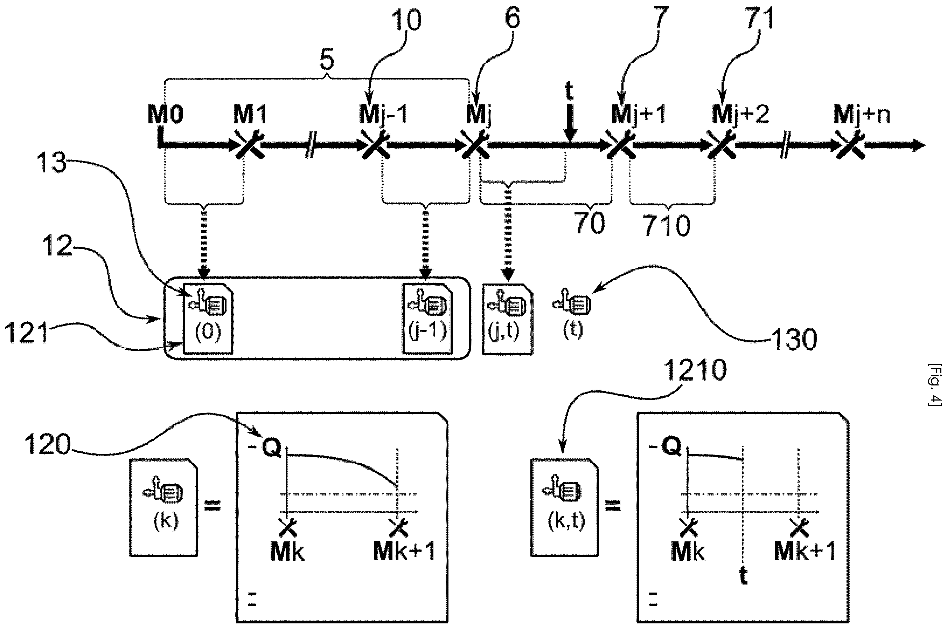

[Fig. 4] représente schématiquement une vue d'un détail de l'architecture, montrant notamment, d'une part l'historique des états successifs de l'équipement, et d'autre part les états prévisionnels successifs de l'équipement, mettant notamment en évidence les indicateurs matériels des états de l'équipement associés à leur période respective ;

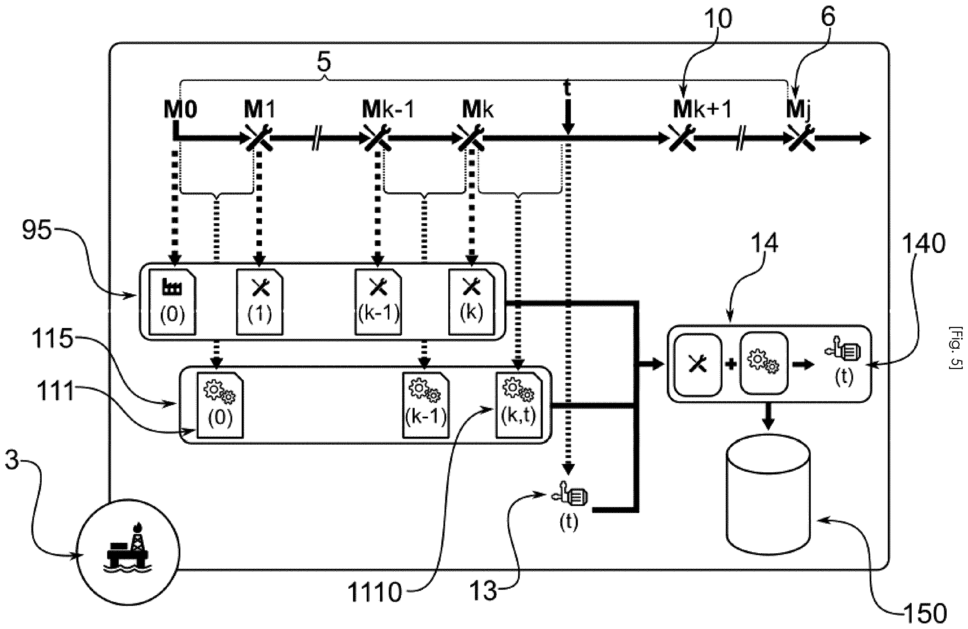

[Fig. 5] représente schématiquement une vue d'un détail de l'architecture dudit système de supervision, montrant notamment le processus de récupération et d'extraction des données d'un équipement de la série et telles qu'identifiées dans la corrélation à apprendre ;

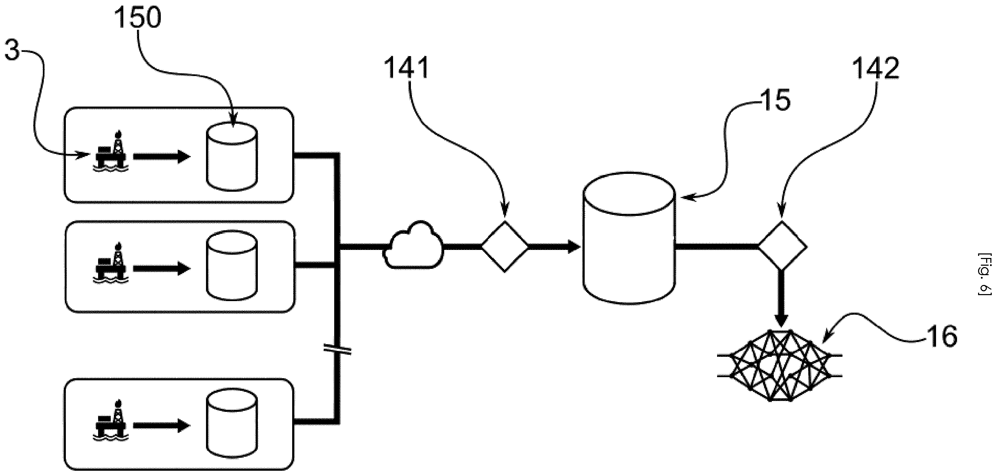

[Fig. 6] représente schématiquement une vue d'un autre détail de l'architecture, montrant notamment le processus de récupération et d'extraction des données pour plusieurs équipements de la série, de manière à obtenir un jeu de données et apprendre le modèle virtuel ;

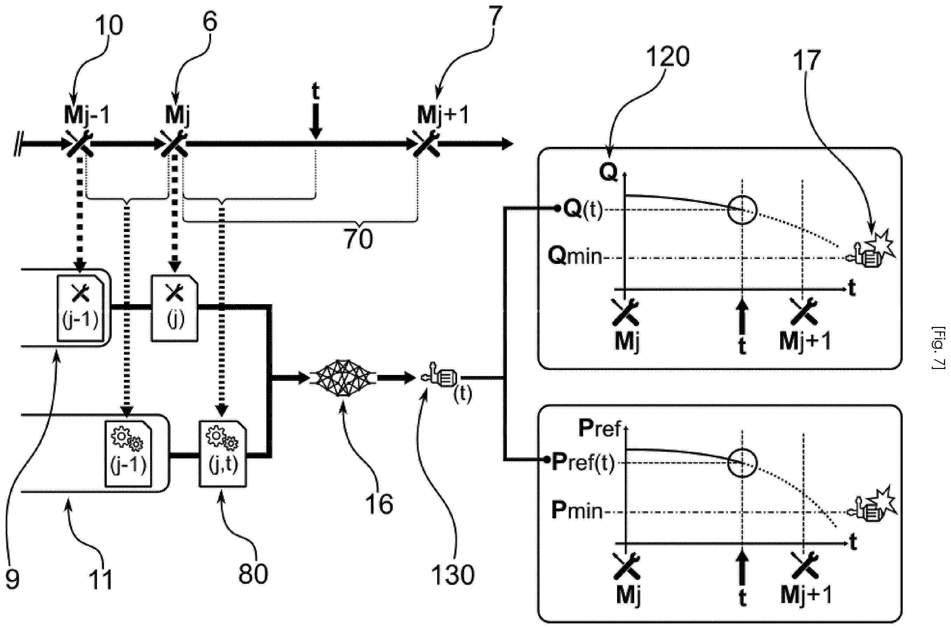

[Fig. 7] représente schématiquement une vue d'une architecture du système de supervision, montrant notamment ledit modèle virtuel générant à un instant un état prévisionnel dudit équipement, et ses deux indicateurs matériels, avec une comparaison par rapport à un état minimal identifié comme requis pour le fonctionnement dudit équipement ;

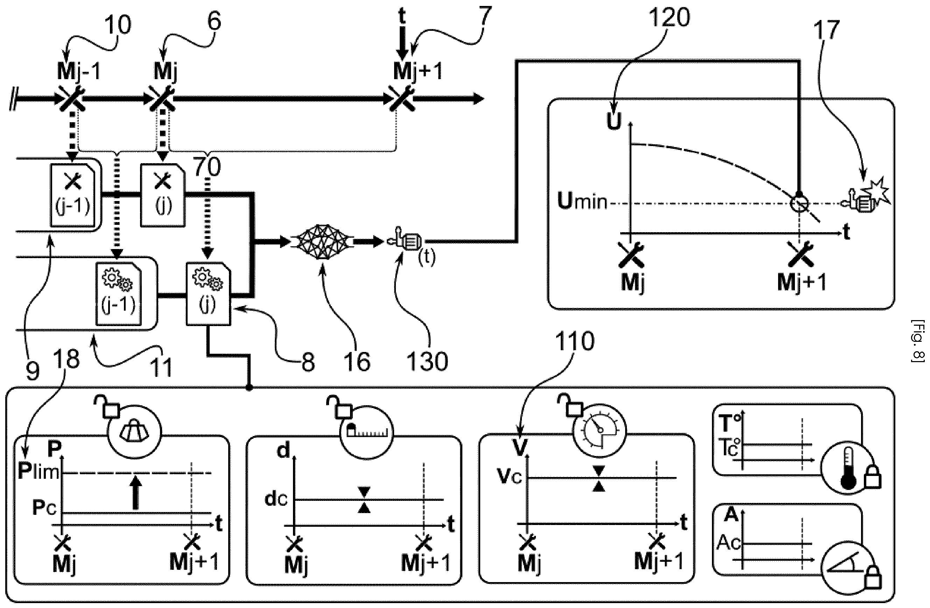

[Fig. 8] représente schématiquement une vue d'un exemple d'un calcul d'une limite pour une condition prévisionnelle d'un scénario d'utilisation depuis une maintenance à réaliser, limite pour laquelle l'état prévisionnel de l'équipement est équivalent à l'état minimal, au moment de la maintenance prévisionnelle suivante ;

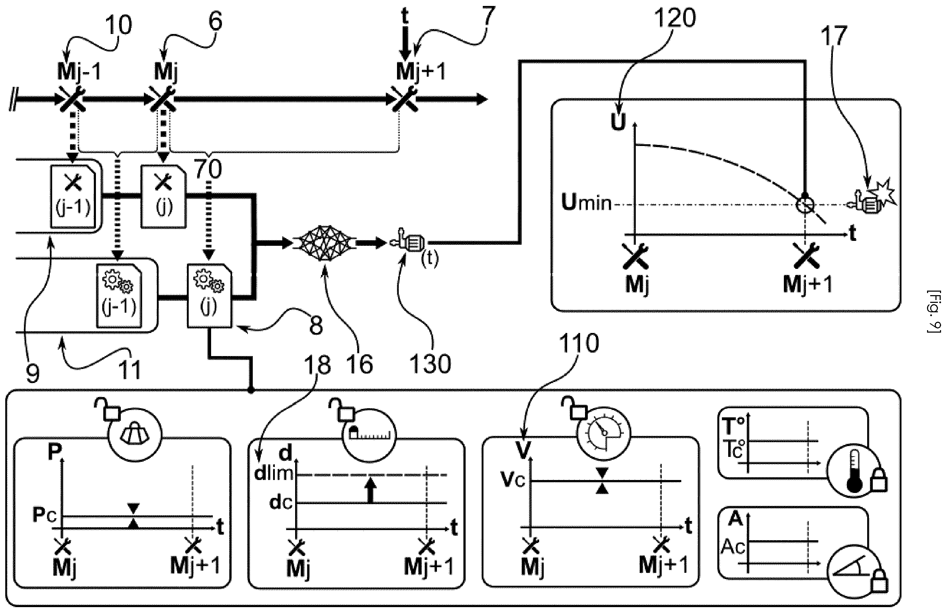

[Fig. 9] représente schématiquement une autre vue dudit exemple d'un autre calcul d'une autre limite pour une autre condition prévisionnelle d'un scénario d'utilisation depuis une maintenance à réaliser, autre limite pour laquelle l'état prévisionnel de l'équipement est équivalent à l'état minimal, au moment de la maintenance prévisionnelle suivante ;

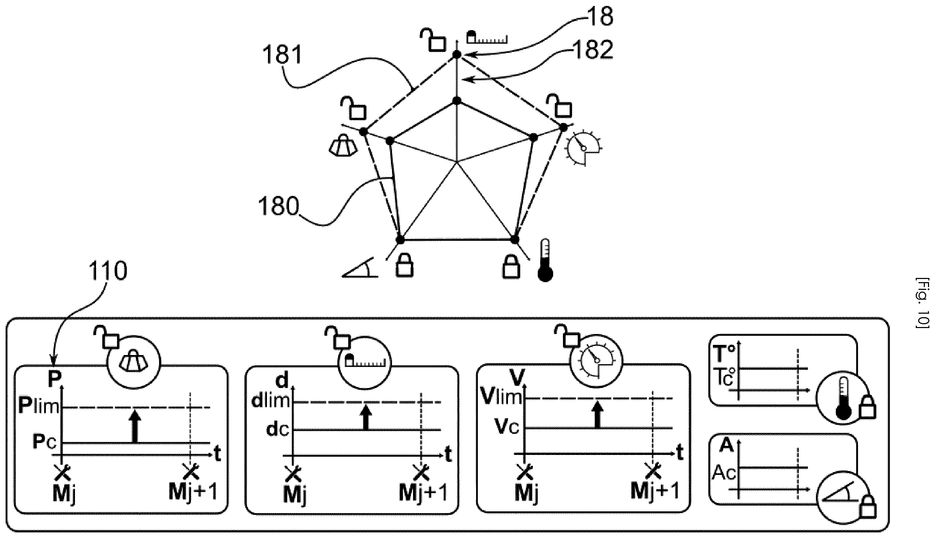

[Fig. 10] représente schématiquement une vue dudit exemple avec une échelle des valeurs de certaines conditions prévisionnelles d'utilisation, sous forme de polygones, indiquant notamment les valeurs cibles et les limites maximales pour lesdites conditions prévisionnelles associées audit scénario ;

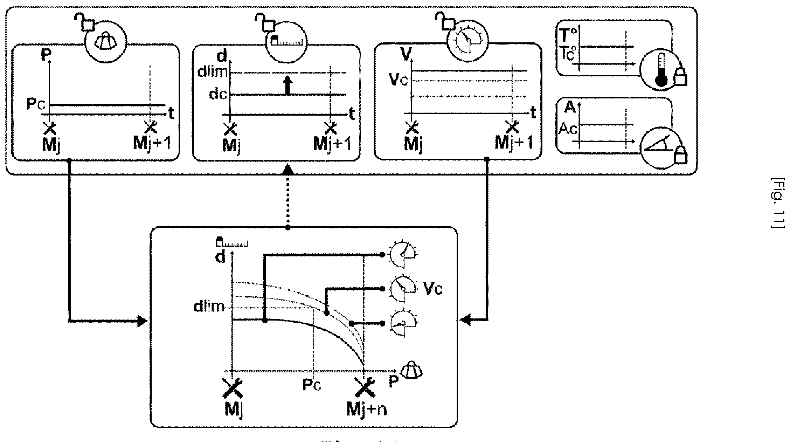

[Fig. 11] représente schématiquement une vue dudit exemple avec un réseau de courbes en abaque, mettant notamment en évidence, à partir de la variation de deux des conditions prévisionnelles, la limite maximale d'une troisième des conditions prévisionnelles ;

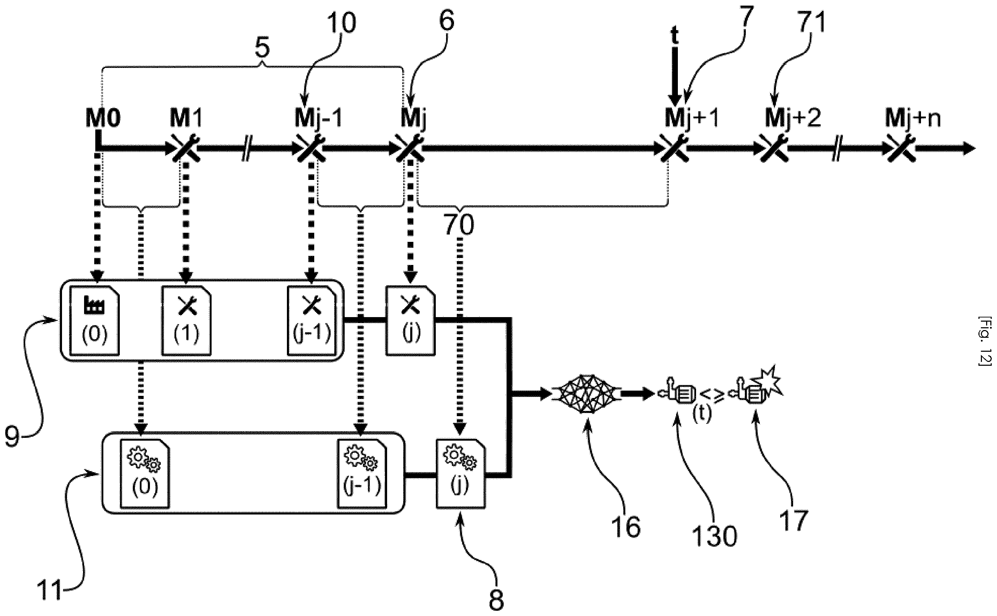

[Fig. 12] représente schématiquement une vue similaire à la figure 1 d'une architecture pour le long terme, montrant notamment une première étape de mise en œuvre de façon récurrente dudit système de supervision pour prédire des états prévisionnels, à partir d'une maintenance à réaliser jusqu'à une maintenance prévisionnelle ;

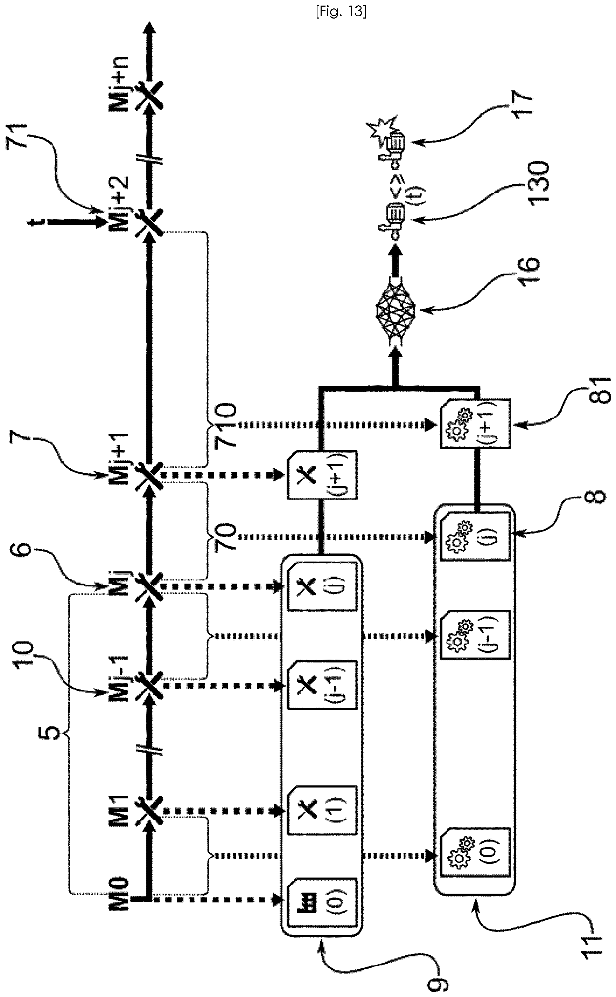

[Fig. 13] représente schématiquement une vue similaire à la figure 12 pour le long terme, montrant notamment une deuxième étape de mise en œuvre de façon récurrente dudit système de supervision pour prédire des états prévisionnels, à partir de ladite maintenance prévisionnelle jusqu'à une maintenance prévisionnelle suivante ;

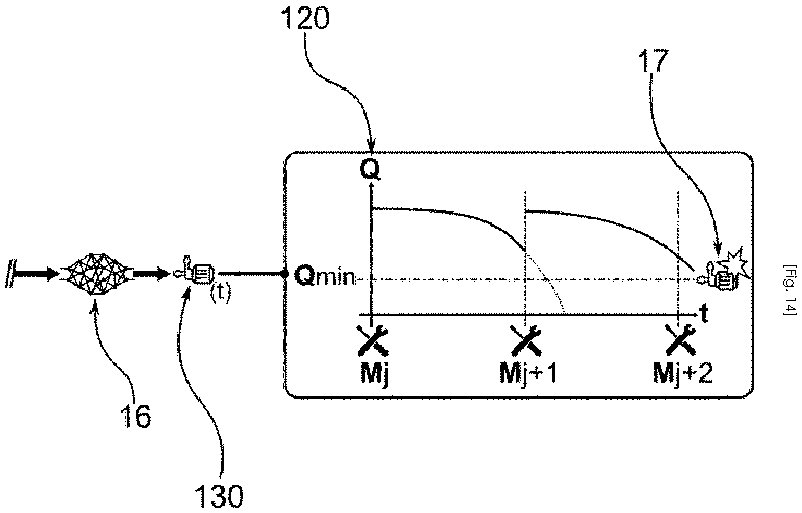

[Fig. 14] représente schématiquement une vue simplifiée d'un exemple de prédiction pour le long terme, montrant notamment des courbes représentatives de l'évolution de l'état de l'équipement en fonction du temps, au cours de deux périodes prévisionnelles consécutives ;

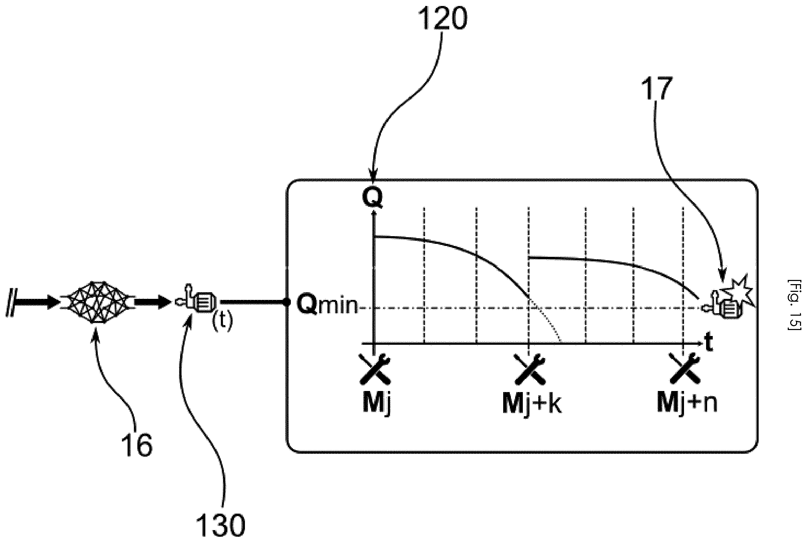

[Fig. 15] représente schématiquement une vue simplifiée d'un exemple de prédiction pour le long terme, montrant notamment des courbes représentatives de l'évolution de l'état de l'équipement en fonction du temps, au cours de plusieurs périodes prévisionnelles consécutives ;

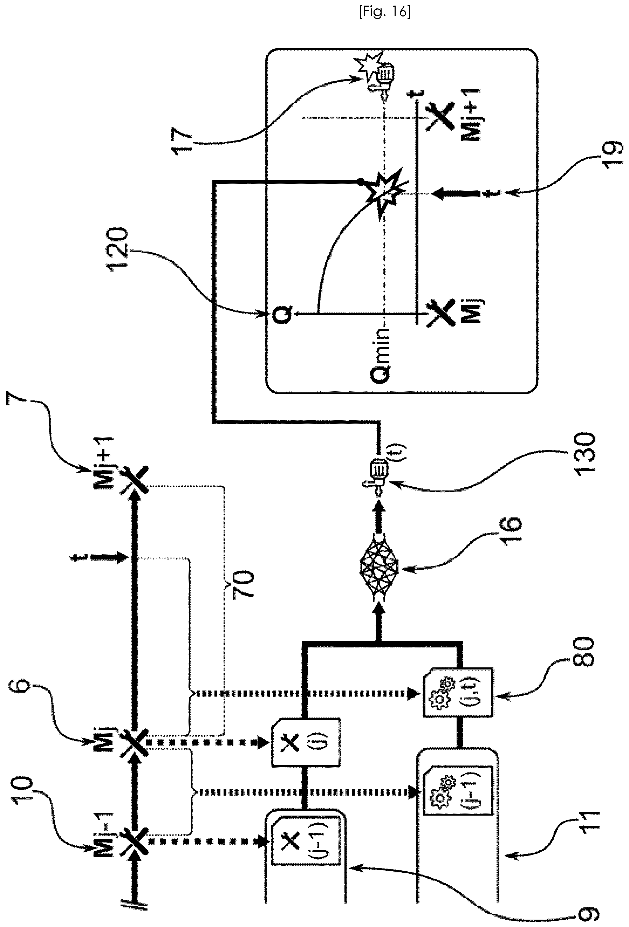

[Fig. 16] représente schématiquement une vue simplifiée d'une architecture du système de supervision, montrant notamment ledit modèle virtuel déterminant l'instant d'une échéance de panne dudit équipement, pour une décision insuffisante de maintenance.

### DESCRIPTION DETAILLEE

La présente invention concerne un système 1 de supervision de l'exploitation et de la maintenance d'au moins un équipement 2 au sein d'une installation 3 industrielle.

Un tel système 1 de supervision, ci-après « système 1 », est prévu numérique. En d'autres termes, il s'agit d'au moins un logiciel, destiné à être exécuté par au moins un terminal informatique.

De façon usuelle, un tel terminal informatique peut être de tout type, notamment un serveur informatique ou un ordinateur. En outre, ledit terminal informatique permet au travers de moyens de stockage adaptés : l'enregistrement, la lecture, la modification et la génération de données sous forme numérique. Ledit terminal informatique est aussi prévu accessible au travers d'un réseau de communication adapté, de façon locale ou distante.

En outre, un tel système 1 comprend des étapes successives, ci-après décrites de façon non exhaustive. Selon l'invention, le système 1 peut donc s'apparenter à un procédé.

Certaines étapes sont réalisées de façon réelle, notamment par une personne interagissant avec ledit terminal informatique, notamment via une interface virtuelle, ou bien spécifiquement quand un opérateur interagit avec ledit équipement 2.

D'autres étapes sont effectuées de façon virtuelle, notamment lorsque des traitements de données sont effectués par le terminal informatique. Ledit système 1 fait donc intervenir des éléments numériques, s'apparentant à des moyens techniques virtuels conformés et mis en œuvre de façon avantageuse dans le cadre de la présente invention.

Ledit système 1 assure la supervision d'un équipement 2 au sein d'une installation 3, de plusieurs équipements 2 au sein d'une même installation 3, ou encore de plusieurs équipements 2 au sein de plusieurs installations 3.

Comme évoqué précédemment, ledit équipement 2 est caractérisé comme essentiel pour l'exploitation de ladite installation 3. Dès lors, l'indisponibilité de l'équipement 2 est susceptible d'interrompre la production de l'installation 3, d'induire ou d'aggraver une situation incidentelle ou accidentelle de l'installation 3.

Ledit équipement 2 peut être de tout type, par exemple un moteur thermique, un moteur électrique, un alternateur, une pompe, une électrovanne.

Ledit équipement 2 fait donc partie intégrante de l'installation 3 et est nécessaire à son bon fonctionnement.

Une telle installation 3 peut être mobile, comme un engin ou un véhicule (par exemple un submersible, navire, aéronef ou engin spatial), ou encore fixe, comme une structure ou une infrastructure (par exemple une centrale de production d'électricité, une plate-forme pétrolière ou une raffinerie).

Dès lors, le système 1 comprend, comme condition initiale, l'implantation au sein d'une installation 3 industrielle d'au moins un équipement 2 issu d'une fabrication 4 et représentatif d'une série. En d'autres termes, l'équipement 2 a été intégré à un moment passé, au sein de l'installation 3.

En outre, la fabrication 4 de l'équipement 2 comprend l'assemblage de plusieurs composants jusqu'à obtenir l'équipement 2 achevé puis l'implantation de l'équipement 2. Cette fabrication 4 est précédée d'une conception 40 de l'équipement 2.

On notera que l'équipement 2 est représentatif d'une série, laquelle comprend l'ensemble des équipements 2 fabriqués à l'identique à partir d'un même plan de conception. Une fraction des équipements 2 de la série peut ne plus être exploitée, une autre fraction est en cours d'exploitation, une autre fraction déjà fabriquée peut rester à implanter et exploiter.

A l'issue de son implantation dans l'installation 3, ledit équipement 2 est au moins exploité dans le cadre d'une période 5 jusqu'à une étape de maintenance 6 à réaliser. Dès lors, ladite période 5 correspond à une période de fonctionnement de l'équipement entre l'implantation jusqu'à la maintenance 6 à réaliser, ou bien à une alternance de périodes de fonctionnement et d'étapes de maintenance depuis l'implantation.

On notera que l'étape de maintenance 6 à réaliser est une opération concrète, nécessitant l'intervention d'au moins un opérateur sur le site géographique de l'installation 3 et réalisée directement sur ledit équipement 2.

Dans ce cadre et comme évoqué précédemment, le système 1 de supervision envisage de gérer le cycle de vie à venir dudit équipement 2 à savoir :
- définir la nature des tâches des maintenances à venir de l'équipement 2 pour les optimiser et les adapter au profil d'utilisation souhaité dudit équipement 2 et ce, sur le long terme et pour la durée de vie de l'équipement 2 ;
- identifier les utilisations limites compatibles avec le zéro-panne en fonctionnement jusqu'au prochain entretien pour chaque période 70 prévisionnelle de fonctionnement de l'équipement 2 et ce, sur le long terme et pour la durée de vie de l'équipement 2 ;
- réactualiser en temps réel, en fonctionnement, l'utilisation limite de l'équipement 2, compatible avec le zéro-panne ;
- instruire la prolongation de la durée de vie de l'équipement 2, en définissant la nature des tâches de la dernière maintenance de l'équipement 2 optimisées et adaptées au profil d'utilisation souhaité de l'équipement 2.

A l'échelle des équipements de la série, le système 1 de supervision envisage également d'optimiser la fabrication de l'équipement type représentatif de la série pour l'adapter à un profil d'utilisation donné, à savoir de déterminer les paramètres de fabrication 4 qui optimisent le cycle de vie de l'équipement 2.

Dès lors, on définit au moins une maintenance 7 prévisionnelle postérieure à ladite maintenance 6 à réaliser.

La période à venir qui s'étend entre ladite maintenance 6 à réaliser et ladite maintenance 7 prévisionnelle correspond à au moins une période 70 prévisionnelle de fonctionnement où l'équipement 2 est exploité dans au moins un scénario 8 caractérisé par des conditions 110 prévisionnelles d'utilisation, dites « conditions 110 prévisionnelles ». La période à venir peut aussi correspondre à une alternance de périodes prévisionnelles de fonctionnement et d'étapes de maintenances.

La période à venir peut s'étendre jusqu'à l'échéance de fin de durée de vie de l'équipement.

La figure 1 montre notamment la conception 40 et la fabrication 4 de l'équipement 2, la période 5 (entre l'implantation dudit équipement 2 dans l'installation 3 jusqu'à la maintenance 6 à réaliser et comprenant les éventuelles maintenances 10 préalables), la période 70 prévisionnelle jusqu'à une maintenance 7 prévisionnelle.

Ceci étant, les étapes de la fabrication 4 et de l'implantation dudit équipement 2, puis les étapes de l'exploitation et de la maintenance dudit équipement 2 au cours de la période 5 génèrent plusieurs types de données que le système 1 de supervision prend en considération.

La fabrication, l'implantation, l'exploitation et la maintenance dudit équipement 2 induisent au moins un historique 9 de fabrication et de maintenance (ou « historique 9 ») comprenant :
- des tâches 90 de fabrication dudit équipement 2 jusqu'à ladite implantation ;
- éventuellement des tâches 90 d'au moins une maintenance 10 préalable dudit équipement 2.

En d'autres termes, les étapes de fabrication et d'implantation comprennent au moins des tâches 90 de fabrication et d'implantation. Par ailleurs, la période 5 comprend éventuellement au moins une maintenance 10 préalable dudit équipement 2 laquelle comprend des tâches 90 de maintenance. L'ensemble des tâches 90 de fabrication dudit au moins un équipement 2 jusqu'à ladite implantation ainsi que les éventuelles tâches 90 d'au moins une maintenance 10 préalable dudit équipement 2 génèrent un historique 9 de fabrication et de maintenance.

On notera que les tâches 90 de fabrication ainsi que les tâches 90 de chacune des maintenances 10, sont définies de façon non limitative par des gestes réalisés par un opérateur, par des pièces montées à la fabrication ou démontées à une étape de maintenance pour être remplacées, ainsi que par des réglages dudit équipement 2.

Comme visible sur la figure 2, le système 1 comprend notamment :
- l'historique 9 de fabrication et de maintenance, c'est-à-dire l'historique des décisions de fabrication et de maintenance exécutées au titre de la fabrication 4 et de l'implantation (de rang 0) et au titre des maintenances 10 préalables (du rang 1 au rang j-1) ;
- une décision de maintenance au titre de la maintenance 6 à réaliser (de rang j) ;
- une décision de maintenance au titre de la maintenance 7 prévisionnelle (de rang j+1).

Chaque décision de fabrication ou de maintenance de rang k est caractérisée par son rapport aux différentes tâches 90 possibles (réalisation ou non de ladite tâche 90, caractérisation de ladite tâche 90 lorsque réalisée compteur temps 91 caractérisant la durée depuis laquelle ladite tâche 90 a été réalisée sur l'équipement 2).

Plus avant, lesdites étapes induisent également un historique 11 d'utilisation (ou « historique 11 ») de l'équipement 2 sur la période 5 entre ladite implantation et ladite maintenance 6 à réaliser. Ledit historique 11 d'utilisation comprend des conditions 110 d'utilisation dudit équipement 2 durant ladite période 5, (dites aussi « conditions 110 »).

En effet, la période 5 comprise entre l'implantation de l'équipement 2 et la maintenance 6 à réaliser comprend au moins une période de fonctionnement de l'équipement 2 dans le cadre d'une utilisation.

Cette utilisation est associée à la façon dont l'équipement a été utilisé, à savoir à l'ensemble des conditions 110 d'utilisation dudit équipement 2 durant ladite période.

Par exemple, dans le cas d'un équipement 2 correspondant au moteur d'une installation 3 de type camion, ces conditions 110 d'utilisation peuvent être la charge transportée, le kilométrage parcouru, la vitesse, la température d'air ambiant, la pente moyenne des routes utilisées.

Cette utilisation génère ainsi l'historique 11 d'utilisation dudit équipement sur la période 5 entre l'implantation et ladite maintenance 6 à réaliser. Comme visible sur la figure 3 illustrant le cas d'un équipement 2 de type pompe (pour laquelle une des conditions 110 est la température), le système 1 comprend notamment :
- l'historique 11 d'utilisation de l'équipement 2 au cours de la période 5 (de l'implantation de rang 0 à la maintenance 6 à réaliser de rang j) ;
- le scénario 8 d'utilisation de l'équipement 2 tel que prévu sur la période 70 prévisionnelle.

L'historique 11 d'utilisation peut se décomposer comme l'ensemble des sous-historiques 111 d'utilisation de l'équipement 2. Le sous-historique 111 d'utilisation de rang k représente la fraction de l'historique 11 d'utilisation de l'équipement 2 au cours de la période de fonctionnement comprise entre les deux maintenances 10 préalables successives de rang k et rang k+1. En particulier, la figure 3 met en évidence :
- le sous-historique 111 d'utilisation de rang 0 (entre l'implantation de rang 0 et la maintenance 10 préalable de rang 1) ;
- le sous-historique 111 d'utilisation de rang j-1 (entre la dernière maintenance 10 préalable de rang j-1 et la maintenance 6 à réaliser de rang j).

L'historique 11 comprend l'ensemble des sous-historiques 111 d'utilisation du rang 0 au rang j-1.

Le sous-historique 111 d'utilisation de rang k représente l'évolution de chacune des conditions 110 d'utilisation entre deux maintenances 10 préalables de rang k et rang k+1, comme par exemple l'évolution de la température dans le temps (comme visible sur la figure 3).

Dans le sous-historique 111 d'utilisation de rang k de l'équipement 2, on peut distinguer le sous-historique 1110 partiel d'utilisation de l'équipement 2 de rang (k,t), c'est-à-dire l'évolution de chacune des conditions 110 d'utilisation entre la maintenance 10 préalable de rang k et l'instant (t), pour un instant (t) compris entre la maintenance de rang k et la maintenance de rang k+l.Le scénario 8 représente l'évolution prévisionnelle de chacune des conditions 110 prévisionnelles d'utilisation, dans le cadre de l'utilisation prévisionnelle de l'équipement 2 entre la maintenance 6 à réaliser (rang j) et la maintenance 7 prévisionnelle (rang j+1), comme visible sur la figure 3.Dans le scénario 8, on peut distinguer un scénario 80 partiel. Le scénario 80 partiel de rang (j,t) représente l'évolution prévisionnelle de chacune des conditions 110 d'utilisation prévisionnelle de l'équipement 2 entre la maintenance 6 à réaliser de rang j et l'instant (t), pour un instant (t) compris entre la maintenance 6 à réaliser de rang j et la maintenance 7 prévisionnelle de rang j+1.

De surcroît, lesdites étapes induisent aussi un historique 12 d'état dudit équipement 2 (ou « historique 12 ») lequel comprend des indicateurs 120 matériels dudit équipement 2 (ou « indicateurs 120 »).

En effet, l'utilisation de l'équipement 2 induit un vieillissement qui impacte l'état 13 de l'équipement 2. L'état 13 de l'équipement 2 à un instant donné, caractérisé par les indicateurs 120 matériels, traduit l'intégrité physique de l'équipement 2 dont dépend son aptitude à bien fonctionner. L'ensemble des états 13 de l'équipement 2 (soit l'ensemble des indicateurs 120 matériels) qui ont été successivement effectifs au cours de la période 5 constitue l'historique 12 d'état de l'équipement 2.

Comme visible sur la figure 4 illustrant le cas d'un équipement 2 de type pompe (pour laquelle un des indicateurs 120 matériels est le débit (Q)), le système 1 comprend notamment l'historique 12 d'état de l'équipement 2 au cours de la période 5.L'historique 12 d'état peut se décomposer comme l'ensemble des sous-historiques 121 d'état. Le sous-historique 121 d'état de rang k de l'équipement 2 représente la fraction de l'historique 12 d'état au cours de la période de fonctionnement comprise entre les deux maintenances 10 préalables successives de rang k et de rang k+1. En particulier, la figure 4 met en évidence :
- le sous-historique 121 d'état de rang0 (entre l'implantation au rang0 et la maintenance 10 préalable de rang 1) ;
- le sous-historique 121 d'état de rang j-1 (entre la dernière maintenance 10 préalable au rang j-1 et la maintenance 6 à réaliser au rang j).

L'historique 12 comprend l'ensemble des sous-historiques 121 d'état du rang 0 au rang j-1.Comme visible dans la figure 4, le sous-historique 121 d'état de rang k de l'équipement 2 représente l'évolution des états 13 successifs de l'équipement 2, entre les deux maintenances 10 préalables de rang k et de rang k+1.Le sous-historique 121 d'état de rang k de l'équipement 2 représente l'évolution de chacun des indicateurs 120 matériels (par exemple, l'évolution du débit dans le temps) entre les deux maintenances 10 préalables de rang k et de rang k+1.Comme visible dans la figure 4, on peut distinguer, dans le sous-historique 121 d'état de rang k de l'équipement 2, le sous-historique 1210 partiel d'état. Le sous-historique 1210 partiel d'état de rang (k,t) représente l'évolution de chacun des indicateurs 120 matériels entre la maintenance 10 préalable de rang k et l'instant (t) (pour un instant (t) compris entre la maintenance de rang k et la maintenance de rang k+1).

Ainsi, les historiques 9,11,12 s'étendent dans le temps au cours de la période 5. Ils comprennent respectivement les tâches 90 de fabrication et de maintenance, des conditions 110 d'utilisation et des indicateurs 120 matériels.

Les éléments susmentionnés des historiques 9,11,12 représentent des dénominations de champs informatiques, au sein desquels des valeurs mesurées auprès dudit équipement 2 ont été enregistrées successivement dans le temps.

Avantageusement, dans un premier temps, on détermine au moins une corrélation 14 entre, d'une part, au moins une desdites tâches 90 de fabrication et de maintenance, et/ou au moins une desdites conditions 110 d'utilisation et, d'autre part, au moins un des indicateurs 120 matériels dudit état 13. Ladite corrélation 14 établit au moins un lien entre des causes de vieillissement et des conséquences de vieillissement de l'équipement 2.

En d'autres termes, l'invention choisit d'approcher le comportement d'un équipement 2 sous l'angle des causes et conséquences du vieillissement.

Pour cela, l'invention choisit d'une part de caractériser les causes du vieillissement de l'équipement 2 par l'historique 9 de fabrication et de maintenance de l'équipement 2, ainsi que par l'historique 11 d'utilisation de l'équipement 2. L'invention choisit d'autre part de caractériser les conséquences du vieillissement de l'équipement 2 par l'état 13 de l'équipement 2 induit par lesdits historiques 9 et 11.

L'invention pose donc le parti-pris de corréler l'état 13 de l'équipement 2 avec l'historique 9 de fabrication et de maintenance et l'historique 11 d'utilisation de l'équipement 2.

Ainsi, l'invention prévoit de corréler entre eux l'historique 9 de fabrication et de maintenance (ci-après désigné « premier terme » de ladite corrélation 14) et l'historique 11 d'utilisation (ci-après désigné « deuxième terme » de ladite corrélation 14) d'un équipement 2 donné de la série à l'état 13 de cet équipement 2 (ci-après désigné « troisième terme » de ladite corrélation 14) induit par ces historiques 9,11 - lesdits trois termes de ladite corrélation 14 constituant un triplet 140.

Par exemple, on considère le cas d'un équipement 2 de type pompe sensible à la température du fluide véhiculé. L'invention corrèle d'une part l'historique d'utilisation de la pompe (caractérisé par l'historique de température du fluide et/ou de pression d'aspiration et/ou de vitesse de la pompe) ainsi que les options principales de fabrication de la pompe (comme le type d'impulseur monté) et l'historique de maintenance de la pompe (comme l'historique des remplacements d'impulseur aux différentes maintenances 10 préalables) à d'autre part l'état de la pompe (caractérisé par son débit et/ou la pression de refoulement).

Plus avant, dans la corrélation 14, on s'applique à ne considérer que les paramètres pertinents et susceptibles d'influer sur le vieillissement et le fonctionnement de l'équipement 2, les autres paramètres n'étant pas opportuns à sélectionner.

Pour cela, on effectue une analyse technique de l'équipement 2 pour identifier les tâches 90 critiques de fabrication et de maintenance ainsi que les conditions 110 d'utilisation qui impactent l'état 13 de l'équipement 2.

Pour ce faire, au moyen de l'analyse technique de l'équipement 2, on caractérise les tâches 90 de fabrication et de maintenance par celles identifiées comme critiques, comme défini ci-après.

Plus exactement, l'invention choisit de caractériser les tâches 90 de l'historique 9 de fabrication et de maintenance de l'équipement 2 d'au moins l'une des façons suivantes :
- pour la fabrication 4 de l'équipement 2, l'invention caractérise les gestes posés, les pièces montées ou encore les réglages adoptés à la fabrication. On caractérise les gestes de la fabrication par l'option de protocole pour chaque geste de fabrication, s'il existe plusieurs options possibles de protocole pour ledit geste pour la fabrication 4 des équipements 2 de la série. On caractérise les pièces montées à la fabrication par l'option de pièce montée, s'il existe plusieurs options possibles pour ladite pièce pour la fabrication 4 des équipements 2 de la série (par exemple : si la fabrication de la série de pompes prévoit deux types possibles de palier de pompe).On caractérise les réglages adoptés à la fabrication par la valeur de chaque réglage, s'il existe plusieurs valeurs possibles dudit réglage pour la fabrication 4 des équipements 2 de la série (par exemple : le couple de serrage du presse-étoupe de pompe) ;
- pour une étape de maintenance de l'équipement 2, l'invention caractérise les gestes posés, les pièces montées ou encore les réglages adoptés à chaque étape de maintenance. On distingue parmi les gestes de maintenance, le remplacement de pièce des autres tâches 90 de maintenance (par exemple : le resserrage de connexions d'un bornier électrique). On caractérise le remplacement de pièce lors de la maintenance considérée par l'option de pièce, s'il existe plusieurs options possibles pour ladite pièce pour la maintenance des équipements 2 de la série (par exemple : si la série de pompes prévoit deux types possibles de palier de pompe). On caractérise les réglages adoptés lors de la maintenance considérée par la valeur de chaque réglage, s'il existe plusieurs valeurs possibles dudit réglage pour la maintenance des équipements 2 de la série (par exemple le couple de serrage du presse-étoupe de pompe).

En outre et selon un mode de réalisation, dans la corrélation 14, on réduit l'historique 9 de fabrication et de maintenance à un historique des tâches 90 critiques sous forme d'au moins une liste de valeurs successives.

En d'autres termes, et au moyen de l'analyse technique de l'équipement 2, l'invention choisit de caractériser l'historique 9 de fabrication et de maintenance de l'équipement 2 en ne considérant que les tâches 90 critiques, à savoir les gestes, pièces et réglages identifiés comme déterminant le comportement de l'équipement 2 en fonctionnement (i.e. comme ayant un impact sur le vieillissement et ainsi sur l'état 13 de l'équipement 2).

En outre, on caractérise l'historique 9 de fabrication et de maintenance de l'équipement 2 (jusqu'à la dernière maintenance 10 préalable incluse), en recensant pour chaque tâche 90 critique, les valeurs qui ont été successivement adoptées lors de la fabrication 4 et lors des différentes maintenances 10 préalables successives dans la vie de l'équipement 2 et jusqu'à la dernière maintenance 10 préalable (celle précédant la maintenance 6 à réaliser). L'historique 9 de fabrication et de maintenance est ainsi caractérisé par une liste de valeurs. Par exemple, on considère le cas d'un équipement 2 de type pompe comportant un palier et pour laquelle la mise en place ou le remplacement ainsi que la nature du palier de pompe correspondent à une tâche 90 critique de fabrication et de maintenance de la pompe. On considère dans l'exemple que la dernière maintenance 10 préalable (celle précédant la maintenance 6 à réaliser) est la septième (de rang k=7). L'invention caractérise l'historique de cette tâche 90 critique de fabrication et de maintenance par la liste [A,0,0,B,0,0,B,0], pour traduire la mise en place du palier du type A à la fabrication 4, le remplacement du palier par un palier neuf du type B à la troisième maintenance, le remplacement du palier par un palier neuf du type B à la sixième maintenance, ainsi que le fait qu'aucune action de maintenance n'a été réalisée sur le palier aux autres maintenances 10 préalables. L'invention choisit donc de caractériser l'historique 9 de fabrication et de maintenance de l'équipement 2, par une matrice constituée de listes, chaque liste étant associée à une tâche 90 critique et recensant les valeurs successives caractérisant cette tâche 90 critique au gré de la fabrication 4 puis des différentes maintenances de l'équipement 2 jusqu'à la dernière maintenance 10 préalable incluse. Par exemple, on considère le cas susmentionné d'un équipement 2 de type pompe où l'historique 9 de fabrication et de maintenance peut être réduit à l'historique des deux tâches 90 critiques « mise en place ou remplacement du palier de pompe » et « mise en place ou remplacement de l'impulseur de pompe », et avec comme listes d'historique respectives à l'issue de la septième maintenance les listes [C,0,A,0,0,B,0,C] et [A,0,0,B,0,0,B,0]. L'historique 9 de fabrication et de maintenance de la pompe considérée jusqu'à la septième maintenance incluse, correspond alors à la matrice [ [C,0,A,0,0,B,0,C] ; [A,0,0,B,0,0,B,0] ].

De plus, on caractérise les conditions 110 d'utilisation par celles auxquelles l'équipement 2 est sensible et exposé en fonctionnement ou à l'arrêt.

En effet, au moyen de l'analyse technique de l'équipement 2, l'invention réduit les conditions 110 aux conditions d'ambiance et/ou aux conditions de fonctionnement (CA/CF) auxquelles l'équipement 2 est sensible et exposé en fonctionnement ou à l'arrêt.

Les conditions d'ambiance (CA) s'entendent au sens de conditions de l'environnement extérieur de l'équipement 2 et auxquelles l'équipement 2 est sensible et exposé en fonctionnement ou à l'arrêt (comme la température de l'air ambiant, l'hygrométrie, le débit d'irradiation).

Les conditions de fonctionnement (CF) s' entendent au sens de :
- les conditions internes à l'équipement 2 et auxquelles l'équipement 2 est sensible et exposé en fonctionnement ou à l'arrêt (comme la température du fluide véhiculé, le niveau de vibration dans le cas d'une pompe) ;
   et/ou
- les paramètres représentatifs de la puissance déployée par l'équipement 2 en fonctionnement et qui impactent son point de fonctionnement (comme la charge transportée, la vitesse dans le cas d'un moteur de camion) ;
   et/ou
- les autres paramètres nécessaires pour caractériser la somme de travail dont l'équipement 2 a été l'objet dans les conditions d'ambiance et de fonctionnement (CA/CF) susmentionnées (comme le kilométrage total parcouru dans le cas d'un camion, ou bien comme généralement le temps d'utilisation de l'équipement 2).

Par exemple, on considère le cas d'un équipement 2 de type pompe dont l'impulseur est en matière thermoplastique et en cela sensible et exposée à la température du fluide véhiculé. La température du fluide véhiculé est alors d'autant plus à prendre en compte comme condition de fonctionnement, que dans le cas d'une pompe dont l'impulseur est de nature métallique.

Au sens de l'invention, on caractérise le scénario 8 et les conditions 110 prévisionnelles d'utilisation par les mêmes conditions d'ambiance et de fonctionnement (CA/CF) auxquelles l'équipement 2 est sensible et exposé en fonctionnement ou à l'arrêt.

De plus, on caractérise l'état 13 matériel de l'équipement 2 par les indicateurs 120 matériels identifiés comme étant représentatifs de cet état 13 dudit équipement 2.

Pour ce faire et au moyen de l'analyse technique de l'équipement 2, l'invention choisit de caractériser l'état de l'équipement 2 à l'instant par l'ensemble nécessaire et suffisant des performances, comportement vibratoire et autres indicateurs 120 matériels (par exemple, et de façon non limitative, les indicateurs matériels usuellement mesurés par les techniques de contrôles non destructifs), jugé(s) représentatif(s) de l'état 13 de l'équipement 2.

Pour caractériser la corrélation 14 et en particulier l'historique des conditions 110, de façon la plus spécifique possible à l'équipement 2 considéré, on détermine les grandeurs physiques mesurées ou les fonctions des grandeurs physiques mesurées caractérisant les conditions 110 auxquelles ledit équipement 2 est sensible et exposé en fonctionnement ou à l'arrêt ou caractérisant au mieux l'historique de ces conditions 110 d'utilisation (i.e. l'historique 11 d'utilisation).

Ces fonctions de grandeurs physiques comprennent plusieurs fonctions mathématiques ou algorithmiques. En d'autres termes, à chaque condition 110 est associée une grandeur physique mesurée qui caractérise cette condition. Ainsi, lorsque pertinent, l'invention caractérise l'historique de la condition par l'historique de cette grandeur physique.

Par exemple, si l'équipement 2 est sensible et exposé à la température de l'air ambiant ou encore à la température du fluide véhiculé dans le cas d'une pompe, on considère donc l'historique de la température correspondante. Plus avant, l'invention choisit également de caractériser l'historique d'une condition 110 par l'historique d'une fonction de la grandeur physique représentative de la condition 110, lorsque cette caractérisation est plus pertinente que l'historique de cette grandeur physique.

Par exemple, si l'équipement 2 est sensible et exposé à la température de l'air ambiant ou encore à la température du fluide véhiculé (comme dans le cas d'une pompe), on peut alors assimiler l'historique de la température à l'intégrale dans le temps de la température sur la durée comprise entre l'implantation de l'équipement 2 dans l'installation 3 jusqu'à l'instant.

Plus avant, lorsque l'invention choisit de caractériser l'historique d'une condition 110 par l'historique d'une fonction de la grandeur physique représentative de ladite condition, ces fonctions peuvent comprendre, de façon non limitative, un calcul du temps de présence de la grandeur physique mesurée dans au moins une plage de valeurs.

En effet, l'invention prend le parti pris de considérer que le cumul des transitoires anormaux impacte le vieillissement et donc le comportement de l'équipement 2. Ainsi, lorsque pertinent, l'invention caractérise-t-elle l'historique d'une condition 110 en comptabilisant les temps de présence de cette condition respectivement dans le domaine de fonctionnement normal, dans le domaine proche de la destruction, voire dans le domaine intermédiaire aux deux précédents.

Par exemple, on considère le cas d'un équipement 2 de type pompe sensible et exposée à la température du fluide véhiculé. On peut alors caractériser l'historique de la température par l'intégrale dans le temps de la température sur la durée comprise entre l'implantation de l'équipement 2 dans l'installation 3 et jusqu'à l'instant, en distinguant la composante de ladite intégrale au sein du domaine de fonctionnement normal, de la composante au sein du domaine proche de la destruction, de la composante au sein du domaine intermédiaire aux deux précédents domaines. Lorsque l'invention choisit de caractériser l'historique d'une condition 110 par l'historique d'une fonction de la grandeur physique représentative de ladite condition, ces fonctions peuvent aussi comprendre, et de façon non limitative, un calcul représentatif d'au moins une fluctuation des grandeurs physiques mesurées et/ou un comptage de ladite au moins une fluctuation.

C'est en particulier le cas, lorsque l'équipement 2 est sensible et exposé aux variations d'une condition 110. De façon non limitative, de telles fonctions peuvent alors correspondre à la fonction gradient ou au comptage des cyclages de la condition considérée.

En premier exemple, on considère le cas d'un équipement 2 de type pompe sensible et exposée à la température du fluide véhiculé et en particulier aux variations brusques de ladite température. Pour caractériser l'historique de la condition 110 jusqu'à un instant donné, on peut calculer le gradient moyen de cette température (exemple : une variation moyenne de 20°C/min « degrés Celsius par minute ») lors des transitoires en température (i.e. lors des transitoires induisant des variations brusques de la température). Puis on peut associer ce gradient moyen à un comptage de pareils transitoires (par exemple : 2000 transitoires brusques en température associés à un gradient moyen de 20°C/min depuis l'implantation jusqu'audit instant).

En lieu et place de la moyenne de l'historique des valeurs du gradient de cette température, on peut aussi recourir à toute autre fonction statistique comme médiane et écart type.

En autre exemple, on considère le cas d'un équipement 2 de type cuve métallique de chaudière, sensible et exposée à la température du fluide contenu et en particulier objet de cyclages en température (i.e. objet de variations de forte amplitude en température au cours de réchauffage ou refroidissement, par exemple entre 200°C et 80°C) et sensible à ces cyclages. On peut alors comptabiliser lesdits cyclages (par exemple : 20 cyclages en température depuis l'implantation jusqu'à un instant) et associer ce comptage de pareils cyclages à la moyenne des amplitudes des cyclages dans l'historique de ladite cuve (exemple : l'amplitude moyenne de cyclage de 150°C sur les 20 cyclages).

En lieu et place de la moyenne de l'historique des amplitudes, on peut aussi recourir à toute autre fonction statistique, comme une médiane et un écart type. Lorsque l'invention choisit de caractériser l'historique d'une condition 110 par l'historique d'une fonction de la grandeur physique représentative de ladite condition 10, ces fonctions peuvent aussi comprendre, et de façon non limitative, un comptage de ladite au moins une fluctuation.

C'est le cas en particulier lorsque l'équipement est sensible aux transitoires d'arrêt ou de mise en marche. La comptabilisation de tels transitoires sert alors à caractériser l'historique 11 d'utilisation. De même, lorsque le vieillissement de l'équipement 2 se poursuit lors de l'arrêt dudit équipement, le comptage de la durée de l'arrêt sert aussi à caractériser l'historique d'utilisation. De même, pour caractériser la corrélation 14 et en particulier l'état 13 de l'équipement 2 à un instant, de façon la plus spécifique possible à l'équipement 2 considéré, on détermine également les grandeurs physiques mesurées ou des fonctions de ces grandeurs physiques mesurées caractérisant l'état 13 matériel de l'équipement 2 audit instant.

Par exemple, on considère le cas d'un équipement 2 de type pompe centrifuge. L'état de la pompe peut être alors caractérisé à l'instant au moyen du débit à l'instant ainsi que de la pression de refoulement à l'instant. A cette étape et au moyen d'une analyse technique de l'équipement 2, l'invention a ainsi déterminé les tâches 90 critiques de fabrication et de maintenance spécifiques à l'équipement 2 pour caractériser au mieux l'historique 9 de fabrication et de maintenance de l'équipement 2. On a de même déterminé les conditions 110 d'utilisation spécifiques à l'équipement 2, ainsi que les grandeurs physiques ou fonctions de grandeur physique caractérisant au mieux lesdites conditions 110 ainsi que l'historique 11 d'utilisation de l'équipement 2.

On a de même déterminé les indicateurs 120 matériels caractérisant au mieux l'état 13 de l'équipement 2 à tout instant, ainsi que les grandeurs physiques ou fonctions de grandeur physique caractérisant au mieux lesdits indicateurs 120 matériels audit instant.

Cette analyse technique de l'équipement 2 permet ainsi de déterminer la corrélation 14 sous une forme spécifique à l'équipement 2. Il en résulte que la corrélation 14 déterminée est bien spécifique aux phénomènes physiques dont chaque équipement 2 de la série est le siège. Ainsi, selon un mode de réalisation, dans la corrélation 14, les fonctions des grandeurs physiques mesurées des conditions 110 d'utilisation comprennent un calcul du temps de présence des grandeurs physiques mesurées dans au moins une plage de valeurs ; et/ou un calcul représentatif d'au moins une fluctuation des grandeurs physiques mesurées : et/ou un comptage de ladite au moins une fluctuation.

Précédemment, dans la corrélation 14, l'invention choisit de caractériser l'historique 9 de fabrication et de maintenance de l'équipement 2 (jusqu'à la dernière maintenance 10 préalable incluse), en recensant, pour au moins une (de préférence chaque) tâche 90 critique de fabrication et de maintenance, les valeurs qui ont été successivement adoptées lors de la fabrication et des différentes maintenances 10 préalables successives dans la vie de l'équipement 2, jusqu'à la dernière maintenance 10 préalable incluse. L'historique de chaque tâche 90 critique est ainsi caractérisé par une liste de valeurs. Par exemple, on considère le cas susmentionné d'un équipement 2 de type pompe comportant un palier et pour laquelle la mise en place ou le remplacement ainsi que la nature du palier de pompe correspondent à une tâche 90 critique de fabrication et de maintenance de la pompe. On considère dans l'exemple que la dernière maintenance 10 préalable (celle précédant la maintenance 6 à réaliser) est la septième (de rang k=7). L'invention caractérise l'historique de cette tâche 90 critique de fabrication et de maintenance par la liste [A,0,0,B,0,0,B,0], pour traduire la mise en place du palier du type A à la fabrication 4, le remplacement du palier par un palier neuf du type B à la troisième maintenance, le remplacement du palier par un palier neuf du type B à la sixième maintenance, ainsi que le fait qu'aucune action de maintenance n'a été réalisée sur le palier aux autres maintenances.

L'historique 9 de fabrication et de maintenance de l'équipement 2 est ainsi une matrice regroupant pour chaque tâche 90 critique ladite liste correspondante de valeurs. Plus avant, dans le but de réduire la matrice caractérisant l'historique 9 de fabrication et de maintenance (jusqu'à la dernière maintenance 10 préalable) aux informations nécessaires et suffisantes et avec un volume d'informations indépendant du rang de la dernière maintenance 10 préalable, l'invention adopte le principe suivant ici appelé « principe des paramètres rémanents ».Selon un mode de réalisation, dans la corrélation 14, ayant réduit l'historique 9 de fabrication et de maintenance à un historique des tâches 90 critiques sous forme d'au moins une liste de valeurs successives, dans chaque liste, on choisit uniquement la valeur rémanente comme étant la valeur adoptée à la dernière maintenance à laquelle la tâche 90 considérée a été réalisée et on ne conserve que les valeurs rémanentes dans l'historique des tâches 90 critiques. En d'autres termes, dans l'historique 9 de fabrication et de maintenance et pour chaque tâche 90 critique de fabrication et de maintenance :
- on considère la valeur rémanente de ladite tâche 90, comme étant la valeur adoptée pour ladite tâche 90, à la dernière étape de fabrication ou de maintenance à laquelle ladite tâche 90 a été réalisée (à l'étape de fabrication ou à l'étape de maintenance 10 préalable) ;
- on ne conserve que la valeur rémanente de ladite tâche, dans l'historique 9 de fabrication et maintenance.

Dans sa forme finale, l'historique 9 de fabrication et de maintenance est ainsi réduit à une liste de valeurs, c'est-à-dire constituée des valeurs rémanentes des tâches 90 critiques (soit encore une valeur rémanente par tâche 90 critique).Ce faisant, l'invention réduit l'historique 9 de fabrication et de maintenance de l'équipement 2, en caractérisant ledit historique 9 de fabrication et de maintenance seulement par les valeurs des tâches 90 critiques qui déterminent le comportement de l'équipement 2 en fonctionnement à l'issue de la dernière maintenance 10 préalable considérée. En pratique, dans l'historique 9 de fabrication et de maintenance :
- la valeur caractérisant chaque tâche 90 de fabrication et de maintenance réalisée au cours de la dernière maintenance 10 préalable écrase la suite des valeurs caractérisant l'historique de ladite tâche 90 (de la fabrication 4 jusqu'à la maintenance précédant la dernière maintenance 10 préalable) ;
- de la fabrication 4 et des maintenances 10 préalables précédant la dernière maintenance 10 préalable, on garde, pour chaque tâche 90 qui n'a pas été réalisée à ladite dernière maintenance 10 préalable, seule la valeur caractérisant la dernière réalisation de ladite tâche 90.

Par exemple, on considère le cas d'un équipement 2 de type pompe pour laquelle la tâche « mise en place ou remplacement du palier de pompe » ainsi que la tâche « mise en place ou remplacement de l'impulseur de pompe » sont les deux seules tâches 90 critiques de fabrication et de maintenance.

Si l'historique de la tâche « mise en place ou remplacement du palier de pompe » à l'issue de la septième maintenance 10 préalable est caractérisé par la liste [A,0,0,B,0,0,B,0], la valeur rémanente pour ladite tâche 90 est alors « B », à savoir la valeur de la tâche 90 adoptée à la dernière maintenance où la tâche 90 considérée a été réalisée (dans cet exemple, à la sixième maintenance).

Si l'historique de la tâche « mise en place ou remplacement de l'impulseur de pompe » à l'issue de la septième maintenance 10 préalable est caractérisé par la liste [C,0,A,0,0,B,0,C], la valeur rémanente pour ladite tâche 90 est alors « C », à savoir la valeur de la tâche 90 adoptée à la dernière maintenance où la tâche 90 considérée a été réalisée (dans cet exemple, à la septième maintenance).

L'historique 9 de fabrication et de maintenance de la pompe à l'issue de la septième maintenance s'écrit alors [B;C], où le premier terme désigne la valeur rémanente de la tâche « mise en place ou remplacement du palier de pompe » et le second terme, la valeur rémanente de la tâche « mise en place ou remplacement de l'impulseur de pompe ».

En d'autres termes, l'invention réduit ainsi l'historique 9 de fabrication et de maintenance de l'équipement 2 (jusqu'à la dernière maintenance 10 préalable incluse), à la configuration dans laquelle l'équipement 2 se trouve à l'issue de la dernière maintenance 10 préalable. Ce faisant, l'invention caractérise l'historique 9 de fabrication et de maintenance (jusqu'à la dernière maintenance 10 préalable) au moyen d'un vecteur dont la taille est indépendante du rang de ladite dernière maintenance 10 préalable. On notera que l'invention peut prendre en compte la temporalité des valeurs enregistrées, par exemple sous la forme d'un horodatage des données.

Dans la caractérisation de l'historique 9 de fabrication et de maintenance, cette temporalité peut se traduire par un compteur temps 91 adjoint à chaque valeur rémanente de tâche 90 critique, ledit compteur temps 91 caractérisant la durée depuis laquelle ladite tâche 90 a été réalisée sur l'équipement 2.A cette étape, la corrélation 14 précédemment déterminée sous une forme spécifique à l'équipement 2 (donc spécifique à tout équipement type de la série), grâce à l'analyse technique de l'équipement 2, est alors déterminée sous un format qui se prête à un traitement informatique, en particulier à l'apprentissage par des algorithmes de Machine Learning.

Une fois l'analyse technique de l'équipement 2 effectuée, la corrélation 14 spécifique à la série est identifiée. Sont alors déterminées :
- dans le premier terme de la corrélation 14 : les tâches 90 critiques de fabrication et de maintenance caractérisant au mieux l'historique 9 de fabrication et de maintenance de l'équipement 2 ;
- dans le deuxième terme de la corrélation 14 : les grandeurs physiques ou fonctions de grandeur physique caractérisant au mieux les conditions 110 et l'historique 11 d'utilisation de l'équipement 2 ;
- dans le troisième terme de la corrélation 14 : les grandeurs physiques ou fonctions de grandeur physique caractérisant au mieux les indicateurs 120 matériels et l'historique 12 de l'état 13 de l'équipement 2.

Lesdites tâches 90 critiques, grandeurs physiques ou fonctions de grandeurs physiques identifiées dans la corrélation 14, désignent les données brutes (mesurées et historisées pour chaque équipement 2 de la série) à extraire dans un premier temps des historiques 9,11,12 de l'équipement 2.L'invention prévoit donc de compulser ces informations accessibles provenant de l'ensemble des équipements 2 de la série considérée. Pour l'ensemble des équipements 2 de ladite série, on récupère et on extrait les données associées à ces tâches 90, ainsi que les données associées aux grandeurs physiques ou fonctions de grandeurs physiques relatives aux conditions 110 d'utilisation et aux indicateurs 120 matériels, telles qu'identifiées dans ladite corrélation 14, de manière à constituer des triplets 140 de données et obtenir un ensemble 150 de données brutes. Pour chaque équipement 2 de la série et pour chaque instant de leur historique 11 respectif, les trois termes du triplet 140 associé à l'instant sont :
- l'ensemble 95 de fabrication et de maintenance dudit équipement 2, c'est-à-dire la fraction de l'historique 9 de fabrication et de maintenance jusqu'à la dernière maintenance 10 préalable précédant ledit instant ;
- l'ensemble 115 d'utilisation dudit équipement 2, c'est-à-dire la fraction de l'historique 11 d'utilisation jusqu'audit instant ;
- l'état 13 dudit équipement 2 audit instant. Quant aux fonctions de grandeurs physiques identifiées dans la corrélation 14, elles indiquent les conversions 141 à opérer dans un deuxième temps sur chacun des triplets 140 de l'ensemble 150 de données brutes, pour constituer un jeu 15 de données final à considérer pour modéliser la corrélation 14 via un modèle 16 virtuel. Par exemple, on considère le cas d'un équipement 2 de type pompe pour laquelle les termes de la corrélation 14 spécifique à la série de ladite pompe sont ainsi caractérisés :
   - l'historique 9 de fabrication et de maintenance est caractérisé par les tâches 90 critiques relatives au palier et à l'impulseur de la pompe ;
   - l'historique 11 d'utilisation jusqu'à l'instant, est caractérisé par une première intégrale (INT1(t)) dans le temps de la température sur la durée comprise entre l'implantation et l'instant et par une deuxième intégrale (INT2(t)) dans le temps de la pression d'aspiration sur la durée comprise entre l'implantation et l'instant, ainsi que la valeur moyenne des gradients (VMG(t)) de température sur la durée entre l'implantation et l'instant, associée au nombre de transitoires brutaux de température (NTB(t)) sur la même durée ;
   - l'état 13 à l'instant caractérisé par les valeurs à l'instant de débit et de pression de refoulement.

Les données à extraire des historiques 9,11,12 de chaque pompe de la série considérée et pour chaque instant de leur historique 11 d'utilisation respectif sont alors :
- au titre du premier terme de la corrélation 14 : le type de palier et le type d'impulseur en place à l'instant, à extraire de l'historique 9 de fabrication et de maintenance ;
- au titre du deuxième terme de la corrélation 14 : les valeurs à l'instant considéré des grandeurs physiques : température, pression d'aspiration, à extraire de l'historique 11 d'utilisation ;
- au titre du troisième terme de la corrélation 14 : les valeurs à l'instant considéré des grandeurs physiques : débit et pression de refoulement, à extraire de l'historique 12 d'état. Une fois extraites, ces données permettent de construire, pour chaque pompe et pour chaque instant (t) de leur historique 11 d'utilisation respectif, les trois termes du triplet 140 associé à l'instant, à savoir :
   - l'ensemble 95 de fabrication et de maintenance de la pompe, c'est-à-dire la fraction de l'historique 9 de fabrication et de maintenance, sur la durée comprise entre la fabrication 4 et la dernière maintenance 10 préalable précédant ledit instant (t). L'ensemble 95 de fabrication et de maintenance est dans l'exemple, l'historique des tâches 90 (relatives au palier et à l'impulseur de la pompe) successivement réalisées au cours de ladite durée, soit encore la matrice de deux listes, l'une associée au palier et l'autre à l'impulseur de la pompe, chaque liste recensant les valeurs successives (type de palier en place ; type d'impulseur en place) caractérisant les tâches 90 critiques réalisées sur ladite période ;
   - l'ensemble 115 d'utilisation de la pompe, c'est-à-dire, dans l'exemple, les valeurs de température et de pression d'aspiration historisées depuis l'implantation jusqu'audit instant (t) ;
   - l'état 13 de la pompe audit instant (t), c'est-à-dire, dans l'exemple, le débit et la pression de refoulement audit instant (t).

On obtient ainsi autant de triplets 140 que d'instants considérés et que de pompes de la série : tous ces triplets 140 forment l'ensemble 150 de données brutes. Dans un deuxième temps, pour chaque pompe de la série et chaque triplet 140 associé à un instant, on convertit l'ensemble 95 de fabrication et de maintenance de la pompe jusqu'à l'instant, sous la forme d'un vecteur, associé à l'instant et indiquant la valeur rémanente de chaque tâche 90 critique. Le vecteur correspondant est alors, pour chaque instant considéré, [type de palier en place à l'instant ; type d'impulseur en place à l'instant] chaque terme du vecteur étant associé à son compteur temps 91 propre. De même, pour chaque pompe de la série et chaque triplet 140 associé à un instant, on convertit l'ensemble 115 d'utilisation de la pompe jusqu'à l'instant. Les fonctions de grandeur physique identifiées dans la corrélation 14 étant, dans l'exemple, les intégrales (INT1(t),INT2(t)) dans le temps de température et de pression d'aspiration, la valeur moyenne des gradients (VMG(t)) de température associée au nombre de transitoires brutaux (NTB(t)) de température, les conversions 141 à opérer sur les données brutes, température et pression d'aspiration, extraites de l'historique 11 d'utilisation, sont :
- le calcul des intégrales dans le temps de température et de pression d'aspiration sur la durée comprise entre l'implantation et l'instant ;
- le calcul de la valeur moyenne des gradients de température sur la même durée et du nombre de transitoires brutaux de température sur la même durée.

Pour chaque pompe de la série et chaque instant, l'ensemble 115 d'utilisation de la pompe entre l'implantation et l'instant est ainsi converti sous la forme d'un vecteur numérique [INT1(t),INT2(t),VMG(t),NTB(t)] associé à l'instant(t).Enfin, pour chaque pompe de la série et chaque instant, l'état 13 de la pompe à l'instant est traduit sous la forme d'un vecteur numérique associé à l'instant [débit ; pression de refoulement].Finalement, chacun des triplets 140 (associés aux différentes pompes (k) appartenant à la série et aux différents instants (t) de leur historique 11 d'utilisation respectif) est donc converti sous la forme d'un vecteur [Mj(t) (k) ; Vu(t) (k) ; Etat(t) (k)], avec :
- Mj(t)(k), vecteur représentant l'ensemble 95 de fabrication et de maintenance de la pompe (k) jusqu'à l'instant, sous la forme [type de palier ; type de roue] chaque terme du vecteur étant associé à son compteur temps 91 ;
- Vu(t)(k), vecteur représentant l'ensemble 115 d'utilisation de la pompe (k) entre l'implantation et l'instant, sous la forme [INT1(t),INT2(t),VMG(t),NTB(t)] ;
- Etat(t)(k), vecteur représentant l'état 13 de la pompe (k) à l'instant, sous la forme [débit ; pression de refoulement].

L'ensemble 150 de données brutes est ainsi converti sous la forme du jeu 15 de données final, à savoir : l'ensemble des vecteurs [Mj(t)(k) ; Vu(t)(k) ; Etat(t)(k)] pour toute pompe (k) appartenant à la série et pour tout instant (t) de leur historique 11 d'utilisation respectif. En somme, le système 1 prévoit de ne récupérer et traiter que les données considérées comme pertinentes, identifiées dans la corrélation 14. Éventuellement, le système 1 peut récupérer toutes les données relatives aux historiques 9,11,12 des équipements 2, pour n'extraire puis traiter que celles pertinentes, comme susmentionné. Le système 1 a ainsi converti l'ensemble 150 de données brutes en un jeu 15 de données, associé à la corrélation 14 spécifique à la série considérée. Le système 1 présente ce jeu 15 de données en entrée d'un projet 142 de machine learning : on effectue alors l'apprentissage d'au moins un modèle 16 virtuel, sur la base du jeu 15 de données. De même que la corrélation 14, le modèle 16 virtuel obtenu est alors spécifique à la série d'équipements 2 considérée. Il a en outre la précision des modèles empiriques (modèles « data-driven »).

Les figures 5 et 6 illustrent le processus de collecte des données et d'apprentissage du modèle 16.Dans la figure 5, on considère l'équipement 2 en attente de sa maintenance 6 à réaliser, associé à ses historiques 9,11,12, ainsi qu'un instant (t) donné au cours de la période 5.

La figure 5 représente les trois termes du triplet 140, liés par la corrélation 14, à savoir l'ensemble 95 de fabrication et de maintenance, l'ensemble 115 d'utilisation dudit équipement ainsi que l'état 13 dudit équipement audit instant (t), avec :
- l'ensemble 95 de fabrication et de maintenance comprenant les décisions de fabrication et de maintenance du rang 0 au rang k de la dernière maintenance précédant ledit instant (t) ;
- l'ensemble 115 d'utilisation comprenant les sous-historiques 111 d'utilisation au cours de la période 5 jusqu'audit instant (t) ;
- l'état 13 audit instant (t) de l'équipement 2.La figure 15 représente également l'extraction et le traitement des données associées audit équipement 2, montrant notamment :
   - l'extraction des données associées à l'ensemble 95 de fabrication et de maintenance, à l'ensemble 115 d'utilisation et à l'état 13 audit instant (t) ;
   - la constitution du triplet 140 (ensemble 95 ; ensemble 115 d'utilisation ; état 13 audit instant (t)) comme visible sur la figure 5 ;
   - la constitution d'autant de triplets similaires qu'il y a d'instants (t) historisés au cours de la période 5 ;
   - l'injection desdits triplets dans un ensemble 150 de données brutes, comme visible sur la figure 5 ;
   - la constitution dudit ensemble 150 de données brutes pour chacun des équipements du même type que ledit équipement 2, au sein de l'installation 3.

La figure 6 représente schématiquement :
- la récupération avec la transmission, en vue de leur fusion, des ensembles 150 de données brutes extraites de plusieurs installations 3 exploitant les équipements de la même série que l'équipement 2, suivies des conversions 141 opérées sur ces données, pour constituer un jeu 15 de données ;
- la présentation dudit jeu 15 de données en entrée d'un projet 142 de machine learning et l'apprentissage, sur la base dudit jeu 15 de données, d'un modèle 16 virtuel modélisant la corrélation 14.En modélisant ainsi le comportement de l'équipement 2 (soit le comportement des équipements de la série), l'invention corrèle, à l'échelle de la série, le comportement observé (à savoir l'état 13) de chaque équipement 2 à l'historique 9 de fabrication et de maintenance et à l'historique 11 d'utilisation dudit équipement 2. L"invention est ainsi une forme d'exploitation du retour d'expérience, qui tire son caractère supérieur de la pertinence du point de vue fonctionnel de la corrélation 14 modélisée, notamment en ce qu'elle est spécifique aux phénomènes physiques dont chaque équipement 2 de la série est le siège.

Selon un mode de réalisation, l'apprentissage du modèle 16 rentre dans le domaine de l'intelligence artificielle et peut être un apprentissage machine. En d'autres termes, l'invention prévoit l'utilisation d'une technologie informatique relevant de l'intelligence artificielle, notamment du domaine de l'apprentissage machine (« machine learning »), lequel se fonde sur des approches mathématiques et statistiques pour donner aux ordinateurs la capacité d'apprendre à partir de données, c'est-à-dire d'améliorer leurs performances à résoudre des tâches sans être explicitement programmés pour chacune.

En particulier, le système 1 de supervision comprend un modèle 16 prévu virtuel, résultant d'un tel apprentissage. Plus avant, l'apprentissage du modèle 16 peut relever d'un apprentissage machine learning de tout type, c'est-à-dire, de façon non limitative, supervisé, semi-supervisé, non supervisé, par renforcement, ou bien encore par transfert. Plus avant, l'apprentissage machine peut mettre en ceuvre des méthodes d'apprentissage de toute catégorie, lesdites méthodes pouvant être combinées, c'est-à-dire, de façon non limitative : réseaux de neurones (dont les méthodes d'apprentissage profond « *deep* learning »), méthode des k plus proches voisins (« KNN »), algorithmes génétiques, programmation génétique, ou autres méthodes comme notamment réseaux bayésiens, machines à vecteur de support (SVM), Q-learning, arbres de décision, méthodes statistiques, régression logistique, analyse discriminante linéaire.

Préférentiellement, l'apprentissage du modèle 16 relève d'un problème de machine learning supervisé, à régression et déterministe (le modèle 16 déterminant préférentiellement un vecteur de données quantitatives et continues, à partir d'un jeu 15 de données étiquetées, vecteur de données que l'invention a choisi d'assimiler à l'état 130 prévisionnel de l'équipement 2).

Selon d'autres modes de réalisation, le modèle 16 peut être de tout type.

L'invention envisage de prendre en compte les nouvelles données de fabrication, de maintenance, d'utilisation et d'état générées depuis le premier apprentissage du modèle 16, dans le cadre du projet 142 de machine learning, et mettre à jour ledit modèle 16 virtuel. Pour ce faire, selon un mode de réalisation, on réitère à périodicité les opérations précédentes :
- on réitère la récupération de nouvelles données auprès au moins d'un fabricant, d'un maintenancier et/ou d'un exploitant. De préférence, on récupère les nouvelles données relatives à l'ensemble des équipements 2 de la série, auprès de l'ensemble des exploitants mettant en œuvre les équipements de la série ;
- on effectue alors l'extraction et la conversion 141 desdites nouvelles données pour obtenir un jeu 15 de données complété, suivies de la mise à jour de l'apprentissage dudit modèle 16 sur la base dudit jeu 15 de données complété.

On notera que cette mise à jour est effectuée de façon périodique, la périodicité étant déterminée par les concepteur, fabricant, maintenancier et exploitants, en fonction de critères jugés les plus pertinents par ces derniers ou du point de vue « data science ».

Par exemple, un critère de périodicité peut correspondre à un ratio de 10% de la durée sur laquelle l'ensemble 150 de données brut a été compilé dans le cadre du premier apprentissage. Si les données ont été compilées sur dix ans, alors la périodicité de mise à jour du modèle 16 virtuel peut correspondre à douze mois.

L'invention permet ainsi une exploitation du retour d'expérience systématisée de façon continue ou quasi continue.

Selon l'invention, une fois la corrélation 14 déterminée et l'apprentissage du modèle 16 effectué, l'invention applique ledit modèle 16 pour l'équipement 2.

Pour ce faire, avantageusement, lors de la maintenance 6 à réaliser dudit équipement 2, on soumet audit modèle 16 des valeurs. Ces valeurs correspondent, d'une part, à au moins une des tâches 90 de l'historique 9 de fabrication et de maintenance et à au moins une des conditions 110 d'utilisation de l'historique 11 d'utilisation. D'autre part, les valeurs correspondent à au moins une des tâches 90 de la maintenance 6 à réaliser et auxdites conditions 110 prévisionnelles d'utilisation du scénario 8.

En effet, le modèle 16 a appris à corréler l'état 13 de l'équipement 2 à un instant d'une part l'ensemble 95 de fabrication et de maintenance (i.e. jusqu'à la dernière maintenance 10 préalable précédant ledit instant) et d'autre part à l'ensemble 115 d'utilisation jusqu'audit instant.

Le modèle 16 est ainsi à même de corréler l'état 130 prévisionnel de l'équipement 2 à un instant, d'une part à l'historique 9 de fabrication et de maintenance modifié des tâches 90 de la maintenance 6 à réaliser et d'autre part à l'historique 11 d'utilisation jusqu'audit instant suivi du scénario 80 partiel.

Dans l'application faite dudit modèle 16, on soumet donc audit modèle 16 les données d'entrée suivantes :
- un historique global de fabrication et de maintenance composé de l'historique 9 de fabrication et de maintenance de l'équipement 2 (jusqu'à la dernière maintenance 10 préalable précédant la maintenance 6 à réaliser), modifié des tâches 90 relatives à la décision de maintenance considérée pour la maintenance 6 à réaliser ;
- un historique global d'utilisation composé de l'historique 11 d'utilisation de l'équipement 2 (jusqu'à la veille de la maintenance 6 à réaliser), suivi du scénario 80 partiel considéré (du début de la période 70 prévisionnelle de fonctionnement jusqu'à l'instant considéré au cours de ladite période 70 prévisionnelle).

Ainsi, l'invention utilise ledit modèle 16 comme simulateur individualisé à l'équipement 2.

En effet, le modèle 16 permet de simuler l'état 130 prévisionnel de l'équipement 2 à un instant, d'une part, pour une décision de maintenance donnée concernant les tâches 90 de la maintenance 6 à réaliser sur ledit équipement 2 et, d'autre part, pour l'utilisation dudit équipement 2 qui suivra dans le cadre du scénario 8 jusqu'audit instant. Par ailleurs, cette simulation est individualisée audit équipement 2, car l'historique 9 de fabrication et de maintenance jusqu'à la veille de la maintenance 6 à réaliser et l'historique 11 d'utilisation jusqu'à la veille de la maintenance 6 à réaliser, compte tenu desquels cette simulation est réalisée, sont propres à l'équipement 2, à savoir spécifiques à l'équipement 2 considéré.

Comme visible sur la figure 1, l'application du système 1 de supervision à l'équipement 2 en attente d'une maintenance 6 à réaliser (de rang j), permet de déterminer un état 130 prévisionnel dudit équipement 2 pour un instant futur correspondant à la veille de la maintenance 7 prévisionnelle (de rang j+1), compte tenu des données relatives audit équipement 2 :
- d'une part l'historique 9 de fabrication et de maintenance dudit équipement et l'historique 11 d'utilisation ;
- d'autre part, les tâches 90 d'une décision de maintenance au titre de la maintenance 6 à réaliser et un scénario 8 d'utilisation.

La figure 1 représente en particulier le modèle 16 recevant, en entrée, les données susmentionnées et générant, en sortie, l'état 130 prévisionnel de l'équipement 2 à la fin de la période 70 prévisionnelle.

Plus avant, une fois ces valeurs soumises, ledit modèle 16 génère un état 130 prévisionnel dudit équipement 2 postérieur à ladite maintenance 6 à réaliser.

En d'autres termes, à partir des données soumises en entrée, le modèle 16 est à même de prédire un état 130 prévisionnel de l'équipement 2 pour l'instant considéré, c'est-à-dire une valeur pour l'instant considéré pour chacun des indicateurs 120 matériels de cet état 130 prévisionnel. Ledit état 130 prévisionnel est alors comparé à un état 17minimal identifié comme requis pour le fonctionnement dudit équipement 2.

En d'autres termes, on compare, pour chacun des indicateurs 120 matériels de cet état 130 prévisionnel, la valeur prédite par le modèle 16 à la valeur minimale requise pour le fonctionnement de l'équipement 2 - par exemple la valeur minimale d'une performance dudit équipement 2 (ou selon le cas, à la valeur maximale requise pour le fonctionnement de l'équipement 2 - par exemple la valeur maximale d'une usure dudit équipement 2).

Si l'état 130 prévisionnel ainsi simulé pour l'instant considéré satisfait le critère de fonctionnement (c'est-à-dire si la valeur prédite par le modèle 16 de chaque indicateur 120 matériel de l'état 130 prévisionnel est supérieure (ou inférieure) à la valeur minimale (ou maximale) requise pour le fonctionnement de l'équipement 2), alors l'état 130 prévisionnel prédit correspond à un état de bon fonctionnement de l'équipement 2.

Par exemple, on considère un cas d'équipement 2 de type pompe, dont l'état 13 à un instant (t) peut être caractérisé au moyen des deux indicateurs 120 matériels, à savoir le débit (Q(t)) et la pression de refoulement (Pref(t)), avec respectivement Qₘᵢₙ, et Prefₘᵢₙ pour valeurs minimales requises pour le fonctionnement de la pompe.

L'état 17 minimal de la pompe est donc l'ensemble des valeurs [Qₘᵢₙ,Prefₘᵢₙ]. Le critère de fonctionnement de la pompe à l'instant (t) est donc que l'état 130 prévisionnel soit supérieur à l'état 17 minimal, c'est-à-dire que le débit Q(t) et la pression de refoulement Pref(t) satisfassent aux deux conditions Q(t) > Qₘᵢₙet Pref(t) > Prefₘᵢₙ.

Pour identifier si l'état 130 prévisionnel de la pompe, tel que prédit pour l'instant considéré par le modèle 16, correspond à un état de bon fonctionnement de la pompe, on compare alors l'état 130 à l'état 17 minimal, c'est-à-dire on compare les valeurs prédites pour l'instant des indicateurs 120 matériels débit Q(t) et pression de refoulement Pref(t) à leurs valeurs minimales respectives Qₘᵢₙ et Prefₘᵢₙ.

La figure 7 illustre, dans le cas de cet exemple, la prédiction de cet état 130 prévisionnel ainsi que la comparaison à l'état 17 minimal.

La figure 7 reprend l'exemple précédent du cas d'un équipement 2 de type pompe, dont l'état 13 à un instant (t) peut être caractérisé au moyen des deux indicateurs 120 matériels, à savoir le débit (Q(t)) et la pression de refoulement (Pref(t)), avec respectivement comme valeurs des indicateurs 120 matériels d'état 17 minimal, Qₘᵢₙ, et Prefₘᵢₙ valeurs minimales requises pour le fonctionnement de la pompe.

La figure 7 représente l'évolution de l'état 130 prévisionnel de la pompe (i.e. les valeurs successives des indicateurs 120 matériels Q et Pref), calculés par le modèle 16, au cours de la période 70 prévisionnelle.

Les courbes de l'état 130 prévisionnel dans le temps étant décroissantes du fait du vieillissement, la figure 7 illustre également la comparaison de l'état 130 ainsi prédit à un instant (t) avec l'état 17 minimal : pour identifier si l'état 130 prévisionnel de la pompe correspond à un état de bon fonctionnement de la pompe, on compare alors l'état 130 prévisionnel à l'état 17 minimal, c'est-à-dire on compare les valeurs prédites pour ledit instant des indicateurs 120 matériels débit (Q(t)) et pression de refoulement (Pref(t)) à leurs valeurs minimales respectives Qₘᵢₙ et Prefₘᵢₙ.

Selon un mode de réalisation, on détermine si, pour une décision de maintenance donnée (décision concernant les tâches 90 à exécuter sur l'équipement 2) au titre de la maintenance 6 à réaliser, suivie d'un scénario 8 donné, la décision de maintenance considérée sera suffisante, à savoir si elle donnera à l'équipement 2 le potentiel suffisant pour un zéro-panne en fonctionnement, dans le cadre dudit scénario 8 au cours et jusqu'à la fin de la période 70 prévisionnelle, soit jusqu'à la veille de la maintenance 7 prévisionnelle. Pour ce faire, selon un mode de réalisation, on effectue au moins une variation d'au moins une des valeurs des tâches 90 de la maintenance 6 à réaliser. Ensuite, lorsqu'on soumet les valeurs audit modèle 16, on introduit les valeurs de ladite variation.

Parmi toutes les variations, on sélectionne au moins une décision suffisante de la maintenance à réaliser, pour l'état 130 prévisionnel dudit équipement 2 supérieur ou équivalent à l'état 17 minimal, au moment de ladite maintenance 7 prévisionnelle.

En d'autres termes et dans le cas où la maintenance 7 prévisionnelle correspond à la prochaine étape de maintenance qui suit la maintenance 6 à réaliser, on considère un ensemble de décisions de maintenance possibles (concernant les tâches 90) pour la maintenance 6 à réaliser et on souhaite déterminer, parmi ces dernières, les décisions de maintenance suffisantes. Par exemple, on considère un cas d'équipement 2 de type pompe pour laquelle deux tâches 90 de maintenance sont identifiées comme critiques :
d'une part, le remplacement du palier de pompe (avec les types A et B comme types possibles de palier) ;
d'autre part le remplacement de l'impulseur de pompe (avec les types A, B et C comme types possibles d'impulseur).

Les décisions possibles de maintenance pour la maintenance 6 à réaliser sont alors les douze combinaisons de décisions formées à partir des suivantes :
- les trois décisions possibles concernant le palier : ne rien faire (laisser le palier en place) ou remplacer le palier pour un palier de type A ou B ;
- les quatre décisions possibles concernant l'impulseur : ne rien faire (laisser l'impulseur en place) ou remplacer l'impulseur pour un impulseur de type A ou B ou encore C.

Parmi ces douze décisions possibles de maintenance, on souhaite déterminer les décisions suffisantes de maintenance. Par ailleurs, si, parmi ces décisions possibles pour la maintenance 6 à réaliser, une décision de maintenance est caractérisée par le vecteur [0 ;A] (i.e. palier non remplacé et impulseur remplacé par un impulseur de type A) et une autre décision de maintenance est caractérisée par vecteur [0 ;0] (i.e. palier non remplacé et impulseur non remplacé), ces deux décisions de maintenance pour la maintenance 6 à réaliser varient en ce qui concerne l'impulseur (in extenso, la variation des valeurs des tâches 90 de la maintenance 6 à réaliser concerne la variation des valeurs « remplacement » et « non remplacement » de l'impulseur).Pour chacune des décisions de maintenance possibles pour la maintenance 6 à réaliser, on met en œuvre la simulation individualisée susmentionnée par le modèle 16, pour déterminer l'état 130 prévisionnel de l'équipement 2 à la fin de la période 70 prévisionnelle, soit à la veille de la maintenance 7 prévisionnelle (compte tenu de l'utilisation de l'équipement 2 qui suivra la maintenance 6 à réaliser dans le cadre du scénario 8 jusqu'à l'instant correspondant à la veille de la maintenance 7 prévisionnelle, et compte tenu de l'historique 9 de fabrication et de maintenance de l'équipement 2 jusqu'à la veille de maintenance 6 à réaliser, et compte tenu de l'historique 11 d'utilisation de l'équipement 2 jusqu'à la veille de maintenance 6 à réaliser).Si, comparé à l'état 17 minimal requis pour le fonctionnement de l'équipement 2, l'état 130 prévisionnel (ainsi simulé par le modèle 16 pour l'instant correspondant à la fin de la période 70 prévisionnelle), satisfait le critère de fonctionnement de l'équipement 2, la décision de maintenance est considérée comme suffisante (dite « décision suffisante de maintenance ») pour donner à l'équipement 2 le potentiel suffisant pour un zéro-panne en fonctionnement dans le cadre du scénario 8 jusqu'à la fin de la période 70 prévisionnelle.

Par exemple, on considère le cas d'un équipement 2 de type pompe dont l'état 13 à un instant peut être caractérisé au moyen des deux indicateurs 120 matériels de l'état 13, à savoir le débit (Q) et la pression de refoulement (Pref), avec respectivement (Qₘᵢₙ) et (Prefₘᵢₙ) pour valeurs minimales requises pour le fonctionnement de la pompe. La décision de maintenance est considérée comme suffisante si elle permet un état 130 prévisionnel (pour l'instant correspondant à la fin de la période 70 prévisionnelle) satisfaisant le critère de fonctionnement de la pompe, à savoir les deux conditions concernant les indicateurs 120 matériels : (Q > Qₘᵢₙ) et (Pref > Prefₘᵢₙ) pour l'instant correspondant à la fin de la période 70 prévisionnelle. On réitère la simulation pour chacune des décisions de maintenance possibles (concernant les tâches 90) pour la maintenance 6 à réaliser. Les états 130 prévisionnels respectifs, ainsi simulés par le modèle 16 pour l'instant correspondant à la fin de la période 70 prévisionnelle, permettent ainsi de trier les décisions de maintenance possibles pour la maintenance 6 à réaliser entre les décisions de maintenance suffisantes et les décisions insuffisantes.

Ainsi parmi toutes les variations d'au moins une des valeurs des tâches 90 de la maintenance 6 à réaliser, on a sélectionné au moins une décision suffisante de ladite maintenance 6 à réaliser, pour l'état 130 prévisionnel dudit équipement 2 supérieur ou équivalent à l'état 17 minimal, au moment de ladite maintenance 7 prévisionnelle.

Selon un mode de réalisation, pour une décision de maintenance donnée (concernant les tâches 90 de la maintenance 6 à réaliser) et pour chacune des conditions 110 prévisionnelles d'utilisation du scénario 8 de l'équipement 2 sur la période 70 prévisionnelle, on détermine la limite 18 maximale possible qui reste compatible avec un zéro-panne de l'équipement 2 (i.e. la limite compatible avec un fonctionnement de l'équipement 2 ininterrompu, sans risque de panne) dans le cadre du scénario 8, au cours et jusqu'à la fin de la période 70 prévisionnelle, soit jusqu'à la veille de la prochaine maintenance 7 prévisionnelle qui suit la maintenance 6 à réaliser.

Pour ce faire et pour une décision de maintenance donnée, on effectue une modification de la valeur d'au moins une des conditions 110 prévisionnelles d'utilisation du scénario 8. Lorsqu'on soumet lesdites valeurs audit modèle 16, on introduit les valeurs de ladite modification ainsi que les valeurs de ladite décision de maintenance. On calcule alors une limite pour au moins une desdites conditions 110 prévisionnelles pour l'état 130 prévisionnel dudit équipement 2 équivalent à l'état 17 minimal, au moment de la maintenance 7 prévisionnelle. En d'autres termes, le scénario 8 de l'équipement 2 sur la période 70 prévisionnelle étant caractérisé par au moins une condition 110 prévisionnelle d'utilisation pilotable, on laisse une liberté de variation de la valeur de ladite condition 110 prévisionnelle d'utilisation pilotable (« laissée libre ») et on cale les éventuelles autres conditions 110 prévisionnelles d'utilisation (pilotables et/ou non pilotables) à leur valeur respective du scénario 8.On utilise alors le modèle 16 pour résoudre, par méthode itérative et par rapport à la condition 110 prévisionnelle d'utilisation pilotable laissée libre, l'équation dans laquelle l'état 130 prévisionnel de l'équipement 2 à la fin de la période 70 prévisionnelle correspond à l'état 17 minimal.

Pour une décision de maintenance donnée (concernant les tâches 90 de la maintenance 6 à réaliser) et pour la condition 110 prévisionnelle d'utilisation pilotable considérée, on a ainsi déterminé une limite possible (de préférence une limite 18 maximale) qui reste compatible avec un-zéro-panne de l'équipement 2 (i.e. une limite compatible avec un fonctionnement de l'équipement 2 ininterrompu, sans risque de panne) jusqu'à la fin de la période 70 prévisionnelle (les autres conditions 110 prévisionnelles d'utilisation restant calées à leur valeur respective du scénario 8).

Par exemple, dans le cas où l'installation 3 est un camion et l'équipement 2 supervisé est la motorisation dudit camion, on considère le scénario 8 entre la maintenance 6 à réaliser et la prochaine maintenance 7 prévisionnelle suivante, caractérisé par les conditions 110 prévisionnelles d'utilisation suivantes :
- conditions 110 prévisionnelles d'utilisation pilotables : la charge moyenne à transporter (deux tonnes = 2T), la distance à parcourir (cent mille kilomètres = 100,000km), la vitesse moyenne (quatre-vingt-dix kilomètres par heure = 90km/h) ;
- conditions 110 prévisionnelles d'utilisation non pilotables : la température de l'air ambiant (vingt degrés Celsius = 20°C), la pente moyenne des routes utilisées (cinq pourcents = 5%).

Pour ce scénario 8, on souhaite déterminer la valeur de la limite 18 maximale de la charge moyenne à transporter, compatible avec le zéro-panne jusqu'à la maintenance 7 prévisionnelle qui suit la maintenance 6 à réaliser, les autres conditions 110 prévisionnelles d'utilisation restant calées à leur valeur cible respective du scénario 8.

L'utilisation du modèle 16 pour résoudre, par méthode itérative et par rapport à la charge moyenne à transporter, l'équation dans laquelle l'état 130 prévisionnel de l'équipement 2 à la fin de la période 70 prévisionnelle correspond à l'état 17 minimal, donne alors, à titre d'exemple, une limite 18 maximale de 2,5T (pour une valeur cible de la charge moyenne à transporter de 2T dans le scénario 8).Dans la figure 8, on considère l'exemple susmentionné de l'équipement 2 de type moteur de camion pour lequel les conditions 110 d'utilisation sont la charge à transporter P, le kilométrage à parcourir d, la vitesse moyenne V, la température d'air ambiant T° et la pente moyenne des routes utilisées A. On suppose en outre dans la figure 8 que l'état 130 prévisionnel est défini par l'indicateur 120 matériel correspondant à la pression de compression moyenne des cylindres U, avec comme valeur minimale requise pour le bon fonctionnement de l'équipement 2 la valeur Uₘᵢₙ de l'état 17 minimal. La figure 8 illustre le calcul de la limite 18 maximale (Plim) de la condition 110 d'utilisation pilotable P, pour l'équipement 2, associé à ses historiques 9 et 11 fixés, pour une décision de maintenance donnée au titre de la maintenance 6 à réaliser, pour un scénario 8 d'utilisation sur la période 70 prévisionnelle, défini par les valeurs moyennes cibles respectives (Pc, dc, Vc, T°c, Ac) des conditions 110 d'utilisation pilotables (P, d, V) et non pilotables (T°, A) (Pc=2T ; dc=100,000km ; Vc=90km/h ; T°c=20°C ; Ac =5%, pour rappel dans l'exemple susmentionné).

Pour les quatre autres conditions 110 d'utilisation (d,V,T°,A) calées à leur valeur moyenne cible respective (dc=100,000km, Vc=90km/h, T°c=20°C, Ac=5%) du scénario 8, on détermine la limite 18 maximale (dans l'exemple, déterminée à Plim=2,5T) de la condition 110 d'utilisation pilotable (P), grâce au modèle 16 et de manière itérative.

Pour cette limite 18 maximale Plim, l'état 130 prévisionnel en fin de période 70 prévisionnelle correspond à l'état 17 minimal requis, c'est-à-dire l'indicateur 120 matériel d'état correspond alors à la valeur minimale requise (U=Uₘᵢₙ).

De même, la figure 9 illustre le calcul de la limite 18 maximale (dlim) de la condition 110 d'utilisation pilotable d. Pour les quatre autres conditions 110 d'utilisation (P,V,T°,A) calées à leur valeur moyenne cible respective (Pc=2T ; Vc=90km/h ; T°c=20°C ; Ac =5%) du scénario 8, on détermine la limite 18 maximale (dans l'exemple déterminée à dlim=110,000km) de la condition 110 d'utilisation pilotable (d), grâce au modèle 16 et de manière itérative. Pour cette limite 18 maximale (dlim), l'état 130 prévisionnel en fin de période 70 prévisionnelle correspond à l'état 17 minimal requis, c'est-à-dire l'indicateur 120 matériel d'état correspond alors à la valeur minimale requise (U=Uₘᵢₙ).Pour chacune des autres conditions 110 prévisionnelles d'utilisation pilotables du scénario 8, on procède de même pour en déterminer la limite 18 maximale possible qui reste compatible avec un zéro-panne de l'équipement 2 (i.e. la limite compatible avec un fonctionnement de l'équipement 2 ininterrompu sans risque de panne) dans le cadre du scénario 8, au cours et jusqu'à la fin de la période 70 prévisionnelle, à savoir jusqu'à la veille de la prochaine maintenance 7 prévisionnelle qui suit la maintenance 6 à réaliser, et ce pour une décision de maintenance donnée (concernant les tâches 90 de la maintenance 6 à réaliser).Ainsi déterminées, lesdites limites 18 maximales bornent le domaine d'utilisation compatible avec le zéro-panne de l'équipement 2 dans le cadre du scénario 8, au cours et jusqu'à la fin de de la période 70 prévisionnelle, et ce pour une décision de maintenance donnée : on sait ainsi que le zéro-panne de l'équipement 2 est possible tant que l'équipement 2 est exploité, avec une condition 110 prévisionnelle d'utilisation pilotable donnée gardée inférieure ou égale à la valeur de sa limite 18 maximale ainsi déterminée, les autres conditions 110 prévisionnelles d'utilisation restant inférieures ou égales à leur valeur cible respective du scénario 8.On peut représenter alors graphiquement, d'une part, les valeurs cibles des conditions 110 prévisionnelles d'utilisation du scénario 8 et, d'autre part, les valeurs des limites 18 maximales calculées précédemment pour chacune des conditions 110 prévisionnelles d'utilisation pilotables, à l'aide d'un diagramme en toile d'araignée (« web mapping »), chaque axe étant assigné à une condition 110 prévisionnelle. On obtient alors des polygones avec autant de sommets que de conditions 110 prévisionnelles.

On peut ainsi superposer un premier polygone 180 dit « polygone 180 cible » (représentant la valeur cible de chacune des conditions 110 prévisionnelles d'utilisation du scénario 8), avec un deuxième polygone 181 dit « polygone 181 limite » (représentant la valeur de la limite 18 maximale de chacune des conditions 110 prévisionnelles d'utilisation pilotables et la valeur cible du scénario 8 pour chacune des conditions 110 prévisionnelles d'utilisation non pilotables), le polygone 180 cible se retrouvant donc encadré par le polygone 181 limite. Dans la figure 10, on considère l'exemple susmentionné de l'équipement 2 de type moteur de camion pour lequel les conditions 110 d'utilisation sont la charge à transporter P, le kilométrage à parcourir d, la vitesse moyenne V, la température d'air ambiant T° et la pente moyenne des routes utilisées A. On suppose en outre dans la figure 10 que l'état 130 prévisionnel est défini par l'indicateur 120 d'état matériel correspondant à la pression de compression moyenne des cylindres U, avec comme valeur minimale requise pour le bon fonctionnement de l'équipement 2 la valeur Uₘᵢₙ de l'état 17 minimal.]La figure 10 montre le polygone 180 cible et polygone 181 limite, pour l'équipement 2, associé à ses historiques 9 et 11 fixés, pour une décision de maintenance donnée au titre de la maintenance 6 à réaliser, pour un scénario 8 d'utilisation sur la période 70 prévisionnelle, défini par les valeurs moyennes cibles respectives (Pc,dc,Vc,T°c, Ac) des conditions 110 d'utilisation pilotables (P,d,V) et non pilotables (T°,A) (Pc=2T ; dc=100,000km ; Vc=90km/h ; T°c=20°C ; Ac =5%, pour rappel dans l'exemple susmentionné).

La figure 10 montre le « polygone 180 cible » en traits pleins avec, le long des axes correspondants :
- les valeurs moyennes cibles (Pc, dc, Vc) respectives des conditions 110 prévisionnelles d'utilisation pilotables (P, d, V) du scénario 8, représentées par un cadenas ouvert ;
- les valeurs moyennes cibles (T°c, Ac) respectives des conditions 110 prévisionnelles d'utilisation non pilotables (T°, A) du scénario 8, représentées par un cadenas fermé.

La figure 10 montre le « polygone 181 limite » en pointillés avec, le long des axes correspondants :
- les valeurs (Plim,dlim,Vlim) des limites 18 maximales respectives des conditions 110 prévisionnelles d'utilisation pilotables (P,d,V) du scénario 8, représentées par un cadenas ouvert ;
- les valeurs moyennes cibles (T°c,Ac) respectives des conditions 110 prévisionnelles d'utilisation non pilotables (T°,A) du scénario 8, représentées par un cadenas fermé.

Selon un mode de réalisation, on réitère le calcul des limites 18 maximales des conditions 110 prévisionnelles d'utilisation du scénario 8, pour chacune des décisions de maintenance déterminées comme suffisantes, (i.e. les décisions de maintenance, concernant les tâches 90 à réaliser sur l'équipement 2 lors de la maintenance 6 à réaliser, qui donneront à l'équipement 2 le potentiel suffisant pour un zéro-panne en fonctionnement, dans le cadre dudit scénario 8, au cours et jusqu'à la fin de la période 70 prévisionnelle, soit jusqu'à la veille de la maintenance 7 prévisionnelle).

Pour ce faire, selon un mode de réalisation, lorsqu'on soumet les valeurs audit modèle 16, on introduit les valeurs sélectionnées de ladite décision suffisante de maintenance. On calcule une limite 18 maximale d'une condition 110 prévisionnelle d'utilisation pour cette décision suffisante de maintenance, pour l'état 130 prévisionnel dudit équipement 2 équivalent à l'état 17 minimal, au moment de la maintenance 7 prévisionnelle.

Pour chaque décision de maintenance déterminée comme suffisante pour la maintenance 6 à réaliser et le scénario 8 considéré, les limites 18 maximales des conditions 110 prévisionnelles d'utilisation pilotables ayant été calculées, on représente alors graphiquement, dans un diagramme similaire en toile d'araignée, d'une part, l'utilisation cible (i.e. la valeur cible des conditions 110 prévisionnelles d'utilisation du scénario 8) sous la forme du polygone 180 cible et, d'autre part, l'utilisation limite (i.e. la valeur des limites 18 maximales des conditions 110 prévisionnelles d'utilisation pilotables et la valeur cible des conditions 110 prévisionnelles d'utilisation non pilotables du scénario 8) sous la forme du polygone 181 limite, et ce en superposant les deux polygones.

Selon un mode de réalisation, on détermine une marge d'utilisation pour au moins une des conditions 110 prévisionnelles d'utilisation dudit scénario 8, comme étant l'écart 182 entre la valeur correspondante et la limite 18 maximale correspondante.

En effet, l'invention quantifie, pour l'ensemble des conditions 110 prévisionnelles d'utilisation pilotables du scénario 8, l'écart 182 entre leur valeur cible et la valeur de leur limite 18 maximale respective.

En d'autres termes, la représentation et la superposition dans un même diagramme en toile d'araignée, du polygone 180 cible du scénario 8 et du polygone 181 limite des limites 18 maximales, permettent de représenter graphiquement, pour chaque condition 110 prévisionnelle d'utilisation pilotable, l'écart 182 entre valeur cible et valeur de la limite 18 maximale de ladite condition 110 prévisionnelle d'utilisation pilotable.

Par exemple, dans le cas susmentionné du moteur de camion, on représente ainsi graphiquement, pour chaque condition 110 prévisionnelle d'utilisation pilotable, l'écart 182 entre la valeur cible et la valeur de la limite 18 maximale :
- pour la charge moyenne à transporter : l'écart 182 entre la valeur cible 2T et la valeur de la limite 18 maximale 2,5T ;
- pour la distance à parcourir: l'écart 182 entre la valeur cible 100,000km et la valeur de la limite 18 maximale 110,000km ;
- pour la vitesse moyenne : l'écart 182 entre la valeur cible 90km/h et la valeur de la limite 18 maximale 100km/h.

La figure 10 représente, pour chaque condition 110 prévisionnelle d'utilisation pilotable, l'écart 182 entre valeur cible et valeur de la limite 18 maximale de ladite condition 110 prévisionnelle d'utilisation pilotable. Préférentiellement et de manière à comparer des écarts 182 comparables, les axes du diagramme en toile d'araignée, sur lequel sont représentés et superposés le polygone 180 cible du scénario 8 et le polygone 181 limite des limites 18 maximales, sont normalisés. En d'autres termes, pour chaque condition 110 prévisionnelle d'utilisation pilotable, la valeur cible ainsi que la valeur de sa limite 18 maximale sont représentées sur une échelle, où chaque valeur est normalisée (i.e. représentée par le ratio entre ladite valeur et la valeur cible).

Par exemple, dans le cas susmentionné du moteur de camion et sur un diagramme en toile d'araignée dont les axes sont normalisés, les écarts 182 entre valeur cible et la valeur de la limite 18 maximale pour chaque condition 110 prévisionnelle d'utilisation pilotable peuvent ainsi être représentés graphiquement :
- pour la charge moyenne à transporter : la valeur cible 2T est représentée par le ratio 1 (2T/2T), tandis que la valeur de la limite 18 maximale est représentée par le ratio 1,25 (2,5T/2T), soit un écart de 25% entre les deux valeurs ;
- pour la distance à parcourir: la valeur cible est représentée par le ratio 1 (100,000km/100,000km), tandis que la valeur de la limite 18 maximale est représentée par le ratio 1,1 (110,000km/100,000km), soit un écart de 10% entre les deux valeurs ;
- pour la vitesse moyenne : la valeur cible est représentée par le ratio 1 ((90km/h)/(90km/h)), tandis que la valeur de la limite 18 maximale est représentée par le ratio 1,11 ((100km/h)/(90km/h)), soit un écart de 11% entre les deux valeurs. Ainsi normalisés, ces écarts 182 entre valeur cible et valeur de la limite 18 maximale se prêtent à une comparaison entre eux : ils permettent d'identifier les conditions 110 prévisionnelles d'utilisations pilotables pour lesquelles l'écart 182 entre la valeur cible et la valeur de la limite 18 maximale est significatif ou acceptable, ainsi que les conditions 110 prévisionnelles pilotables pour lesquelles l'écart 182 ne l'est pas ; ce qui revient à identifier les conditions 110 prévisionnelles d'utilisation qui tolèrent une marge avant panne faible ou élevée, acceptable ou non.

Par exemple, dans le cas susmentionné du moteur de camion, l'écart 182 entre la valeur cible et la valeur de la limite 18 maximale est bien plus important pour la charge moyenne à transporter (25%), que pour le kilométrage à parcourir et la vitesse moyenne (respectivement 10% et 11%). Par conséquent, la charge moyenne à transporter tolère un plus grand écart 182 par rapport à sa valeur cible (sans remettre en cause pour autant le zéro-panne), que le kilométrage à parcourir et la vitesse moyenne. En d'autres termes, il y a un plus grand confort d'utilisation avant panne pour la charge moyenne que pour le kilométrage à parcourir et la vitesse moyenne, pour bénéficier du zéro-panne jusqu'à la fin de la période 70 prévisionnelle. L'exploitant devrait donc être beaucoup plus vigilant, lors de la période 70 prévisionnelle, à respecter les valeurs cibles du scénario 8 pour le kilométrage à parcourir et la vitesse moyenne, que pour la charge moyenne transportée. L'invention définit donc la marge d'utilisation avant panne (MUAP) comme étant la moyenne des écarts 182 normalisés entre valeur cible et valeur de la limite 18 maximale pour chaque condition 110 prévisionnelle d'utilisation pilotable, soit encore l'écart moyen entre polygone 180 cible du scénario 8 et polygone 181 limite des limites 18 maximales.

Dans l'exemple susmentionné, la marge d'utilisation avant panne (MUAP), moyenne des trois écarts 182 normalisés 25%, 10% et 11%, se chiffre à environ 15%.Ainsi pour une décision de maintenance déterminée comme suffisante pour la maintenance 6 à réaliser et pour un scénario 8, les limites 18 maximales des conditions 110 prévisionnelles pilotables ayant été calculées, on quantifie préférentiellement l'adéquation de la décision de maintenance (concernant les tâches 90 de la maintenance 6 prévue à réaliser) audit scénario 8, ainsi qu'à l'historique complet de l'équipement 2, au moyen de l'indicateur de la marge d'utilisation avant panne (MUAP) associée à ladite décision de maintenance.

Par exemple, on considère un cas d'équipement 2 du type moteur de camion, pour lequel sept décisions suffisantes de maintenance ont été identifiées au titre de la maintenance 6 à réaliser, et pour chacune desquelles la marge (MUAP) a été calculée, ces décisions étant :
- une première décision (D1) qui remplace le filtre à gazole et permet d'obtenir une MUAP de 3% ;
- une deuxième décision (D2) qui remplace les injecteurs et permet d'obtenir une MUAP de 7% ;
- la troisième décision (D3) qui remplace injecteurs et filtre à gazole et permet d'obtenir une MUAP de 9% ;
- une quatrième décision (D4) qui remplace la pompe d'injection et permet d'obtenir une MUAP de 11% ;
- une cinquième décision (D5) qui remplace pompe d'injection et filtre à gazole et permet d'obtenir une MUAP de 13% ;
- une sixième décision (D6) qui remplace pompe d'injection et injecteurs et permet d'obtenir une MUAP de 20% ;
- une septième décision (D7) qui remplace l'ensemble (pompe d'injection, injecteurs et filtre à gazole) et permet d'obtenir une MUAP de 25%.

Pour l'équipement 2 et ses historiques 9,11, on constate que la décision D7 s'avère plus adaptée au scénario 8 que les autres décisions, notamment la décision D1. En effet, la décision D1 permet d'obtenir une MUAP de 3% : pour bénéficier du zéro-panne jusqu'à la fin de la période 70 prévisionnelle, une valeur moyenne des écarts 182 de 3% pour une condition 110 prévisionnelle d'utilisation devrait être respecté par rapport à la valeur cible du scénario 8.

La décision D7 permet quant à elle une MUAP de 25% : pour bénéficier du zéro-panne jusqu'à la fin de la période 70 prévisionnelle, une valeur moyenne des écarts 182 bien plus large de 25% pour une condition 110 prévisionnelle d'utilisation devrait être respecté par rapport à la valeur cible du scénario 8.

La marge d'utilisation (MUAP) permet ainsi de quantifier l'adéquation de chaque décision de maintenance au même scénario 8 prévisionnel d'utilisation.

Selon un mode de réalisation, une fois la marge d'utilisation obtenue, on sélectionne une décision optimale de maintenance parmi les décisions suffisantes de maintenance, comme étant la décision suffisante permettant d'obtenir une marge d'utilisation acceptable ou comme étant la décision suffisante permettant d'obtenir au moins un desdits écarts 182 acceptable. En d'autres termes, pour chacune des décisions identifiées comme étant suffisantes pour la maintenance 6 à réaliser et pour le scénario 8 considéré, les limites 18 maximales des conditions 110 prévisionnelles d'utilisation pilotables ayant été calculées, l'adéquation de la décision suffisante de maintenance (concernant les tâches 90 pour la maintenance 6 prévue à réaliser) au scénario 8 ayant été quantifiée au moyen de la marge d'utilisation avant panne (MUAP), l'invention sélectionne préférentiellement la décision optimale de maintenance comme étant la décision permettant la marge d'utilisation souhaitée. On détermine ainsi préférentiellement la décision optimale quant au volume des tâches 90 pour la maintenance 6 à réaliser. En somme, cette décision optimale est individualisée à l'historique complet de l'équipement 2, est adaptée au scénario 8 (pour permettre le zéro-panne jusqu'en fin de la période 70 prévisionnelle ainsi que la marge d'utilisation souhaitée avant panne).

Par exemple, on considère le cas susmentionné du moteur de camion, pour lequel les sept décisions suffisantes de maintenance ont été identifiées (de D1 à D7) au titre de la maintenance 6 à réaliser, et pour chacune desquelles la marge (MUAP) a été calculée.

L'exploitant peut considérer qu'un écart 182 de 10% entre valeur cible du scénario 8 et valeur de la limite 18 maximale est suffisant :
- pour la charge à transporter (i.e. l'exploitant estime que le charge moyenne à transporter entre la maintenance 6 à réaliser et la prochaine maintenance 7 prévisionnelle n'excédera pas la cible des 2T, au-delà de 10%) ;
- pour le kilométrage à parcourirjusqu' à la prochaine maintenance (i.e. l'exploitant estime que le kilométrage à parcourir entre la maintenance 6 à réaliser et la prochaine maintenance 7 prévisionnelle n'excédera pas la cible des 100,000kilomètres, au-delà de 10%) ;
- pour la vitesse moyenne (i.e. l'exploitant estime que la vitesse moyenne entre la maintenance 6 à réaliser et la prochaine maintenance 7 prévisionnelle n'excédera pas la cible des 90km/h, au-delà de 10%).

La décision suffisante de maintenance au titre de la maintenance 6 à réaliser, associée à une marge (MUAP) au-dessus de 10% et minimisant les contraintes d'entretien est donc la décision D4 qui présente une marge (MUAP) de 11%. En particulier les décisions D5, D6 et D7 permettraient aussi une marge (MUAP) supérieure à 10% mais, au regard du souhait de l'exploitant, relèveraient d'une sur-maintenance inutile, avec des contraintes de maintenance supérieures. Pour l'exploitant, la décision optimale de maintenance au titre de la maintenance 6 à réaliser est donc la décision D4 (i.e. celle comprenant le remplacement de la pompe d'injection).

L'invention envisage aussi de sélectionner la décision optimale de maintenance à appliquer à la maintenance 6 à réaliser, comme étant la décision permettant l'écart 182 souhaité entre valeur cible du scénario 8 et valeur de la limite 18 maximale, et ce pour une des conditions 110 prévisionnelles d'utilisation.

Par exemple, on considère le cas susmentionné du moteur de camion, dans lequel les sept décisions suffisantes de maintenance (D1 à D7) ont été identifiées au titre de la maintenance 6 à réaliser, et où l'exploitant :
- estime que le kilométrage parcouru à la veille de la prochaine maintenance 7 prévisionnelle ne saurait excéder la cible des 100,000kilomètres du scénario 8 ;
- estime que la vitesse moyenne à la veille de la prochaine maintenance 7 prévisionnelle ne saurait excéder non plus la cible des 90km/h du scénario 8 ;
- souhaite un écart 182 au moins de 10% entre valeur cible (2T) et valeur de la limite 18 maximale concernant la charge moyenne à transporter seule.

Dans cet exemple, et pour chacune des sept décisions de maintenance suffisantes, on considère alors l'écart 182 pour la charge à transporter entre la valeur cible dans le scénario 8 (2T) et la valeur de la limite 18 maximale calculée par la simulation du modèle 16 :
- la décision D1 permet un écart 182 de 5% pour la charge à transporter ;
- la décision D2 permet un écart 182 de 11% pour la charge à transporter ;
- la décision D3 permet un écart 182 de 15% pour la charge à transporter ;
- la décision D4 permet un écart 182 de 18% pour la charge à transporter ;
- la décision D5 permet un écart 182 de 21% pour la charge à transporter ;
- la décision D6 permet un écart 182 de 33% pour la charge à transporter ;
- la décision D7 permet un écart 182 de 41% pour la charge à transporter.

Au vu des hypothèses et du souhait de l'exploitant, la décision optimale de maintenance au titre de la maintenance 6 à réaliser, est dans ce cas, non plus la décision D4, mais la décision D2 (avec un écart 182 de 11% entre valeur cible et valeur de la limite 18 maximale concernant la charge à transporter). En particulier les décisions D3 à D7 porteraient aussi l'écart 182 à plus de 10% mais, au regard du souhait de l'exploitant, relèveraient d'une sur-maintenance inutile, avec des contraintes de maintenance supérieures. Pour l'exploitant, la décision optimale de maintenance au titre de la maintenance 6 à réaliser est donc dans ce cas la décision D2 (i.e. celle comprenant le remplacement des injecteurs).

L'invention peut encore sélectionner la décision optimale de maintenance à appliquer à la maintenance 6 à réaliser, comme étant la décision permettant la moyenne souhaitée des écarts entre valeur cible du scénario 8 et valeur de la limite 18 maximale, et ce pour une partie souhaitée des conditions 110 prévisionnelles d'utilisations.

Par exemple, on considère le cas susmentionné du moteur de camion, dans lequel les sept décisions suffisantes de maintenance (D1 à D7) ont été identifiées au titre de la maintenance 6 à réaliser,
- où l'exploitant estime que la vitesse moyenne à la veille de la prochaine maintenance ne saurait excéder la cible des 90km/h, et
- où l'exploitant souhaite une valeur moyenne des écarts 182 de 10% (entre valeur cible du scénario 8 et valeur de la limite 18 maximale) concernant la charge à transporter et le kilométrage à parcourir.

Dans cet exemple, et pour chacune des décisions de maintenance suffisantes, on considère alors la moyenne des écarts 182 entre valeur cible du scénario 8 et limite 18 maximale pour les deux conditions 110 prévisionnelles d'utilisation - la charge à transporter et le kilométrage à parcourir -, avec les limites 18 maximales calculées par la simulation permise par le modèle 16.

On suppose en outre dans l'exemple que :
- la décision D1 permet des écarts 182 de 5% et 2% respectivement pour la charge à transporter et le kilométrage à parcourir, soit un écart moyen de 3% ;
- la décision D2 permet des écarts 182 de 11% et 5%, soit un écart moyen de 8% ;
- la décision D3 permet des écarts 182 de 15% et 6%, soit un écart moyen de 10% ;
- la décision D4 permet des écarts 182 de 18% et 7%, soit un écart moyen de 13% ;
- la décision D5 permet des écarts 182 de 21% et 8%, soit un écart moyen de 15% ;
- la décision D6 permet des écarts 182 de 33% et 13%, soit un écart moyen de 23% ;
- la décision D7 permet des écarts 182 de 41% et 16%, soit un écart moyen de 29%.

Au vu des hypothèses et du souhait de l'exploitant, la décision de maintenance au titre de la maintenance 6 à réaliser, est dans ce cas non plus la décision D2 ou la décision D4, mais la décision D3, avec un écart moyen de 10%. En particulier les décisions D4 à D7 permettraient aussi écart moyen supérieur à 10% mais, au regard du souhait de l'exploitant, relèveraient d'une sur-maintenance inutile, avec des contraintes de maintenance supérieures. Pour l'exploitant, la décision optimale de maintenance au titre de la maintenance 6 à réaliser est donc dans ce cas la décision D3 (i.e. celle comprenant le remplacement des injecteurs et du filtre à gazole).

Ainsi, pour l'équipement 2 ayant fonctionné jusqu'à la maintenance 6 à réaliser et pour le scénario 8 à exécuter à l'issue de ladite maintenance 6 à réaliser, la simulation permise par le modèle 16 permet de déterminer :
- parmi un ensemble de décisions suffisantes de maintenance, la décision optimale de maintenance : cette décision quant à la nature des tâches 90 pour la maintenance 6 à réaliser est individualisée à l'historique complet de l'équipement 2, adaptée au scénario 8 pour permettre le zéro-panne jusqu'en fin de la période 70 prévisionnelle et permet la marge d'utilisation avant panne (MUAP) souhaitée ;
- l'utilisation limite associée, à savoir l'utilisation maximale possible (compatible avec un zéro-panne jusqu'à l'échéance de la prochaine maintenance 7 prévisionnelle suivant la maintenance 6 à réaliser), bornée par les limites 18 maximales des conditions 110 prévisionnelles d'utilisation pilotables (lesdites limites 18 maximales étant associées à la décision optimale de maintenance).

Par exemple, on considère le cas susmentionné du moteur de camion, pour lequel les sept décisions suffisantes de maintenance (D1 à D7) ont été identifiées au titre de la maintenance 6 à réaliser, et dans lequel l'exploitant souhaite une marge moyenne d'utilisation avant panne (MUAP) de 10% pour l'ensemble des conditions 110 prévisionnelles d'utilisation pilotables (charge moyenne à transporter, kilométrage à parcourir jusqu'à la prochaine maintenance et vitesse moyenne).

Dans cet exemple (et compte tenu de l'historique 9 de fabrication et de maintenance et de l'historique 11 d'utilisation du moteur de camion, ainsi que du scénario 8 au cours de la période 70 prévisionnelle), parmi les décisions suffisantes de maintenance au titre de la maintenance 6 à réaliser, la décision optimale de maintenance est la décision D4 (i.e. celle comprenant le remplacement de la pompe d'injection).

L'utilisation limite à respecter au cours de la période 70 prévisionnelle pour bénéficier du zéro-panne du moteur jusqu'à la fin de ladite période 70 prévisionnelle est l'utilisation limite associée à cette décision optimale de maintenance (i.e. celle bornée par les limites 18 maximales qui ont été calculées pour les conditions 110 prévisionnelles d'utilisation et pour ladite décision de maintenance D4 : 2,3T avec un écart 182 de 18% par rapport à la valeur cible de 2T, 107000km avec un écart 182 de 7% par rapport à la valeur cible de 100,000km, 97 km/h avec un écart 182 de 8% par rapport par rapport à la valeur cible de 90km/h).

En d'autres termes, compte tenu du mode de calcul des limites 18 maximales, le zéro-panne du moteur de camion jusqu'à la fin de la période 70 prévisionnelle est possible tant que le moteur est exploité, avec une condition 110 pilotable donnée gardée inférieure ou égale à la valeur de sa limite 18 maximale ainsi déterminée, les autres conditions 110 étant gardées inférieures ou égales à leur valeur cible respective du scénario 8.

La construction du polygone 181 limite, à partir des limites 18 maximales des conditions 110 prévisionnelles d'utilisation, en vue d'en quantifier l'écart moyen avec le polygone 180 cible du scénario 8 (i.e. la marge d'utilisation avant panne MUAP) est un outil conceptuel prévu par l'invention.

En effet, pour un même scénario 8 cible et dans chaque cas de décision suffisante de maintenance 6 à réaliser, le polygone 181 limite et la marge (MUAP), calculés toujours selon la même méthodologie, permettent de chiffrer l'adéquation de chaque décision de maintenance au scénario 8 cible (compte tenu de l'historique 9 de fabrication et de maintenance et de l'historique 11 d'utilisation de l'équipement 2) : le polygone 181 limite et la marge (MUAP) permettent ainsi de comparer les décisions de maintenance entre elles.

Plus avant, l'invention prévoit de déduire tous les scénarios d'utilisation compatibles avec le zéro-panne jusqu'à l'échéance de la prochaine maintenance.

En effet, compte tenu du mode de calcul des limites 18 maximales, le polygone 181 limite et ses limites 18 maximales bornent l'utilisation limite compatible avec le zéro-panne de l'équipement 2 jusqu'à la fin de la période 70 prévisionnelle, dans le sens où le zéro-panne est possible tant que l'équipement 2 est exploité, avec une condition 110 prévisionnelle d'utilisation pilotable donnée gardée inférieure ou égale à la valeur de sa limite 18 maximale, mais seulement si les autres conditions 110 prévisionnelles d'utilisation pilotables sont gardées inférieures ou égales à leur valeur cible respective du scénario 8. En particulier, le polygone 181 limite ne permet pas de déduire si l'utilisation de l'équipement 2, avec deux conditions 110 prévisionnelles d'utilisation pilotables portées au-delà de leur valeur cible respective tout en respectant leur limite 18 maximale possible respective, reste compatible avec le zéro-panne recherché. Par exemple, on considère le cas susmentionné du moteur de camion, avec un scénario 8 cible, entre la maintenance 6 à réaliser et la maintenance 7 prévisionnelle suivante, défini comme suit :
- conditions 110 prévisionnelles d'utilisation pilotables : charge moyenne à transporter de 2T, distance à parcourir de 100,000km, vitesse moyenne de 90km/h ;
- conditions 110 prévisionnelles d'utilisation non pilotables : température de l'air ambiant de 20°C, pente moyenne des routes utilisées de 5%.

On suppose en outre, dans cet exemple, que les limites 18 maximales sont pour la charge moyenne à transporter de 2,5T, pour la distance à parcourir de 110,000km et pour la vitesse moyenne de 100km/h.

Dans cet exemple, tel que construit, le polygone 181 limite indique les scénarios 8 d'utilisation suivants comme compatibles avec le zéro-panne jusqu'à la prochaine maintenance 7 prévisionnelle :
- 2,5 T transportées en moyenne sur 100,000kilomètres parcourus en moyenne à 90 km/h entre les deux maintenances ;
- 2 T transportées en moyenne sur 110,000kilomètres parcourus en moyenne à 90 km/h entre les deux maintenances ;
- 2 T transportées en moyenne sur 100,000kilomètres parcourus en moyenne à 100 km/h entre les deux maintenances.

Néanmoins, tel que construit, le polygone 181 limite ne permet pas pour autant de dire si 2,3 T transportées en moyenne sur 105,000kilomètres, parcourus en moyenne à 95 km/h entre les deux maintenances est un scénario d'utilisation compatible avec le zéro-panne recherché jusqu'à la fin de la prochaine maintenance 7 prévisionnelle. Selon un mode de réalisation, l'invention prévoit donc de déterminer différemment tous les scénarios d'utilisation compatibles avec le zéro-panne jusqu'à l'échéance de la prochaine maintenance. Pour ce faire, le système 1 comprend une représentation graphique sous forme d'abaque, avec au moins une courbe indiquant la limite 18 maximale d'une première condition 110 prévisionnelle en fonction d'au moins une deuxième desdites conditions 110 prévisionnelles. Cet abaque permet de déterminer les scénarios d'utilisation compatibles avec le zéro-panne pour la période 70 prévisionnelle comprise entre la maintenance 6 à réaliser et la prochaine maintenance 7 prévisionnelle.

En d'autres termes, l'invention envisage de construire au moins une représentation graphique de type nomogramme, à titre d'exemple sous forme de réseau de courbes en abaque, ci-après « abaque », permettant une information plus riche en matière de scénarios limites. Pour un scénario 8 donné (défini par les valeurs cibles des conditions 110 prévisionnelles d'utilisation pilotables et non pilotables), l'abaque construit représente graphiquement l'ensemble des utilisations limites compatibles avec le zéro-panne jusqu'à l'échéance de la prochaine maintenance 7 prévisionnelle, à savoir l'ensemble des n-uplets des valeurs des conditions 110 prévisionnelles d'utilisation pilotables, chaque n-uplet indiquant, pour la valeur de (n-1) conditions 110 prévisionnelles d'utilisation pilotables données, la limite 18 maximale de la énième condition 110 prévisionnelle d'utilisation pilotable compatible avec le zéro-panne jusqu'à l'échéance de la prochaine maintenance 7 prévisionnelle (les conditions 110 prévisionnelles d'utilisation non pilotables du scénario 8 étant verrouillées à leur valeur respective).Par exemple, on considère le cas susmentionné du moteur de camion, avec pour scénario 8 entre la maintenance 6 à réaliser et la maintenance 7 prévisionnelle suivante, le scénario défini par les conditions 110 prévisionnelles d'utilisation suivantes :
- conditions 110 prévisionnelles d'utilisation pilotables : charge moyenne à transporter de 2T, distance à parcourir de100,000km, vitesse moyenne de 90km/h ;
- conditions 110 prévisionnelles d'utilisation non pilotables : température de l'air ambiant de 20°C, pente moyenne des routes utilisées de 5%.

Dans ce cas et avec une représentation graphique du kilométrage à parcourir en fonction de la charge moyenne à transporter, l'abaque est un réseau de courbes, chacune associée à une vitesse moyenne donnée entre les deux maintenances successives. Chaque courbe isovitesse est l'ensemble des triplets des valeurs des trois conditions 110 prévisionnelles d'utilisation pilotables (charge moyenne à transporter; distance à parcourir ; vitesse moyenne), chaque triplet définissant une utilisation limite compatible avec le zéro-panne jusqu'à l'échéance de la maintenance 7 prévisionnelle (les conditions 110 prévisionnelles d'utilisation non pilotables du scénario 8 - la température de l'air ambiant et la pente moyenne des routes utilisées - étant verrouillées à leur valeur respective 20°C et 5%).Ainsi, la courbe associée à la vitesse moyenne de 95 km/h permet de déduire, pour une valeur donnée de la charge moyenne à transporter (par exemple 2,3T), la valeur de la limite 18 maximale de la distance à parcourir (101,000km dans cet exemple) jusqu'à la prochaine maintenance 7 prévisionnelle, soit donc la valeur maximale possible compatible avec le zéro-panne jusqu'à l'échéance de la maintenance 7 prévisionnelle (les conditions 110 prévisionnelles d'utilisation non pilotables - température de l'air ambiant et pente moyenne des routes utilisées - étant verrouillées à leur valeur respective du scénario 8 cible (20°C et 5%)).Pour ce faire, pour construire la courbe associée à une valeur donnée d'une condition 110 prévisionnelle d'utilisation pilotable, l'invention calcule, par méthode itérative et grâce à la simulation permise par le modèle 16, la limite 18 maximale d'une condition 110 prévisionnelle d'utilisation pilotable, à respecter entre la maintenance 6 à réaliser et la maintenance 7 prévisionnelle et ce, pour différentes valeurs du reste des conditions 110 prévisionnelles d'utilisation pilotables (avec les conditions 110 prévisionnelles d'utilisation non pilotables toujours verrouillées à leur valeur respective du scénario 8 cible).Dans l'exemple susmentionné du moteur de camion, les conditions 110 d'utilisation prévisionnelles pilotables sont au nombre de trois. L'abaque représente un réseau de courbes, chacune étant associée à une valeur d'une première condition 110 prévisionnelle pilotable (par exemple, la vitesse moyenne).

Pour construire la courbe associée à une valeur de ladite première condition 110 prévisionnelle pilotable (par exemple, la vitesse moyenne de 100km/h), on calcule, grâce à la simulation par le modèle 16, la limite 18 maximale d'une deuxième condition 110 prévisionnelle pilotable (par exemple le kilométrage à parcourir), pour différentes valeurs d'une troisième condition 110 prévisionnelle (dans cet exemple la charge moyenne à transporter) et ce, avec les conditions 110 prévisionnelles d'utilisation non pilotables (température de l'air ambiant et pente moyenne des routes utilisées) toujours verrouillées à leur valeur respective du scénario 8 cible (i.e. dans cet exemple respectivement 20°C et 5%). Ainsi, par exemple, l'abaque désigne le triplet (2,3T ; 101,000km ; 95km/h) comme une des utilisations limites possibles. Dans la figure 11, on considère l'exemple susmentionné de l'équipement 2 de type moteur de camion pour lequel les conditions 110 d'utilisation sont la charge à transporter P, le kilométrage à parcourir d, la vitesse moyenne V, la température d'air ambiant T° et la pente moyenne des routes utilisées A. On suppose en outre dans la figure 11 que l'état 130 prévisionnel est défini par l'indicateur 120 d'état matériel correspondant à la pression de compression moyenne des cylindres U, avec comme valeur minimale requise pour le bon fonctionnement de l'équipement 2 la valeur Uₘᵢₙ de l'état 17 minimal. La figure 11 montre un exemple d'utilisation d'une telle représentation en abaque, pour l'équipement 2, associé à ses historiques 9 et 11 fixés, pour une décision de maintenance donnée au titre de la maintenance 6 à réaliser, pour un scénario 8 d'utilisation sur la période 70 prévisionnelle, défini par les valeurs moyennes cibles respectives (Pc,dc,Vc,T°c,Ac) des conditions 110 d'utilisation pilotables (P,d,V) et non pilotables (T°, A) (Pc=2T ; dc=100,000km ; Vc=90km/h ; T°c=20°C ; Ac =5% pour rappel dans l'exemple susmentionné).

Sur la figure 11, l'abaque visible est un réseau de trois courbes, dans une représentation graphique du kilométrage à parcourir (d) en fonction de la charge moyenne à transporter (P). Les courbes visibles sont associées à trois vitesses moyennes données entre les deux maintenances successives (90,95,100 km/h).Pour deux valeurs moyennes cibles souhaitées (Pc=2,3T ; Vc=95km/h) pour les conditions 110 d'utilisation pilotables P et V, l'abaque, tel que calculé par le modèle 16, indique la valeur de la limite 18 maximale (dlim=101,000km) pour la dernière condition 110 d'utilisation pilotable (d).Ainsi le scénario d'utilisation, défini par les trois valeurs moyennes cibles souhaitées (Pc=2,3T, dlim=101,000km et Vc=95km/h) pour les conditions 110 prévisionnelles d'utilisation pilotables et les deux valeurs cibles (T°c=20°C et Ac =5%) pour les deux conditions 110 prévisionnelles d'utilisation non pilotables, correspond à un scénario limite compatible avec le zéro-panne souhaité jusqu'à la fin de la période 70 prévisionnelle, c'est-à-dire compatible avec un état 130 prévisionnel de l'équipement 2 en fin de période 70 prévisionnelle correspondant à l'état 17 minimal requis de bon fonctionnement (U = Umin).

Selon un mode de réalisation, une fois la maintenance 6 réalisée et au cours de la période 70 prévisionnelle, l'invention réactualise, à tout instant, l'état 130 prévisionnel de l'équipement 2 tel qu'il sera en fin de la période 70 prévisionnelle, soit à la veille de la prochaine maintenance 7 prévisionnelle. En d'autres termes, à un instant donné, au cours de la période 70 prévisionnelle, où le scénario 8 de l'équipement 2 est en cours d'exécution, on détermine si, compte tenu de l'utilisation qui a été réellement faite de l'équipement 2 depuis le début de la période 70 prévisionnelle, ledit équipement 2 garde, à l'instant considéré, le potentiel suffisant pour un zéro-panne en fonctionnement, dans le cadre du reste à venir dudit scénario 8, au cours du reste à venir et jusqu'à la fin de la période 70 prévisionnelle, soit jusqu'à la veille de la prochaine maintenance 7 prévisionnelle suivant la maintenance 6 à réaliser. Or, l'invention prévoit déjà de sélectionner, à la veille de la maintenance 6 à réaliser, la décision optimale de maintenance parmi des décisions suffisantes de maintenance, lesquelles permettent l'état 130 prévisionnel en fin de période 70 prévisionnelle (et compte tenu d'un scénario 8) compatible avec le fonctionnement de l'équipement 2. L'invention prévoit cependant de réactualiser, à tout instant au cours de la période 70 prévisionnelle, l'état 130 prévisionnel tel qu'il sera en fin de période 70 prévisionnelle, car on considère que cette réactualisation est potentiellement nécessaire.

En effet, l'utilisation réellement faite de l'équipement 2, lors de la partie écoulée de la période 70 prévisionnelle de fonctionnement entre son début et l'instant considéré, a pu différer avec l'utilisation prévue du scénario 8.

D'autre part, lors de la partie écoulée de la période 70 prévisionnelle, l'équipement 2 a pu faire l'objet de transitoires anormaux de fonctionnement, notamment d'incursions dans le domaine proche de la destruction, ou encore d'incursions dans le domaine intermédiaire audit domaine proche de la destruction et au domaine du fonctionnement normal. Or, l'invention prend le parti pris que le vieillissement et donc le comportement futur de l'équipement sont impactés par le cumul de ces transitoires anormaux. L'invention prévoit donc de réactualiser, en fonctionnement, l'état 130 prévisionnel tel qu'il sera en fin de période 70 prévisionnelle, avec le cumul des éventuels transitoires anormaux survenus depuis le début de la période 70 prévisionnelle de fonctionnement jusqu'à l'instant. De même, si l'invention prévoit, à la veille de la maintenance 6 à réaliser, de déterminer la décision optimale pour la maintenance 6 à réaliser ainsi que l'utilisation limite associée (à savoir l'utilisation maximale possible à respecter en fonctionnement, à l'issue de ladite maintenance 6 à réaliser, pour un zéro-panne jusqu'à l'échéance de prochaine maintenance 7 prévisionnelle), l'invention prévoit la réactualisation en fonctionnement de cette utilisation limite, comme étant potentiellement nécessaire.

En effet, l'utilisation limite de l'équipement 2 est de nature à se contracter, en fonctionnement, du fait d'une utilisation réellement faite de l'équipement 2 (et plus contraignante pour l'équipement 2 que le scénario 8 initialement prévu), lors de la partie écoulée de la période 70 prévisionnelle, et du fait des éventuels transitoires anormaux de fonctionnement.

En réactualisant en fonctionnement l'utilisation limite compatible avec le zéro-panne jusqu'à la prochaine maintenance 7 prévisionnelle, l'invention prévoit de permettre à l'utilisateur d'ainsi identifier les limites 18 maximales jusqu'auxquelles il peut pousser l'utilisation de l'équipement sans compromettre pour autant le zéro-panne ou dans lesquelles il doit restreindre l'utilisation initialement envisagée pour bénéficier du zéro-panne. Par exemple, on considère le cas susmentionné du moteur de camion, où a été adoptée la décision D6 de maintenance 6 à réaliser (à savoir le remplacement du filtre à gasoil et de la pompe à injection), et où, au terme de la moitié de la période 70 prévisionnelle, il s'avère que la charge moyenne transportée respecte bien la valeur cible de 2T, que le kilométrage parcouru (50,000km) respecte bien le prorata de la valeur cible des 100,000km en fin de la période 70 prévisionnelle, mais que la vitesse moyenne a été de 105km/h, excédant et la valeur cible de 90km/h du scénario 8 et la valeur de la limite 18 maximale de 100km/h.

Dans ces conditions (et outre les éventuels transitoires anormaux au cours de la partie écoulée de la période 70 prévisionnelle), poursuivre l'exploitation du camion dans le cadre du scénario 8 initial avec ses valeurs cibles (2T,100,000km,90km/h) ne sera pas compatible avec le zéro-panne jusqu'à l'échéance de la prochaine maintenance 7 prévisionnelle cible : il convient donc de réactualiser le calcul des limites 18 maximales des différentes conditions 110 prévisionnelles d'utilisation, que l'exploitant devra respecter pour bénéficier du zéro-panne jusqu'en fin de la période 70 prévisionnelle. Pour ce faire, postérieurement à ladite maintenance 6 une fois réalisée, on soumet audit modèle 16 des valeurs actualisées. Ces valeurs correspondent, d'une part, à au moins une des tâches 90 de l'historique 9 de fabrication et de maintenance, comme précédemment, et d'autre part à au moins une tâche 90 de la maintenance 6 réalisée.

Ces valeurs correspondent aussi à au moins une des conditions 110 d'utilisation de l'historique 11 d'utilisation depuis ladite maintenance 6 réalisée. Ces valeurs correspondent aussi aux conditions 110 prévisionnelles d'utilisation du scénario 8.

Dès lors, à partir de ces valeurs, ledit modèle 16 réactualise l'état 130 prévisionnel dudit équipement 2. De surcroît, ledit état 130 prévisionnel est comparé à l'état 17 minimal identifié comme requis pour le fonctionnement dudit équipement 2.En somme, selon un mode de réalisation, postérieurement à ladite maintenance 6 une fois réalisée, on soumet audit modèle 16 des valeurs
- d'une part, d'au moins une des tâches 90 de l'historique 9 de fabrication et de maintenance, d'au moins une tâche 90 de la maintenance 6 réalisée
   et d'au moins une des conditions 110 d'utilisation de l'historique 11 d'utilisation depuis ladite maintenance 6 réalisée
- d'autre part, desdites conditions 11 prévisionnelles d'utilisation du scénario 8,
ledit modèle 16 réactualisant l'état 130 prévisionnel dudit équipement 2, ledit état 130 prévisionnel étant comparé à un état 17 minimal identifié comme requis pour le fonctionnement dudit équipement 2.En d'autres termes, à un instant donné au cours de la prochaine période 70 prévisionnelle, on réactualise la prédiction de l'état 130 prévisionnel de l'équipement 2 pour ce qu'il sera à la fin de la période 70 prévisionnelle, soit à la veille de la maintenance 7 prévisionnelle. Pour ce faire, et parce qu'à l'instant considéré, la maintenance 6 a été réalisée et l'équipement 2 est en fonctionnement, on utilise ledit modèle 16 comme simulateur individualisé à l'équipement 2, en adaptant les arguments soumis en entrée du modèle 16, à savoir :
- l'historique 9 de fabrication et de maintenance de l'équipement 2 ;
- les tâches 90 exécutées au titre de la maintenance 6 ;
- l'historique 11 d'utilisation jusqu'à l'instant considéré, suivi de l'utilisation au cours de la partie écoulée de la période 70 prévisionnelle de fonctionnement jusqu'à l'instant considéré ;
- l'utilisation de l'équipement 2 prévue dans le reste du scénario 8, à partir dudit instant et pour le reste à venir de la période 70 prévisionnelle de fonctionnement jusqu'à la veille de la prochaine maintenance 7 prévisionnelle. Cette possibilité de pouvoir ainsi réactualiser l'état 130 prévisionnel de l'équipement 2, tel qu'il sera en fin de la période 70 prévisionnelle de fonctionnement après l'exécution à venir de l'intégralité du scénario 8 (compte tenu des tâches 90 réellement exécutées pour la maintenance 6 et compte tenu de l'utilisation réellement faite de l'installation 3 et de l'équipement 2 depuis le début de la période 70 prévisionnelle de fonctionnement jusqu'à l'instant considéré) permet donc les différentes applications du modèle 16 telles que l'invention les prévoit à la veille de la maintenance 6 à réaliser.

En particulier, l'utilisation du modèle 16 permet de déterminer, à tout moment au cours de la période 70 prévisionnelle, si la poursuite du scénario 8 reste compatible avec le zéro-panne jusqu'à la fin de la période 70 prévisionnelle, en comparant ledit état 130 prévisionnel à l'état 17 minimal requis pour le fonctionnement de l'équipement 2.

En particulier, l'utilisation du modèle 16 permet de réactualiser, à tout instant au cours de la période 70 prévisionnelle, les limites 18 maximales de l'utilisation limite compatible avec le zéro-panne jusqu'à la prochaine maintenance 7 prévisionnelle, le polygone 181 limite, la marge d'utilisation avant panne (MUAP), ainsi que l'abaque de l'ensemble des scénarios limites : ce qui permet à l'utilisateur d'identifier les limites jusqu'auxquelles il peut pousser l'utilisation de l'équipement 2 sans compromettre pour autant le zéro-panne ou dans lesquelles il doit restreindre l'utilisation initialement envisagée pour bénéficier du zéro-panne. L'invention réactualise, à un instant donné au cours de la période 70 prévisionnelle, l'état 130 prévisionnel de l'équipement 2 tel qu'il sera en fin de ladite période 70 prévisionnelle et après l'exécution du scénario 8. De même, l'invention réactualise, à un instant donné au cours de la période 70 prévisionnelle, l'état 130 prévisionnel de l'équipement 2 tel qu'il sera en fin de la période 70 prévisionnelle et après l'exécution d'un scénario différent du scénario 8 d'utilisation initialement prévu, pour ce qui concerne la période entre ledit instant et la fin de la période 70 prévisionnelle.

Parmi les arguments à soumettre en entrée du modèle 16, au lieu de soumettre l'utilisation de l'équipement 2 prévue dans le cadre du scénario 8, à partir dudit instant et pour le reste à venir de la période 70 prévisionnelle de fonctionnement jusqu'à la veille de la maintenance 7 prévisionnelle, on soumet en effet au modèle 16 l'utilisation de l'équipement 2 dans le cadre du scénario imprévu, à partir dudit instant et pour le reste à venir de la période 70 prévisionnelle de fonctionnement jusqu'à la veille de la maintenance 7 prévisionnelle. De même, l'invention réactualise, à un instant donné au cours de la période 70 prévisionnelle, et en vue de l'exécution d'un scénario différent du scénario 8 d'utilisation initialement prévu, entre ledit instant et la fin de la période 70 prévisionnelle, les limites 18 maximales de l'utilisation limite compatible avec le zéro-panne jusqu'à la prochaine maintenance 7 prévisionnelle, le polygone 181 limite, la marge d'utilisation avant panne (MUAP) ainsi que l'abaque de l'ensemble des scénarios limites : ce qui permet à l'utilisateur d'identifier les limites jusqu'auxquelles il peut pousser l'utilisation de l'équipement sans compromettre pour autant le zéro-panne ou dans lesquelles il doit restreindre l'utilisation initialement envisagée pour bénéficier du zéro-panne et ce en vue de l'exécution d'un scénario différent du scénario 8 d'utilisation initialement prévu. Ainsi l'invention permet à l'exploitant de décider, au cours de la période 70 prévisionnelle, de l'utilisation qu'il peut ou doit faire de l'équipement 2, pour garder cette utilisation compatible avec l'exigence de zéro-panne jusqu'à la prochaine échéance de maintenance, dans le cadre d'un scénario 8 initialement prévu comme dans le cadre d'un scénario imprévu, en remplacement du scénario 8 initialement prévu.

Avantageusement, la simulation par le modèle 16 permet en outre de déterminer, de proche en proche, les décisions suffisantes de maintenance pour les maintenances 7 prévisionnelles successives dans la vie de l'équipement 2, compte tenu de l'utilisation cible (à savoir les scénarios 8 successifs) souhaitée par l'exploitant sur le court terme, comme sur le long terme. Le système 1 permet ainsi de déterminer à tout moment les différents programmes possibles de maintenance suffisante, tout au long de la durée de vie de l'équipement 2, pour un profil d'utilisation souhaité. Pour ce faire, selon un mode de réalisation, on effectue au moins les étapes suivantes.

En premier lieu, on suppose réalisée au moins ladite décision suffisante de la maintenance 6 à réaliser et on suppose exécuté le scénario 8 jusqu'à la maintenance 7 prévisionnelle qui suit ladite maintenance 6 à réaliser.

Ensuite, on effectue au moins une variation d'au moins une des valeurs des tâches 90 de ladite maintenance 7 prévisionnelle. Lorsqu'on soumet les valeurs audit modèle 16, on introduit les valeurs de ladite variation ainsi que les valeurs du scénario 81 suivant prévu pour la période 710 prévisionnelle suivante (i.e. la période de fonctionnement comprise entre ladite maintenance 7 prévisionnelle et la maintenance 71 prévisionnelle suivante).

Parmi toutes les variations, on sélectionne au moins une décision suffisante de ladite maintenance 7 prévisionnelle, pour l'état 130 prévisionnel dudit équipement 2 supérieur ou équivalent à l'état 17 minimal, au moment de la maintenance 71 prévisionnelle suivant ladite maintenance 7 prévisionnelle.

Une fois cette décision suffisante sélectionnée, on réitère lesdites étapes pour toute autre maintenance prévisionnelle suivante dans la vie de l'équipement. En somme, on détermine, de manière récurrente, une suite de décisions suffisantes de maintenance concernant les maintenances 70 prévisionnelles ultérieures à la maintenance 6 à réaliser, une fois définies les décisions suffisantes de maintenance au titre de la maintenance 6 à réaliser. En effet, à la veille de la maintenance 6 à réaliser (compte tenu d'une décision de maintenance déterminée comme suffisante pour la maintenance 6 à réaliser et supposée exécutée, compte tenu du scénario 8 supposé exécuté), le modèle 16 permet de déterminer les décisions de maintenance suffisantes au titre de la prochaine maintenance 7 prévisionnelle qui suivra la maintenance 6 à réaliser. En ce sens, le modèle 16 permet une récurrence, pour déterminer de proche en proche, d'une maintenance 7 prévisionnelle à la suivante, les décisions suffisantes de maintenance.

Pour cela et de même que précédemment, pour chacune des décisions possibles de maintenance pour la maintenance 7 prévisionnelle qui suit la maintenance 6 à réaliser, on simule l'état 130 prévisionnel de l'équipement 2 pour ce qu'il sera à la fin de la période 710 prévisionnelle suivante, à l'issue d'un scénario 81 suivant, c'est-à-dire à la veille de la maintenance 71 prévisionnelle suivante (i.e. qui suit la maintenance 7 prévisionnelle considérée). Pour ce faire et compte tenu de ces hypothèses, on utilise ledit modèle 16 comme simulateur individualisé à l'équipement 2 en adaptant les arguments soumis en entrée du modèle 16, à savoir :
- l'historique 9 de fabrication et de maintenance de l'équipement 2 (jusqu'à la veille de la maintenance 6 à réaliser), modifié des tâches 90 supposées réalisées au titre de la maintenance 6 à réaliser ;
- les tâches 90 de la décision possible de maintenance considérée au titre de la maintenance 7 prévisionnelle ;
- l'historique 11 d'utilisation (jusqu'à la veille de la maintenance 6 à réaliser), suivi du scénario 8 supposé exécuté au cours de la période 70 prévisionnelle ;
- le scénario 81 suivant de l'équipement 2 (au cours de la période 710 prévisionnelle suivante et jusqu'à la veille de la maintenance 71 prévisionnelle suivante).Si, comparé à l'état 17 minimal requis pour le fonctionnement de l'équipement 2, l'état 130 prévisionnel de l'équipement 2, ainsi simulé par le modèle 16 pour l'instant correspondant à la fin de la période 710 prévisionnelle suivante (i.e. à la veille de la maintenance 71 prévisionnelle suivante), satisfait le critère de fonctionnement de l'équipement 2, la décision de maintenance au titre de la maintenance 7 prévisionnelle qui suit la maintenance 6 à réaliser peut alors être considérée comme suffisante pour donner à l'équipement 2 le potentiel suffisant pour un zéro-panne en fonctionnement dans le cadre du scénario 81 suivant, au cours et jusqu'à la fin de la période 710 prévisionnelle suivante. La récurrence est ainsi établie. En effet, d'une part à la veille de la maintenance 6 à réaliser (maintenance de rang j) (compte tenu d'une décision de maintenance déterminée comme suffisante pour la maintenance 6 à réaliser et supposée exécutée et compte tenu d'un scénario 8 supposé exécuté au cours de la période 70 prévisionnelle de fonctionnement qui suit), le modèle 16 a permis de déterminer les décisions de maintenance suffisantes pour la maintenance 7 prévisionnelle (maintenance de rang j+1), à savoir les décisions autorisant un zéro-panne pour un scénario 81 suivant, au cours et jusqu'en fin de la période 710 prévisionnelle suivante. D'autre part, l'invention permet de déterminer les décisions suffisantes pour la maintenance 6 à réaliser. La simulation par le modèle 16 permet donc bien de déterminer, par récurrence, de proche en proche, les suites de décisions suffisantes de maintenance pour toute maintenance 7 prévisionnelle et ce jusqu'au rang souhaité de maintenance 7 prévisionnelle dans la vie de l'équipement 2 (maintenance de rang j+n).Dans les figures 12 et 13, on considère l'équipement 2 associé à ses historiques 9 et 11, avec (sur la figure 12) un scénario 8 d'utilisation au cours de la période 70 prévisionnelle, suivi (sur la figure 13) d'un scénario 81 suivant au cours de la période 710 prévisionnelle suivante. Les figures 12 et 13 illustrent la simulation de proche en proche des états 130 prévisionnels de l'équipement 2 à la veille de chaque maintenance 7,71 prévisionnelle ainsi que la détermination par récurrence des décisions suffisantes de maintenance au titre desdites maintenances 7,71 prévisionnelles : le modèle 16 permettant de déterminer les décisions suffisantes de maintenance au titre d'une maintenance 6 à réaliser (de rang j), le modèle 16 permet alors de déterminer les décisions suffisantes de maintenance au titre de la maintenance 7 prévisionnelle suivante de rang j+1.Dans un premier temps, la figure 12 illustre que, pour une décision possible de maintenance au titre de la maintenance 6 à réaliser, le modèle 16 permet de prédire l'état 130 prévisionnel de l'équipement 2 en fin de la période 70 prévisionnelle : en particulier, le modèle 16 permet donc de déterminer si ladite décision possible est suffisante pour permettre le zéro-panne souhaité jusqu'en fin de la période 70 prévisionnelle (selon que l'état 130 prévisionnel de l'équipement 2 en fin de période 70 prévisionnelle est suffisant au regard de l'état 17 minimal). Le modèle 16 permet bien déterminer les décisions suffisantes de maintenance, parmi les décisions possibles de maintenance, au titre de la maintenance 6 à réaliser. Dans un deuxième temps, la figure 13 illustre que, pour une décision de maintenance identifiée comme suffisante au titre d'une maintenance de rang j (en l'occurrence au titre de la maintenance 6 supposée réalisée) et pour une décision possible de maintenance au titre de la maintenance suivante de rang j+1 (en l'occurrence au titre de la maintenance 7 prévisionnelle suivante), le modèle 16 permet de prédire l'état 130 prévisionnel de l'équipement 2 en fin de la période 710 prévisionnelle suivante : le modèle 16 permet donc de déterminer si cette dernière décision possible est suffisante pour permettre le zéro-panne souhaité jusqu'en fin de la période 710 prévisionnelle suivante (selon que l'état 130 prévisionnel de l'équipement 2 en fin de période 710 prévisionnelle suivante est suffisant au regard de l'état 17 minimal). La figure 13 illustre ainsi que, pour une décision de maintenance identifiée comme suffisante au titre d'une maintenance de rang j, le modèle 16 permet de déterminer les décisions suffisantes de maintenance, parmi les décisions possibles de maintenance, au titre de la maintenance suivante de rang j+1.

Comme visible sur les figures 12 et 13, le système 1 permet ainsi la détermination, par récurrence, des décisions suffisantes de maintenance, d'une maintenance à l'autre dans la vie de l'équipement 2, à savoir de proche en proche, d'une maintenance de rang k à une maintenance de rang k+1.En particulier, les figures 12 et 13 montrent comment le modèle 16 est utilisé d'une part pour déterminer les états 130 prévisionnels de l'équipement 2 au cours de la période 70 prévisionnelle et d'autre part pour déterminer les états 130 prévisionnels de l'équipement 2 au cours de la période 710 prévisionnelle suivante. Les figures 12 et 13 illustrent en effet la construction des arguments d'entrée du modèle 16 dans les deux cas. En particulier, la simulation de proche en proche des états 130 prévisionnels à la veille de chaque maintenance 7 prévisionnelle tient au fait que l'on intègre, dans les simulations des états 130 prévisionnels pour la période 710 prévisionnelle suivante à l'issue de la maintenance de rang j+1 (comme visible sur la figure 13), la décision de maintenance que les simulations ont permis d'identifier comme suffisante au titre de la maintenance de rang j (comme visible sur la figure 12).De même, l'invention détermine, de proche en proche, les états 130 prévisionnels successifs de l'équipement 2 au cours des deux périodes 70,710 prévisionnelles. Pour cela, on considère, d'une part deux décisions de maintenance respectivement au titre de la maintenance 6 à réaliser (maintenance de rang j) et au titre de la maintenance 7 prévisionnelle (maintenance de rang j+1) et, d'autre part deux scénarios 8,81 d'utilisation pour chacune desdites périodes 70,710 prévisionnelles. A ce titre, la figure 14 représente un exemple de deux courbes de l'état 130 prévisionnel l'équipement 2 de type pompe (réduit dans cet exemple à son indicateur 120 matériel « débit Q »).

Le modèle 16 permet de prédire l'état 130 prévisionnel de la pompe, pour les différents instants de la période 70 prévisionnelle (de la maintenance de rang j à la maintenance de rang j+1) puis pour les différents instants de la période 710 prévisionnelle suivante (de la maintenance de rang j+1 à la maintenance de rang j+2). En particulier, la simulation du modèle 16 met en évidence qu'il sera nécessaire d'intervenir sur la pompe à la maintenance de rang j+1 pour bénéficier du zéro-panne souhaité (à défaut, la pompe ferait l'objet d'une panne avant la maintenance de rang j+2, comme visible par la prolongation en pointillés de la courbe).

La figure 14 met notamment en évidence un décrochage du débit de part et d'autre de la maintenance de rang j+1, du fait d'une décision de maintenance réalisée sur la pompe (à l'échéance de ladite maintenance de rang j+1). Cette décision de maintenance au rang j+1 est en outre suffisante car elle permet un débit suffisant jusqu'à la veille de la maintenance de rang j+2.De même et de façon plus générale, l'invention détermine de proche en proche les états 130 prévisionnels successifs de l'équipement 2 tel qu'ils seront au cours d'autant de périodes 70,710 prévisionnelles successives que l'on souhaite considérer dans la vie de l'équipement 2. Pour cela, on considère, d'une part une suite de décisions de maintenance respectivement au titre de la maintenance 6 à réaliser (maintenance de rang j) puis au titre des différentes maintenances 7,71 prévisionnelles précédant les périodes 70,710 prévisionnelles considérées (maintenances de rang j+1 à j+k) et, d'autre part une suite de scénarios 8,81 d'utilisation pour chacune des périodes 70,710 prévisionnelles considérées. A ce titre, la figure 15 représente un exemple de deux courbes globales de l'état 130 prévisionnel l'équipement 2 de type pompe (réduit dans cet exemple à son indicateur 120 matériel « débit Q»).

Le modèle 16 permet de prédire l'état 130 prévisionnel de la pompe pour les différents instants de la période entre la maintenance de rang j et la maintenance de rang j+k et pour les différents instants de la période entre la maintenance de rang j+k et la maintenance de rang j+n. Ces courbes résultent de la prédiction, grâce à la simulation du modèle 16, des états 130 prévisionnels successifs de la pompe pour chaque période de fonctionnement entre deux maintenances successives (intervalles délimités par les pointillés verticaux sur la figure 15).

Est ainsi mis en évidence qu'il sera nécessaire d'intervenir sur la pompe à la maintenance de rang j+k pour bénéficier du zéro-panne souhaité sur chaque période de fonctionnement entre la maintenance de rang j et la maintenance de rang j+n. De même, la figure 15 met notamment en évidence un décrochage du débit de part et d'autre de la maintenance de rang j+k, du fait d'une décision de maintenance réalisée sur la pompe (à l'échéance de ladite maintenance de rang j+k).

L'invention permet ainsi de déterminer l'état 130 prévisionnel de l'équipement 2 tel qu'il sera à tout instant au cours de toute période 710 prévisionnelle suivante dans la vie de l'équipement 2 (dans le cadre d'un scénario 81 suivant donné et compte tenu d'une décision de maintenance déterminée comme suffisante pour la maintenance 7 prévisionnelle).

Grâce à cette capacité de prédiction, et de même que précédemment, l'invention permet d'identifier, pour chaque période 710 prévisionnelle suivante dans la vie de l'équipement 2, les limites jusqu'auxquelles on pourra pousser l'utilisation de l'équipement sans compromettre pour autant le zéro-panne souhaité ou dans lesquelles on devra restreindre l'utilisation initialement envisagée pour bénéficier du zéro-panne.

En effet, pour chaque période 710 prévisionnelle suivante dans la vie de l'équipement 2 (à l'issue d'un scénario 81 suivant donné et compte tenu d'une décision de maintenance déterminée comme suffisante pour la maintenance 7 prévisionnelle correspondante), l'invention :
- détermine, de même que précédemment, les limites 18 maximales des conditions 110 prévisionnelles d'utilisation pilotables ;
- borne ainsi l'utilisation limite compatible avec le zéro-panne lors du scénario 81 suivant au cours de ladite période 710 prévisionnelle suivante et ce, jusqu'à la veille de la maintenance 71 prévisionnelle suivante ;
- ces limites 18 maximales des conditions 110 prévisionnelles d'utilisation étant ainsi calculées, quantifie, de même que précédemment et préférentiellement, l'adéquation de ladite décision suffisante de maintenance (concernant les tâches 90 pour ladite maintenance 7 prévisionnelle) au scénario 81 suivant, au moyen de la marge d'utilisation avant panne (MUAP) ou au moyen de l'écart 182 entre valeur cible du scénario 81 suivant et limite 18 maximale pour au moins une condition 110 prévisionnelle d'utilisation pilotable dudit scénario 81 suivant ;
- construit, de même que précédemment, l'abaque indiquant l'ensemble des scénarios limites valables pour ladite période 710 prévisionnelle suivante. Ainsi, la simulation par le modèle 16 permet de déterminer, par récurrence, de proche en proche, les suites de décisions suffisantes de maintenance pour toute maintenance 7 prévisionnelle et ce jusqu'au rang souhaité de maintenance 7 prévisionnelle. En outre, pour chacune des périodes 710 prévisionnelles suivantes, la simulation permise par le modèle 16 permet de déterminer, pour chacune desdites décisions suffisantes de maintenance, les limites 18 maximales pour chaque condition 110 prévisionnelle d'utilisation pilotable du scénario 81 correspondant, le polygone 181 limite, la marge d'utilisation avant panne (MUAP), l'abaque des scénario limites.

Selon un mode de réalisation, on sélectionne ladite décision optimale parmi au moins ladite décision suffisante pour les maintenances correspondantes. En d'autres termes, pour chaque étape de maintenance 7 prévisionnelle dans la vie de l'équipement 2, on sélectionne, de même que précédemment pour la maintenance 6 à réaliser, la décision optimale de maintenance, parmi les décisions de maintenance ayant été déterminées comme suffisantes. On sélectionne ladite décision optimale, préférentiellement au regard de la marge d'utilisation avant panne (MUAP) permise par chaque décision suffisante de maintenance considérée, ou au regard d'au moins un écart 182 entre la valeur cible du scénario 8 et la valeur de la limite 18 maximale pour au moins une des conditions 110 prévisionnelles d'utilisation dudit scénario 8.

Ainsi, l'invention prévoit-elle d'optimiser chacune des maintenances 7 prévisionnelles dans la vie de l'équipement 2, en déterminant la décision optimale de maintenance, pour chaque étape de maintenance dans la vie de l'équipement 2 et compte tenu des scénarios 8 successifs dans la vie de l'équipement. Cette décision quant à la nature des tâches 90 pour la maintenance 7 prévisionnelle est individualisée à l'historique complet de l'équipement, est adaptée au scénario 8 pour permettre le zéro-panne jusqu'en fin de la période 70 prévisionnelle et permet la marge d'utilisation avant panne (MUAP) souhaitée par l'exploitant. En d'autres termes, l'invention détermine par récurrence la suite des décisions optimales de maintenance pour chacune des maintenances 7 prévisionnelles dans le reste à venir de la vie de l'équipement 2.Par ailleurs et pour chacune des périodes 70 prévisionnelles dans la vie de l'équipement 2, l'invention détermine les limites 18 maximales (pour chaque condition 110 prévisionnelle d'utilisation pilotable du scénario 8 correspondant), le polygone 181 limite, la marge d'utilisation avant panne (MUAP), l'abaque des scénario limites et ce, compte tenu des décisions de maintenance identifiées comme optimales. Pour chacune des périodes 70 prévisionnelles dans la vie de l'équipement 2, l'invention permet ainsi d'identifier les limites jusqu'auxquelles on pourra pousser l'utilisation de l'équipement sans compromettre pour autant le zéro-panne ou dans lesquelles on devra restreindre l'utilisation initialement envisagée pour bénéficier du zéro-panne. En d'autres termes, l'invention détermine par récurrence la suite des utilisations limites de l'équipement 2 pour chacune des périodes 70 prévisionnelles dans le reste à venir de la vie dudit équipement 2.

Comme vu précédemment, pour la maintenance 6 à réaliser, le modèle 16 permet de discriminer entre décision suffisante de maintenance et décision insuffisante de maintenance. Dans le cas d'une décision suffisante de maintenance, la décision de maintenance est adaptée au scénario 8 d'utilisation en ce qu'elle est suffisante pour permettre un zéro-panne jusqu'à la fin de la période 70 prévisionnelle. Dans le cas d'une décision de maintenance déterminée comme insuffisante, le fonctionnement de l'équipement 2 dans le cadre du scénario 8 d'utilisation conduit à la panne de l'équipement 2 avant la fin de la période 70 prévisionnelle. Dans ce dernier cas, le calcul de l'échéance 19 de panne est alors fondé. Ainsi, selon un mode de réalisation, quand une décision de maintenance est insuffisante avec un état 130 prévisionnel (au cours de la période 70 prévisionnelle) inférieur audit état 17 minimal, on détermine alors l'échéance 19 de panne pour ladite décision insuffisante de maintenance.

L'échéance 19 de panne correspond à l'instant où l'état 130 prévisionnel est équivalent à l'état 17 minimal. La simulation par le modèle 16 permet de déterminer cette échéance 19 de panne. Pour ce faire, et pour une décision insuffisante de maintenance donnée concernant la maintenance 6 à réaliser, pour la période 70 prévisionnelle et son scénario 8, on procède de la façon suivante. On considère un instant donné au cours de la période 70 prévisionnelle et le scénario 80 partiel du scénario 8 et correspondant audit instant. On utilise le modèle 16 comme simulateur individualisé à l'équipement 2, en adaptant les arguments soumis en entrée du modèle 16, à savoir :
- l'historique 9 de fabrication et de maintenance de l'équipement 2 ;
- la décision insuffisante de maintenance considérée au titre de la maintenance 6 à réaliser ;
- l'historique 11 d'utilisation de l'équipement 2 ;
- l'utilisation de l'équipement 2 prévue dans le cadre du scénario 80 partiel défini jusqu'à l'instant considéré de la période 70 prévisionnelle. On utilise alors le modèle 16 pour résoudre, par rapport audit instant, l'équation dans laquelle l'état 130 prévisionnel de l'équipement 2 audit instant correspond à l'état 17 minimal. Pour la décision insuffisante de maintenance considérée et pour le scénario 8, on détermine l'échéance 19 de panne comme étant la solution de ladite équation.

Pour une décision insuffisante de maintenance, envisagée au titre de la maintenance 6 à réaliser, on détermine ainsi l'échéance 19 de panne de l'équipement 2. On peut procéder de même pour déterminer, au cours de la période 710 prévisionnelle suivante, l'échéance 19 de panne, associée à une décision insuffisante de maintenance au titre d'une maintenance 7 prévisionnelle et associée au scénario 81 suivant. La figure 16 considère l'équipement 2 de type pompe, associé à ses historiques 9 et 11, un scénario 8 au cours de la période 70 prévisionnelle (comprise entre la maintenance 6 à réaliser (de rang j) et la maintenance 7 prévisionnelle suivante (de rang j+1)), un scénario 80 partiel du scénario 8 et associé à un instant, ainsi qu'une décision insuffisante de maintenance considérée au titre de la maintenance 6 à réaliser. La figure 16 représente la courbe de l'état 130 prévisionnel de la pompe (réduit dans cet exemple à son indicateur 120 matériel « débit Q ») que le modèle 16 permet de prédire pour les différents instants de la période 70 prévisionnelle.

La courbe de l'état 130 prévisionnel dans le temps est décroissante du fait du vieillissement, jusqu'à atteindre un état 130 prévisionnel équivalent à l'état 17 minimal avant l'échéance de la maintenance 7 prévisionnelle. Dans le cas illustré, la décision possible de maintenance est bien une décision insuffisante : elle ne permet pas un état 130 prévisionnel supérieur à l'état 17 minimal jusqu'à la fin de la période 70 prévisionnelle. L'intercept de la courbe avec l'état 17 minimal correspond à l'échéance 19 de panne de la pompe.

Selon un mode de réalisation, pour la maintenance 6 à réaliser sans décision de maintenance identifiée comme suffisante, et pour au moins une décision insuffisante donnée de ladite maintenance 6 à réaliser, on détermine l'échéance de fin de durée de vie de l'équipement 2 comme étant ladite échéance 19 de panne associée à ladite décision de maintenance. En d'autres termes, dans le cas où, pour une maintenance 6 à réaliser, toutes les décisions possibles de maintenance s'avèrent insuffisantes (pour permettre un zéro-panne au cours et jusqu'à la fin de la période 70 prévisionnelle, dans le cadre du scénario 8), l'équipement 2 est alors en fin de vie et la maintenance 6 à réaliser correspond à la dernière maintenance dans la vie de l'équipement 2.Lorsque la maintenance 6 à réaliser est ainsi identifiée comme dernière maintenance dans la vie de l'équipement 2 et pour une décision de maintenance donnée, on détermine alors l'échéance de fin de durée de vie de l'équipement 2 comme étant l'échéance 19 de panne associée à ladite décision de maintenance.

Lorsqu'une maintenance 7 prévisionnelle est identifiée comme dernière maintenance dans la vie de l'équipement 2, on procède de même pour déterminer l'échéance de fin de durée de vie de l'équipement 2 associée à une décision de maintenance donnée et au scénario 81 suivant.

Selon un mode de réalisation et pour la maintenance 6 à réaliser (ou pour la maintenance 7 prévisionnelle) identifiée comme dernière maintenance dans la vie de l'équipement 2, on sélectionne parmi les décisions possibles de maintenance, celle qui optimise toute combinaison entre ladite échéance 19 de panne, une marge de dernière utilisation (MDU) et les contraintes des tâches 90 de ladite décision de dernière maintenance.

En d'autres termes, pour la maintenance 6 à réaliser, identifiée comme dernière maintenance dans la vie de l'équipement 2, on considère l'ensemble des décisions possibles de maintenance. Pour chacune desdites décisions de maintenance, on considère la durée minimale de fonctionnement (D_{MIN}) souhaitée pour l'équipement 2 au cours de la période 70 prévisionnelle, à savoir la durée minimale de fonctionnement déterminée en fonction des contraintes des tâches 90 relatives à ladite décision de maintenance (i.e. en fonction de la nature et du volume desdites tâches 90).

Par exemple, on considère le cas d'un équipement 2 de type moteur de camion, pour lequel cinq décisions possibles de maintenance ont été identifiées au titre de la dernière maintenance dans la vie de l'équipement 2 et pour chacune desquelles la durée minimale de fonctionnement (D_{MIN}) souhaitée a été déterminée, à savoir :
- la décision E1 qui remplace le filtre à gazole (avec une durée minimale de fonctionnement D_{MIN} souhaitée égale à 3 jours) ;
- la décision E2 qui remplace injecteurs et filtre à gazole (avec une durée minimale de fonctionnement D_{MIN} souhaitée égale à 1,1 mois) ;
- la décision E3 qui remplace pompe d'injection et injecteurs (avec une durée minimale de fonctionnement D_{MIN} souhaitée égale à 2 mois) ;
- la décision E4 qui remplace la pompe d'injection, les injecteurs et le filtre à gazole (avec une durée minimale de fonctionnement D_{MIN} souhaitée égale à 2,1 mois) ;
- la décision E5 qui remplace la pompe d'injection, les injecteurs, le filtre à gazole et la segmentation des cylindres (avec une durée minimale de fonctionnement D_{MIN} souhaitée égale à 12 mois).Parmi les décisions possibles de maintenance, on sélectionne ensuite chaque décision selon que le prolongement de durée de vie (PDV) associé à ladite décision de maintenance (i.e. la durée comprise entre ladite dernière maintenance dans la vie de l'équipement 2 et l'échéance de fin de durée de vie de l'équipement 2) est compatible avec la durée minimale de fonctionnement (D_{MIN}) souhaitée compte tenu de ladite décision de maintenance (i.e. PDV > D_{MIN}).

Par exemple, on considère le cas susmentionné du moteur de camion avec ses cinq décisions possibles de maintenance identifiées au titre de la dernière maintenance à réaliser dans la vie du moteur, pour chacune desquelles ont été déterminées la durée minimale de fonctionnement (D_{MIN}) souhaitée ainsi que le prolongement de durée de vie (PDV), à savoir :
- la décision E1 qui remplace le filtre à gazole (avec comme durée minimale de fonctionnement D_{MIN} souhaitée de 3 jours et un prolongement PDV de 1 mois, les injecteurs étant alors le facteur limitant) ;
- la décision E2 qui remplace injecteurs et filtre à gazole (avec comme durée minimale de fonctionnement D_{MIN} souhaitée de 1,1 mois et un prolongement PDV de 1,5 mois, la pompe à injection étant alors le facteur limitant) ;
- la décision E3 qui remplace pompe d'injection et injecteurs (avec comme durée minimale de fonctionnement D_{MIN} souhaitée de 2 mois et un prolongement PDV de vie de 0,5 mois, le filtre à gazole étant alors le facteur limitant) ;
- la décision E4 qui remplace la pompe d'injection, les injecteurs et le filtre à gazole (avec comme durée minimale de fonctionnement D_{MIN} souhaitée de 2,1 mois et un prolongement PDV de 6 mois, la segmentation étant alors le facteur limitant) ;
- la décision E5 qui remplace la pompe d'injection, les injecteurs, le filtre à gazole et la segmentation des cylindres (avec comme durée minimale de fonctionnement D_{MIN} souhaitée de 12 mois et un prolongement PDV de 7 mois, le vilebrequin étant alors le facteur limitant).

La décision E3 ne permet pas un prolongement de durée de vie PDV (0,5 mois) compatible avec la durée minimale de fonctionnement D_{MIN} souhaitée (2 mois). Il en va de même pour la décision E5. Les décisions sélectionnées sont donc les décisions E1,E2 et E4, chacune permettant a contrario un prolongement de durée de vie PDV supérieur à la durée minimale de fonctionnement D_{MIN} souhaitée. Pour chaque décision possible de maintenance ainsi sélectionnée au titre de la dernière maintenance dans la vie de l'équipement 2, l'invention détermine, pour chaque condition 110 prévisionnelle d'utilisation pilotable du scénario 8 :
- la limite de dernière utilisation, définie comme limite maximum possible, compatible avec un zéro-panne au cours et jusqu'à la fin de la durée minimale de fonctionnement D_{MIN} souhaitée de l'équipement 2, après ladite maintenance à réaliser. L'invention calcule cette limite de dernière utilisation, de façon similaire aux limites 18 maximales. Lesdites limites de dernière utilisation bornent ainsi l'utilisation limite à respecter au cours de la période 70 prévisionnelle pour un zéro-panne jusqu'à la fin de la durée minimale D_{MIN} de fonctionnement souhaitée de l'équipement 2 ;
- l'écart 182, pour ladite condition 110 prévisionnelle d'utilisation pilotable, entre la valeur cible dans le scénario 8 et la valeur de la limite de dernière utilisation.

Pour chaque décision possible de maintenance sélectionnée, est ainsi déduite la marge de dernière utilisation (MDU) pour l'ensemble des conditions 110 prévisionnelles d'utilisation pilotables du scénario 8, comme étant la moyenne desdits écarts (i.e. de façon similaire au calcul de la marge d'utilisation avant panne (MUAP)).

Par exemple, on considère le cas susmentionné du moteur de camion, avec ses trois décisions possibles de maintenance (E1, E2 et E4) sélectionnées au titre de la dernière maintenance dans la vie de l'équipement et pour chacune desquelles la marge de dernière utilisation (MDU) a été calculée, à savoir :
- la décision E1 qui remplace le filtre à gazole (avec une marge MDU de 3%) ;
- la décision E2 qui remplace injecteurs et filtre à gazole (avec une marge MDU de 4%) ;
- la décision E4 qui remplace la pompe d'injection, les injecteurs et le filtre à gazole (avec une marge MDU de 12%).On détermine alors la décision optimale de dernière maintenance, parmi les décisions de dernière maintenance précédemment sélectionnées, comme étant de façon non limitative la décision de dernière maintenance :
- qui optimise le prolongement de durée de vie (PDV) ;
- ou encore qui optimise la marge de dernière utilisation (MDU) ;
- ou encore qui optimise le rendement de dernière maintenance (RDM) défini comme étant la différence entre ledit prolongement de durée de vie PDV et ladite durée minimale de fonctionnement D_{MIN}, ladite différence étant rapportée audit prolongement de durée de vie PDV (soit RDM = 1 - D_{MIN}/PDV) ;
- ou encore qui optimise tout autre critère, combinant, à la discrétion de l'exploitant, au moins deux des critères entre le prolongement de durée de vie (PDV) , la marge de dernière utilisation (MDU), le rendement de dernière maintenance (RDM) ;
- ou encore, à défaut de décision de maintenance satisfaisant les critères susmentionnés, la décision de remplacer à neuf l'équipement 2.

Par exemple, on considère le cas susmentionné du moteur de camion avec ses trois décisions possibles de maintenance (E1,E2,E4) sélectionnées au titre de la dernière maintenance dans la vie de l'équipement 2 (pour permettre la condition PDV > D_{MIN}), à savoir:
- la décision E1 qui remplace le filtre à gazole (avec un prolongement PDV de 1 mois, un rendement RDM de 90% et une marge MDU de 3%) ;
- la décision E2 qui remplace injecteurs et filtre à gazole (avec un prolongement PDV de 1,5 mois, un rendement RDM de 26% et une marge MDU de 4%) ;
- la décision E4 qui remplace la pompe d'injection, les injecteurs et le filtre à gazole (avec un prolongement PDV de 6 mois, un rendement RDM de 65% et une marge MDU de 12%).

En outre, dans l'exemple, on choisit de sélectionner la décision optimale de dernière maintenance, selon le critère qui optimise tout à la fois le prolongement de durée de vie (PDV), la marge de dernière utilisation (MDU) et le rendement de dernière maintenance (RDM).

Les décisions E1 et E2 ne font pas de sens du point de vue opérationnel (le prolongement de durée de vie PDV n'étant que de 1 et 1,5 mois). Par ailleurs, ces décisions offrent un confort d'utilisation avant panne trop faible (avec une marge MDU de 3% et 4%). A contrario, la décision E4 fait beaucoup plus de sens opérationnellement avec un prolongement de durée de vie PDV de 6 mois, un confort d'utilisation avant panne acceptable (marge MDU > 10%) et un rendement RDM très acceptable (65%).

À l'échéance de cette dernière maintenance dans la vie du moteur, il est donc rationnel de ne pas remplacer le moteur à neuf et d'exécuter la décision E4 de dernière maintenance (i.e. celle comprenant le remplacement de la pompe d'injection, des injecteurs et du filtre à gazole). L'invention prévoit ainsi d'instruire la prolongation de durée de vie du moteur. Pour la maintenance 6 à réaliser identifiée comme dernière maintenance dans la vie de l'équipement 2, l'invention sélectionne ainsi, parmi les décisions possibles de maintenance, celle qui optimise toute combinaison entre ledit prolongement de durée de vie PDV (lequel prend en compte ladite échéance 19 de panne), la marge de dernière utilisation (MDU), le rendement de dernière maintenance RDM (lequel prend en compte la durée D_{MIN} et en cela les contraintes des tâches 90 de ladite dernière maintenance). L'invention prévoit ainsi d'instruire la prolongation de durée de vie de l'équipement 2 et détermine ainsi la durée de vie optimale de l'équipement 2. Il est à noter que cette instruction de prolongation de durée de vie de l'équipement tient compte à la fois de l'historique 9 de fabrication et de maintenance et de l'historique 11 d'utilisation de l'équipement 2, comme du scénario 8 d'utilisation de l'équipement 2 dans le cadre de sa prolongation de durée de vie.

On peut procéder de même pour déterminer la décision optimale de dernière maintenance au titre de toute maintenance 7 prévisionnelle identifiée comme dernière maintenance dans la vie de l'équipement 2 et associée au scénario 81 suivant.

Selon un mode de réalisation, l'invention détermine la décision optimale de la fabrication 4 de l'équipement 2, à savoir les tâches 90 critiques de la fabrication 4 qui optimisent l'état 130 prévisionnel de l'équipement 2 en fin de la période 70 prévisionnelle et pour un scénario 8.Pour cela et pour au moins deux équipements fictifs de la même série dudit équipement 2, associés à des décisions de fabrication distinctes
- on effectue une simulation en soumettant audit modèle 16 lesdites au moins deux décisions de fabrication et au moins un scénario 8 d'utilisation prévisionnel ;
- le modèle 16 génère au moins un état 130 prévisionnel pour chacun desdits deux équipements fictifs ;
- on sélectionne une parmi lesdites au moins deux décisions de fabrication en fonction de l'état 130 prévisionnel desdits deux équipements fictifs ;
- la décision de fabrication sélectionnée est accessible à un concepteur/fabricant. En d'autres termes, l'invention considère les différentes décisions possibles de fabrication 4 (i.e. les différentes combinaisons possibles de tâches 90 critiques pour ladite fabrication 4). On associe à chaque combinaison un équipement fictif de la série.

Par exemple, on considère le cas d'un équipement 2 de type pompe pour laquelle les tâches 90 critiques de la fabrication 4 se réduisent aux tâches 90 suivantes :
- « mise en place et choix du palier de pompe », avec deux options possibles du type de palier: les types A et B ;
- « mise en place et choix de l'impulseur de pompe », avec trois options possibles du type d'impulseur: les types A, B et C.

Les différentes combinaisons possibles de tâches 90 critiques de la fabrication 4 (i.e. les différentes décisions possibles de la fabrication 4) sont donc les six combinaisons [type de palier ; type d'impulseur] : [A;A] [A;B] [A;C] [B;A] [B;B] [B;C].On considère alors les différents équipements fictifs, chacun associé à une décision de la fabrication 4 parmi les différentes combinaisons possibles de la fabrication 4, supposés implantés dans l'installation 3, supposés avoir fonctionné au cours d'une première période 5 de fonctionnement (réduite à une seule période de fonctionnement, c'est-à-dire sans comporter de maintenance 10 préalable) dans le cadre d'un historique 11 d'utilisation (identique pour tous les équipements fictif considérés). On considère en outre une décision de maintenance au titre de la maintenance 6 à réaliser (identique pour tous les équipements fictifs considérés), un scénario 8 (identique pour tous les équipements fictifs considérés).

Pour chaque équipement fictif, l'invention utilise alors ledit modèle 16 comme simulateur, individualisé audit équipement fictif, pour déterminer l'état 130 prévisionnel dudit équipement fictif à la fin de la période 70 prévisionnelle, en adaptant les arguments soumis en entrée du modèle 16, à savoir :
- l'historique 9 de fabrication et de maintenance (réduit à la décision de la fabrication 4, spécifique audit équipement fictif) ;
- la décision de maintenance au titre de la maintenance 6 à réaliser (commune à tous les équipements fictifs considérés) ;
- l'historique 11 d'utilisation (commun à tous les équipements fictifs considérés) ;
- le scénario 8 (commun à tous les équipements fictifs considérés).

Ainsi, pour l'ensemble des équipements fictifs associés à leur décision respective de fabrication 4 (et à tout autre paramètre pris égal par ailleurs), on compare l'état 130 prévisionnel desdits équipements fictifs à la fin de la période 70 prévisionnelle. Lesdits états 130 prévisionnels étant comparés, le meilleur état 130 prévisionnel désigne la meilleure décision de fabrication 4 (meilleure combinaison des tâches 90 critiques de fabrication 4).

Selon un mode de réalisation, la simulation par le modèle 16 détermine la décision optimale de la fabrication 4, à savoir les tâches 90 qui optimisent le cycle de vie optimal de l'équipement 2 (le cycle de vie optimal comprenant la suite des décisions optimales de maintenance pour la maintenance 6 à réaliser et pour chacune des maintenances 7,71 prévisionnelles dans la vie de l'équipement 2, la suite des utilisations limites (i.e. les limites 18 maximales) pour chacune des périodes 70,710 prévisionnelles dans la vie de l'équipement 2, ainsi que la durée de vie optimale de l'équipement 2) et ce, pour un profil d'utilisation donné (ensemble des scénarios 8,81 successifs pour les différentes périodes 70,710 prévisionnelles dans la vie de l'équipement 2).Pour ce faire, pour au moins deux équipements fictifs de la même série dudit équipement 2, associés à deux décisions de fabrication 4 distinctes :
- on effectue des simulations récurrentes de façon similaire pour chacune desdites au moins deux décisions de fabrication 4, pour déterminer, une suite de décisions optimales de maintenance, une suite des limites 18 maximales ainsi que la durée de vie optimale de l'équipement fictif ;
- on choisit la décision optimale de fabrication 4 en fonction des résultats desdites simulations ;
- la décision optimale de fabrication 4 sélectionnée est accessible audit concepteur/fabricant. En d'autres termes, le modèle 16 pouvant simuler l'état 130 prévisionnel d'un équipement fictif de la même série de même que dans le cas de l'équipement 2 réel (comme vu précédemment), l'invention détermine le cycle de vie optimal dudit équipement fictif, de même que dans le cas de l'équipement 2 réel. De préférence, on effectue ainsi autant de simulations de cycle de vie optimal que d'équipements fictifs (i.e. autant de simulations que de décisions de fabrication 4 possibles). On sélectionne alors la décision optimale de fabrication 4 en fonction des résultats de ladite simulation, c'est-à-dire comme étant celle qui autorise le meilleur cycle de vie optimal. Le système 1 permet ainsi de déterminer, au bénéfice du fabricant, la décision de la fabrication 4 qui optimise le cycle de vie complet des équipements 2 de la série. Selon un autre mode de réalisation, le modèle 16 permet aussi de chiffrer la sensibilité du comportement de l'équipement 2 (notamment les états 130 prévisionnels, le cycle de vie optimal) aux conditions 110 d'utilisation et d'identifier la valeur optimale pour chaque condition 110 d'utilisation : ce qui désigne autant d'axes possibles pour gagner dans la protection de l'équipement aux conditions 110 d'utilisation, voire pour optimiser le point de fonctionnement de l'équipement.

Selon un mode de réalisation, l'invention offre à un exploitant une supervision globale de l'ensemble des équipements 2 de la série qu'il exploite, implantés dans le parc de ses installations 3 (par exemple une flotte de véhicules).Pour ce faire, le système 1 est appliqué à un parc de plusieurs équipements 2 de ladite série chez un même exploitant. On combine les résultats obtenus pour chacun desdits équipements 2, puis lesdits résultats sont accessibles au moins audit exploitant.

En d'autres termes, le système 1 délivre à un exploitant donné et réactualise à tout moment, les informations relatives au cycle de vie optimal pour chaque équipement 2 de son parc, pour un ou plusieurs profils d'utilisation souhaités (à savoir l'ensemble des scénarios 8,81 d'utilisation sur les court et long termes de la durée de vie de chaque équipement 2), à savoir notamment :
- le programme des maintenances optimales à venir pour chaque équipement 2 (i.e. la suite des décisions optimales de maintenance, au titre de la maintenance 6 à réaliser et de l'ensemble des maintenances 7,71 prévisionnelles dans la durée de vie de chaque équipement 2) ;
- la suite des utilisations limites qu'il sera possible de faire de chaque équipement 2 et sur le long terme de sa durée de vie (i.e. pour chaque période 70,710 prévisionnelle de fonctionnement dans la durée de vie de chaque équipement 2 et dans le cadre des scénarios 8,81) ;
- la durée de vie optimale de chaque équipement 2.Le système 1 permet alors d'anticiper au plus juste et de réactualiser à tout moment :
- au bénéfice des acteurs de la « supply-chain », la nature des pièces nécessaires pour chacune des maintenances à venir dans la vie de chaque équipement 2 (i.e. pour la maintenance 6 à réaliser et l'ensemble des maintenances 7,71 prévisionnelles à venir dans la durée de vie de chaque équipement 2) ;
- au bénéfice du maintenancier, la programmation de la maintenance industrielle (nature des tâches 90 à réaliser pour la maintenance 6 à réaliser et l'ensemble des maintenances 7,71 prévisionnelles à venir dans la durée de vie de chaque équipement 2) ;
- au bénéfice de l'exploitant, la totalité des contraintes (incluant le coût total) des maintenances à venir dans la vie de chaque équipement 2 (pour la maintenance 6 à réaliser et pour l'ensemble des maintenances 7,71 prévisionnelles à venir dans la durée de vie de chaque équipement 2) ;
- au bénéfice de l'exploitant, la programmation de l'utilisation future possible de chaque équipement 2, sur le long terme de sa durée de vie et ce, au regard de la suite des utilisations limites précédemment déterminées. Ainsi, le système 1 permet en particulier :
   - d'évaluer et réactualiser à tout moment, en cours de vie de chaque équipement 2, la valeur résiduelle de l'équipement 2;
   - de déterminer le prix objectif de l'actif que constitue chaque équipement 2 et d'ainsi instruire de façon pertinente la décision de conserver ou revendre l'équipement 2.On considère l'exemple d'une flotte d'équipements 2 de type camions. Le système 1 permet de répondre aux questions suivantes de l'exploitant de ladite flotte de camions.
   - Quelle utilisation maximale possible l'exploitant va-t-il pouvoir faire de plusieurs camions neufs, entre deux maintenances successives, pour différents profils d'exploitation (par exemple, en termes de charge à transporter, de kilométrage à parcourir, de vitesse moyenne, de pente moyenne des routes utilisées, de température d'air ambiant), associés à des régions géographiques différentes (par exemple, comme la Russie, le Sénégal, la France) ?
   - L'exploitant possède plusieurs camions parvenus à mi-vie et dont il souhaite se séparer. Compte tenu de leurs historiques 9 et 11 respectifs, compte tenu de leur profil d'exploitation spécifique à la région du monde dans laquelle ils sont exploités, quel est le potentiel restant de chaque camion (en termes de charge à transporter, de kilométrage à parcourir, de vitesse moyenne, de durée de vie) et quel est le coût total des maintenances 7 prévisionnelles sur le reste de leur durée de vie ? A quel prix l'exploitant peut-il négocier chaque camion ?
   - L'exploitant possède plusieurs camions jusqu'ici exploités au Sénégal et qui approchent la fin de vie. Compte tenu du profil d'utilisation type spécifique au Sénégal et du profil spécifique en France, compte tenu de leur historique respectif d'utilisation et de maintenance, vaut-il mieux poursuivre l'exploitation des camions au Sénégal ou les rapatrier en France ?
   - Pour chaque camion de la flotte exploitée, à partir de quel moment n'est-il plus rentable d'exploiter le camion considéré, compte tenu de ses historiques 9 et 11, compte tenu de son échéance de fin de durée de vie optimale, compte tenu de l'utilisation maximale possible jusqu'en fin de durée de vie et compte tenu du coût total des maintenance à venir ?

L'invention permet de réactualiser à la périodicité souhaitée, voire en temps réel, les informations du cycle de vie optimal propre à chaque camion de la flotte pour répondre à ces questions : l'invention permet ainsi des décisions optimisées et au bon timing, en matière de gestion des actifs que représentent ces camions. Le système 1 permet donc de réactualiser à tout moment, voire en temps réel, et à la périodicité souhaitée, les informations du cycle de vie optimal de chaque équipement 2 du parc de l'exploitant : ce qui permet des décisions optimisées et anticipées au mieux, au bénéfice de l'exploitant et du maintenancier.

L'invention permet de gagner de façon significative en maîtrise de conception, de fabrication, de maintenance et d'utilisation des équipements 2 d'une série donnée, avec une visibilité sur le long terme de la durée vie de chaque équipement 2. L'invention permet donc les gains suivants en termes de maîtrise, de sécurité et confort d'utilisation et de gains économiques, au bénéfice du concepteur, du fabricant, du maintenancier et des exploitants.

L'invention déverrouille l'accès à la maîtrise des décisions optimales d'exploitation et de maintenance pour un équipement 2 donné, lorsque ces décisions relèvent du court terme (i.e. concernant la maintenance 6 à réaliser et l'utilisation au cours de la période 70 prévisionnelle).

D'une part, l'invention permet de déterminer la décision optimale de maintenance pour la maintenance 6 à réaliser: cette décision est individualisée à l'historique complet de l'équipement 2 (historique 9 de fabrication et de maintenance et historique 11 d'utilisation), est adaptée à l'utilisation souhaitée de l'équipement 2 (scénario 8) après ladite maintenance pour permettre le zéro-panne jusqu'à l'échéance de la maintenance 7 prévisionnelle qui suit, tout en repoussant, autant que souhaité, les limites d'utilisation compatibles avec le zéro-panne souhaité sur la période 70 prévisionnelle.

D'autre part, l'invention annule l'incertitude de panne et de manière contrôlée. En fonctionnement, l'invention fournit en effet à l'exploitant l'information, réactualisée en temps réel de l'utilisation limite, compatible avec le zéro-panne jusqu'à la prochaine maintenance : l'exploitant connaît désormais les limites jusqu'auxquelles il peut pousser l'utilisation de l'équipement 2 sans compromettre le zéro-panne souhaité, ou dans lesquelles il doit restreindre l'utilisation pour bénéficier du zéro-panne souhaité. L'invention déverrouille ainsi l'accès à la sécurité et au confort d'utilisation de l'équipement 2 et de l'installation 3.

En effet, annulant l'incertitude de panne en fonctionnement et de manière contrôlée, l'invention bouscule les paradigmes. Il ne s'agît plus pour l'exploitant de savoir s'il va subir la panne ou si sa prédiction de panne est correcte. C'est désormais l'exploitant qui décide non seulement de l'échéance de la panne (par exemple à l'échéance de la prochaine maintenance 7 prévisionnelle), mais aussi de la marge d'utilisation avant panne (soit la marge entre l'utilisation souhaitée du scénario 8 et l'utilisation limite compatible avec le zéro-panne) : c'est désormais l'exploitant qui contrôle l'utilisation qu'il fait de l'équipement 2 pour la garder compatible avec le zéro-panne souhaité.

Ainsi, l'invention apporte une véritable réponse à la hauteur des exigences hautes de disponibilité de l'équipement 2 (ou de sécurité de l'installation 3, lorsque la disponibilité de l'équipement 2 est un prérequis de la sécurité de l'installation 3).De l'invention découlent ainsi les intérêts économiques à court terme.

A l'étape de la maintenance 6 à réaliser comme au cours du fonctionnement de l'équipement 2 lors de la période 70 prévisionnelle, l'invention annule l'incertitude de panne en fonctionnement concernant l'équipement 2 et de manière contrôlée (par l'accès à la décision optimale de maintenance puis par la connaissance réactualisée de l'utilisation limite compatible avec le zéro-panne).

D'une part, l'invention permet ainsi le temps plein de production de l'installation 3 souhaité par l'exploitant. D'autre part, l'invention permet ainsi des garanties supérieures de fiabilité en matière de maintenance et d'exploitation : l'invention permet donc d'optimiser d'autant les contrats d'assurance des maintenanciers et exploitants. L'invention déverrouille aussi l'accès à la maîtrise des décisions d'exploitation et de maintenance relevant du long terme.

En effet, en termes d'utilisation sur le long terme de l'équipement 2, l'invention permet de déterminer, au plus juste et à tout moment, le potentiel de l'équipement 2, en anticipant les utilisations qu'il est possible de faire dudit équipement 2 sur le long terme du reste à venir de sa durée de vie (grâce à l'information réactualisée des utilisations limites de l'équipement 2 et de sa durée de vie optimale).

En termes de maintenance sur le long terme de l'équipement 2, l'invention permet d'anticiper également, au plus juste, à tout moment, et ce sur le long terme de la durée de vie de l'équipement 2 (et pour chaque profil d'utilisation possible de l'équipement) : les tâches industrielles pour les différentes maintenances à venir, le coût total des maintenances à venir, les stocks nécessaires et suffisants en pièces de rechange (et relaxe ainsi, pour les supply-chains, la contrainte en réactivité face au besoin imprévu de pièces de rechange).

En outre, 'invention permettant, à tout moment dans la vie de l'équipement 2, d'en évaluer et réactualiser le potentiel maximal restant comme le coût total des maintenances 7 prévisionnelles restant dans la vie de l'équipement 2, l'invention permet aussi de déterminer, à tout moment dans la vie de l'équipement 2, la valeur résiduelle de l'équipement, comme d'instruire de façon pertinente la décision de conserver ou revendre l'équipement.

La réactualisation à la périodicité souhaitée, voire en temps réel, des informations du cycle de vie optimal pour un équipement 2 ou une flotte d'équipements permet ainsi des décisions optimisées et au bon timing, en matière de gestion des actifs que représentent ces équipements. L'invention permet également de mieux maîtriser les choix de conception et de fabrication des équipements 2 de la série, en optimisant la stratégie marché du concepteur/fabricant, et en permettant des garanties supérieures de fiabilité en matière de conception et de fabrication. Cette maîtrise accrue est assortie d'un intérêt économique par l'optimisation permise des contrats d'assurance du concepteur/fabricant. D'une part, l'invention permet d'optimiser la stratégie marché (positionnement marché) du concepteur/fabricant.

Pour un profil d'utilisation associé à un segment de marché auquel l'équipement 2 est destiné, l'invention permet en effet de caractériser le cycle de vie optimal de l'équipement 2, en générant des métriques associées (marge entre utilisations cible et limite, durée de vie optimale, coût optimal de fabrication et du programme de maintenance sur la durée de vie). Ces métriques permettent de chiffrer l'adéquation de l'équipement 2 au segment considéré. L'invention permet donc au concepteur/fabricant :
- un gain en termes de stratégie marché : le concepteur/fabricant est dès lors en mesure de cibler plus prioritairement les segments sur lesquels l'équipement 2 optimise l'adéquation au segment ;
- un gain en termes de positionnement marché : le concepteur/fabricant est dès lors en mesure de mieux revendiquer l'adéquation de l'équipement 2 aux besoins du segment vis-à-vis des clients et des concurrents, métriques du modèle à l'appui. D'autre part, l'invention permet aussi des garanties supérieures de fiabilité en matière de conception et de fabrication. L'invention permet en effet de déterminer les paramètres de fabrication optimaux et adaptés à un profil d'utilisation donné (par exemple adaptés à un segment de marché donné croisé avec un segment géographique donné). L'invention permet également de déterminer les axes possibles d'optimisation de la conception pour un profil d'utilisation donné. Ainsi, l'invention permet d'optimiser d'autant les contrats d'assurance du concepteur/fabricant. Pour cela, l'invention est disruptive, en particulier son modèle 16, au vu des projets usuels de machine learning, en systématisant le croisement de l'expertise fonctionnelle et de la donnée et en améliorant la prise en compte de l'expertise fonctionnelle dans le traitement de la donnée. Ce faisant, l'invention est disruptive, en particulier par rapport à l'état de l'art, en particulier au vu des technologies de maintenance prédictive, puisque plus pertinente, plus puissante et offrant des applications plus globales qu'une simple prédiction de panne.

## Revendications

1. Procédé numérique de supervision de l'exploitation et de la maintenance d'au moins un équipement (2) industriel au sein d'une installation (3),
- ladite installation (3) comportant d'au moins un équipement (2) industriel issu d'une fabrication (4) et représentatif d'une série,
- ledit équipement (2) étant implanté dans l'installation (3) et au moins exploité dans le cadre d'une période (5) jusqu'à une étape de maintenance (6) à réaliser ;
- pour ledit équipement (2) au moins une maintenance (7) prévisionnelle postérieure à ladite maintenance (6) à réaliser, à l'issu d'au moins un scénario (8) avec des conditions (110) prévisionnelles d'utilisation dudit équipement (2) sur une période (70) prévisionnelle de fonctionnement,
- l'installation (3) comprenant plusieurs historiques induits par la fabrication (4), l'implantation, l'exploitation et la maintenance dudit équipement (2), lesdits historiques comprenant au moins :
- un historique (9) de fabrication et de maintenance comprenant :
des tâches (90) de fabrication dudit au moins un équipement (2) jusqu'à ladite implantation,
éventuellement des tâches (90) d'au moins une maintenance (10) préalable dudit équipement (2) ;
- un historique (11) d'utilisation dudit équipement (2) sur ladite période (5) entre l'implantation et ladite maintenance (6) à réaliser, ledit historique (11) d'utilisation comprenant des conditions (110) d'utilisation dudit équipement (2) durant ladite période (5) ; et
- un historique (12) d'état (13) dudit équipement (2), ledit historique (12) d'état comprenant des indicateurs (120) matériels dudit équipement (2) ;
le procédé étant exécuté par au moins un terminal informatique et étant **caractérisé en ce qu'**il comprend les étapes suivantes :
au moyen d'une analyse technique dudit équipement (2), déterminer au moins une corrélation (14) entre, d'une part, au moins une desdites tâches (90) et/ou au moins une desdites conditions (110) d'utilisation et, d'autre part, au moins un des indicateurs (120) matériels dudit état (13), ladite corrélation (14) établissant au moins un lien entre des causes de vieillissement et des conséquences de vieillissement de l'équipement (2) ;
dans la corrélation (14) :
- caractériser les tâches (90) par celles identifiées comme critiques, et/ou les conditions (110) d'utilisation par celles auxquelles l'équipement (2) est sensible et exposé en cours de fonctionnement ou à l'arrêt, les tâches (90) et les conditions (110) considérées impactant l'état (13) dudit équipement (2) ;
- caractériser l'état (13) matériel de l'équipement (2) par les indicateurs (120) identifiés comme étant représentatifs de cet état (13) dudit équipement (2) ;
ensuite, dans la corrélation (14), déterminer :
- des grandeurs physiques mesurées ou des fonctions des grandeurs physiques mesurées caractérisant les conditions (110) d'utilisation auxquelles ledit équipement (2) est sensible et exposé en fonctionnement ou à l'arrêt ;
- des grandeurs physiques mesurées ou des fonctions des grandeurs physiques mesurées caractérisant les indicateurs (120) de l'état (13) matériel de l'équipement (2) à un instant donné ;
l'état (13) de l'équipement (2) à un instant donné, **caractérisé par** les indicateurs (120) matériels, traduit l'intégrité physique de l'équipement (2) dont dépend son aptitude à bien fonctionner ;
puis
pour les autres équipements de ladite série, récupérer et extraire des données associées à ces tâches (90), et des données associées aux grandeurs physiques ou fonctions de grandeurs physiques relatives à ces conditions (110) d'utilisation et à ces indicateurs (120) matériels, telles qu'identifiées dans ladite corrélation (14), de manière à obtenir un jeu (15) de données ;
- effectuer l'apprentissage d'au moins un modèle (16) virtuel, sur la base du jeu (15) de données ;
ensuite
lors de la maintenance (6) à réaliser dudit équipement (2), soumettre audit modèle (16) des valeurs :
- d'une part, d'au moins une des tâches (90) de l'historique (9) de fabrication et de maintenance et d'au moins une des conditions (110) d'utilisation de l'historique (11) d'utilisation,
- d'autre part, au moins une des tâches (90) de la maintenance (6) à réaliser et desdites conditions (110) prévisionnelles d'utilisation du scénario (8) ;
- ledit modèle (16) générant un état (130) prévisionnel dudit équipement (2) postérieur à ladite maintenance (6) à réaliser,
- ledit état (130) prévisionnel étant comparé à un état (17) minimal identifié comme requis pour le fonctionnement dudit équipement (2).

2. Procédé de supervision selon la revendication 1, **caractérisé en ce qu'**il consiste à
- effectuer au moins une variation d'au moins une des valeurs des tâches (90) de la maintenance (6) à réaliser :
- lorsque les valeurs sont soumises audit modèle (16), introduire les valeurs de ladite variation ;
- parmi toutes les variations, sélectionner au moins une décision suffisante de la maintenance (6) à réaliser, pour l'état (130) prévisionnel dudit équipement (2) supérieur ou équivalent à l'état (17) minimal, au moment de ladite maintenance (7) prévisionnelle.

3. Procédé de supervision selon l'une des revendications 1 ou 2, **caractérisé en ce qu'**il consiste à
- pour une décision de maintenance donnée, effectuer une modification de la valeur d'au moins une des conditions (110) prévisionnelles d'utilisation du scénario (8) ;
- lorsque lesdites valeurs sont soumises audit modèle (16), introduire les valeurs de ladite modification ainsi que les valeurs de ladite décision de maintenance ;
- calculer une limite pour au moins une desdites conditions (110) prévisionnelles pour l'état (130) prévisionnel dudit équipement (2) équivalent à l'état (17) minimal, au moment de la maintenance (7) prévisionnelle.

4. Procédé de supervision selon les revendications 2 et 3, **caractérisé en ce qu'**il consiste à
- lorsque les valeurs sont soumises audit modèle (16), introduire les valeurs sélectionnées de ladite décision suffisante de maintenance ;
- calculer une limite (18) maximale de ladite condition (110) prévisionnelle pour cette décision suffisante de maintenance, pour l'état (130) prévisionnel dudit équipement (2) équivalent à l'état (17) minimal, au moment de la maintenance (7) prévisionnelle.

5. Procédé de supervision selon la revendication 4, **caractérisé en ce qu'**il consiste à
- déterminer une marge d'utilisation pour au moins une des conditions (110) prévisionnelles d'utilisation dudit scénario (8), comme étant l'écart (182) entre la valeur correspondante et la limite (18) maximale correspondante.

6. Procédé de supervision selon la revendication 5, **caractérisé en ce qu'**il consiste à
- sélectionner une décision optimale parmi les décisions suffisantes, comme ayant la marge d'utilisation acceptable ou comme ayant au moins un desdits écarts (182) acceptable.

7. Procédé de supervision selon la revendication 6, **caractérisé en ce qu'**il comprend une étape de
- représentation graphique sous forme d'abaque, avec au moins une courbe associée à au moins une première des conditions (110) prévisionnelles en fonction d'une deuxième desdites conditions (110) prévisionnelles,
ledit abaque déterminant la limite (18) maximale d'une première condition (110) prévisionnelle.

8. Procédé de supervision selon l'une quelconque des revendications précédentes, **caractérisé en ce qu'**il consiste à
- dans l'étape de corrélation (14), réduire l'historique (9) de fabrication et de maintenance à un historique des tâches (90) critiques sous forme d'au moins une liste de valeurs successives, chacune des valeurs de la liste caractérisant à une maintenance donnée la tâche (90) considérée,
dans chaque liste, choisir uniquement la valeur rémanente comme étant la valeur adoptée à la dernière maintenance à laquelle la tâche (90) considérée a été réalisée
- ne conserver que les valeurs rémanentes dans l'historique (9) des tâches (90) critiques.

9. Procédé de supervision selon l'une quelconque des revendications précédentes, **caractérisé en ce que**
dans l'étape de corrélation (14), les fonctions des grandeurs physiques mesurées des conditions (110) d'utilisation comprennent
- un calcul du temps de présence des grandeurs physiques mesurées dans au moins une plage de valeurs ;
et/ou
- un calcul représentatif d'au moins une fluctuation des grandeurs physiques mesurées :
et/ou
- un comptage de ladite au moins une fluctuation.

10. Procédé de supervision selon l'une quelconque des revendications précédentes, **caractérisé en ce qu'**il consiste à
dans la corrélation (14), à périodicité,
- réitérer la récupération de nouvelles données auprès au moins d'un fabricant, d'un maintenancier et/ou d'un exploitant,
- puis une étape d'extraction desdites nouvelles données pour obtenir un jeu (15) de données complété,
- suivie de la mise à jour de l'apprentissage dudit modèle (16) sur la base dudit jeu (15) de données complété.

11. Procédé de supervision selon l'une quelconque des revendications précédentes, **caractérisé en ce qu'**il consiste à
postérieurement à ladite maintenance (6) une fois réalisée, soumettre audit modèle (16) des valeurs
- d'une part, d'au moins une des tâches (90) de l'historique (9) de fabrication et de maintenance, d'au moins une tâche (90) de la maintenance (6) réalisée et d'au moins une des conditions (110) d'utilisation de l'historique (11) d'utilisation depuis ladite maintenance (6) réalisée
- d'autre part, desdites conditions (11) prévisionnelles d'utilisation du scénario (8), ledit modèle (16) réactualisant l'état (130) prévisionnel dudit équipement (2), ledit état (130) prévisionnel étant comparé à un état (17) minimal identifié comme requis pour le fonctionnement dudit équipement (2).

12. Procédé de supervision selon les revendications 5 à 11, **caractérisé en ce qu'**il comprend au moins les étapes suivantes :
- supposer réalisée au moins ladite décision suffisante de la maintenance (6) à réaliser et supposer exécuté le scénario (8) jusqu'à la maintenance (7) prévisionnelle suivant ladite maintenance (6) à réaliser ;
- puis effectuer au moins une variation d'au moins une des valeurs des tâches (90) de ladite maintenance (7) prévisionnelle ;
- lorsque les valeurs sont soumises audit modèle (16), introduire les valeurs de ladite variation ainsi que les valeurs d'un scénario (81) suivant prévu pour la période (710) prévisionnelle de fonctionnement suivant ladite maintenance (7) prévisionnelle ;
- parmi toutes les variations, sélectionner au moins une décision suffisante de ladite maintenance (7) prévisionnelle, pour l'état (130) prévisionnel dudit équipement (2) supérieur ou équivalent à l'état (17) minimal, au moment de la maintenance (71) suivant ladite maintenance (7) prévisionnelle ;
- déterminer au moins une des limites (18) maximales ainsi que la marge d'utilisation associées à ladite décision suffisante de maintenance ainsi sélectionnée et audit scénario (81) suivant ;
puis réitérer lesdites étapes de manière récurrente pour toute autre maintenance prévisionnelle suivante dans la vie de l'équipement (2).

13. Procédé de supervision selon les revendications 6 et 12, **caractérisé en ce qu'**il consiste à
- sélectionner ladite décision optimale parmi au moins ladite décision suffisante pour les maintenances correspondantes.

14. Procédé de supervision selon les revendications 2 à 13, **caractérisé en ce qu'**il consiste à
- quand une décision de maintenance est insuffisante avec un état (130) prévisionnel inférieur audit état (17) minimal, déterminer l'échéance (19) de panne pour ladite décision de maintenance correspondante.

15. Procédé de supervision selon la revendication 14, **caractérisé en ce qu'**il consiste à
- pour la maintenance (6) à réaliser ou pour une maintenance (7,71) prévisionnelle sans décision de maintenance identifiée comme suffisante, et pour au moins une décision insuffisante donnée de ladite maintenance (6) à réaliser, déterminer l'échéance de fin de durée de vie de l'équipement (2) comme étant ladite échéance (19) de panne associée à ladite décision de maintenance.

16. Procédé de supervision selon la revendication 15, **caractérisé en ce que**
- pour la maintenance (6) à réaliser ou pour une maintenance prévisionnelle identifiée comme dernière maintenance dans la vie de l'équipement (2),
sélectionner parmi les décisions possibles de maintenance, celle qui optimise toute combinaison entre ladite échéance (19) de panne, une marge de dernière utilisation et les contraintes des tâches (90) de ladite dernière maintenance.

17. Procédé de supervision selon la revendication 1, **caractérisé en ce qu'**il consiste à pour au moins deux équipements fictifs de la même série dudit équipement (2), associés à des décisions de fabrication distinctes
- effectuer une simulation en soumettant audit modèle (16) lesdites au moins deux décisions de fabrication et au moins un scénario (8) d'utilisation prévisionnel sur la durée de vie supposée desdits deux équipements fictifs ;
- le modèle (16) générant( au moins un état (130) prévisionnel pour chacun desdits deux équipements fictifs ;
- sélectionner une parmi lesdites au moins deux décisions de fabrication en fonction de l'état (130) prévisionnel desdits deux équipements fictifs ;
- la décision de fabrication sélectionnée étant accessible à un concepteur/fabricant.

18. Procédé de supervision selon l'une quelconque des revendications 12 à 17, **caractérisé en ce qu'**il consiste à
pour au moins deux équipements fictifs de la même série dudit équipement (2), associés à deux décisions de fabrication distinctes ;
- effectuer des simulations récurrentes de façon similaire pour chacune desdites au moins deux décisions de fabrication, pour déterminer le cycle de vie optimal associé à chacune desdites décisions de fabrication : une suite de décisions optimales de maintenance, une suite des limites (18) maximales et marge d'utilisation associées à ces décisions optimales de maintenance ainsi que la durée de vie optimale associée de l'équipement fictif ;
- choisir la décision optimale de fabrication en fonction des résultats desdites simulations ;
- la décision optimale de fabrication sélectionnée étant accessible audit concepteur/fabricant.

19. Procédé de supervision selon l'une quelconque des revendications précédentes, **caractérisé en ce que**
- il est appliqué à un parc de plusieurs équipements (2) de ladite série chez un même exploitant ;
et **en ce qu'**il consiste à
- combiner les résultats obtenus pour chacun desdits équipements (2) ;
- lesdits résultats étant accessibles au moins audit exploitant.

20. Procédé de supervision selon l'une quelconque des revendications précédentes, **caractérisé en ce que**
- l'apprentissage dudit modèle (16) rentre dans le domaine de l'intelligence artificielle et peut être un apprentissage machine.

## Patentansprüche

1. Digitales Verfahren zur Überwachung des Betriebs und der Instandhaltung mindestens einer industriellen Ausrüstung (2) innerhalb einer Anlage (3),
- wobei die Anlage (3) mindestens eine industrielle Ausrüstung (2) aufweist, die aus einer Fertigung (4) stammt und repräsentativ für eine Baureihe ist,
- wobei die Ausrüstung (2) in der Anlage (3) installiert ist und mindestens im Rahmen eines Zeitraums (5) bis zu einem durchzuführenden Instandhaltungsschritt (6) betrieben wird;
- für die Ausrüstung (2) mindestens eine prognostizierte Instandhaltung (7) im Anschluss an die Instandhaltung (6), die am Ende mindestens eines Szenarios (8) mit prognostizierten Nutzungsbedingungen (110) der Ausrüstung (2) über einen prognostizierten Betriebszeitraum (70) durchzuführen ist,
- wobei die Anlage (3) mehrere Historien umfasst, die durch die Fertigung (4), die Installation, den Betrieb und die Instandhaltung der Ausrüstung (2) begründet sind, wobei diese Historien mindestens umfassen:
- eine Fertigungs- und Instandhaltungshistorie (9), umfassend:
Fertigungsaufgaben (90) der mindestens einen Ausrüstung (2) bis zur Installation,
eventuell Aufgaben (90) mindestens einer vorherigen Instandhaltung (10) der Ausrüstung (2);
- eine Nutzungshistorie (11) der Ausrüstung (2) über den Zeitraum (5) zwischen der Installation und der durchzuführenden Instandhaltung (6), wobei die Nutzungshistorie (11) Nutzungsbedingungen (110) der Ausrüstung (2) während des Zeitraums (5) umfasst; und
- eine Historie (12) des Zustands (13) der Ausrüstung (2), wobei die Zustandshistorie (12) auch Hardware-Indikatoren (120) der Ausrüstung (2) umfasst;
wobei das Verfahren von mindestens einem Computerendgerät ausgeführt wird und **dadurch gekennzeichnet ist, dass** es die folgenden Schritte umfasst:
Bestimmen, mittels einer technischen Analyse der Ausrüstung (2), mindestens einer Korrelation (14) zwischen einerseits mindestens einer der Aufgaben (90) und/oder mindestens einer der Nutzungsbedingungen (110), und andererseits mindestens einem der Hardware-Indikatoren (120) dieses Zustands (13), wobei diese Korrelation (14) mindestens einen Zusammenhang zwischen den Ursachen von Alterung und den Folgen von Alterung der Ausrüstung (2) herstellt;
in der Korrelation (14):
- Charakterisieren der Aufgaben (90) nach denjenigen, die als kritisch identifiziert wurden, und/oder der Nutzungsbedingungen (110) nach denjenigen, gegen die die Ausrüstung (2) während des Betriebs oder im Stillstand empfindlich ist bzw. denen sie ausgesetzt ist, sowie der Aufgaben (90) und Bedingungen (110), die so betrachtet werden, dass sie den Zustand (13) der Ausrüstung (2) beeinflussen;
- Charakterisieren des Hardware-Zustands (13) der Ausrüstung (2) durch die Indikatoren (120), die als repräsentativ für diesen Zustand (13) der Ausrüstung (2) identifiziert wurden;
danach, in der Korrelation (14), Bestimmen von:
- gemessenen physikalischen Größen oder Funktionen gemessener physikalischer Größen, die die Nutzungsbedingungen (110) charakterisieren, gegen die die Ausrüstung (2) während des Betriebs oder im Stillstand empfindlich ist bzw. denen sie ausgesetzt ist;
- gemessenen physikalischen Größen oder Funktionen gemessener physikalischer Größen, die die Indikatoren (120) des Hardware-Zustands (13) der Ausrüstung (2) zu einem gegebenen Zeitpunkt charakterisieren;
wobei der Zustand (13) der Ausrüstung (2) zu einem gegebenen Zeitpunkt, der durch die Hardware-Indikatoren (120) charakterisiert wird, die physikalische Unversehrtheit der Ausrüstung (2) widerspiegelt, von der ihre ordnungsgemäße Funktionsfähigkeit abhängig ist;
dann,
für die anderen Ausrüstungen der Baureihe, Abrufen und Extrahieren von Daten, die diesen Aufgaben (90) zugeordnet sind, und von Daten, die physikalischen Größen oder Funktionen physikalischer Größen im Zusammenhang mit diesen Nutzungsbedingungen (110) und diesen Hardware-Indikatoren (120) zugeordnet sind, wie sie in der Korrelation (14) identifiziert sind, um einen Datensatz (15) zu erhalten;
- Trainieren mindestens eines virtuellen Modells (16) auf der Basis des Datensatzes (15);
danach,
bei der durchzuführenden Instandhaltung (6) der Ausrüstung (2), Übermitteln der folgenden Werte an das Modell (16):
- einerseits mindestens einer der Aufgaben (90) der Fertigungs- und Instandhaltungshistorie (9) und mindestens einer der Nutzungsbedingungen (110) der Nutzungshistorie (11),
- andererseits mindestens einer der Aufgaben (90) der durchzuführenden Instandhaltung (6) und der prognostizierten Nutzungsbedingungen (110) für das Szenario (8);
- wobei das Modell (16) einen prognostizierten Zustand (130) der Ausrüstung (2) nach der durchzuführenden Instandhaltung (6) generiert,
- wobei der prognostizierte Zustand (130) mit einem Minimalzustand (17) verglichen wird, der als für den Betrieb der Ausrüstung (2) erforderlich identifiziert wird.

2. Überwachungsverfahren nach Anspruch 1,
**dadurch gekennzeichnet, dass** es besteht aus
- der Durchführung mindestens einer Variante mindestens eines der Werte der Aufgaben (90) zur durchzuführenden Instandhaltung (6):
- wenn die Werte an das Modell (16) übermittelt werden, Eingeben der Werte der Variante;
- unter allen Varianten, Auswählen von mindestens einer ausreichenden Entscheidung hinsichtlich der durchzuführenden Instandhaltung (6), für den prognostizierten Zustand (130) der Ausrüstung (2), der zum Zeitpunkt der prognostizierten Instandhaltung (7) größer oder gleich dem Minimalzustand (17) ist.

3. Überwachungsverfahren nach Anspruch 1 oder 2,
**dadurch gekennzeichnet, dass** es besteht aus
- Durchführen, bei einer gegebenen Instandhaltungsentscheidung, einer Modifizierung des Werts von mindestens einer der prognostizierten Nutzungsbedingungen (110) des Szenarios (8);
- Eingeben, wenn die Werte an das Modell (16) übermittelt werden, der Werte der Modifizierung sowie der Werte der Instandhaltungsentscheidung;
- Berechnen eines Grenzwerts für mindestens eine der prognostizierten Bedingungen (110), für den prognostizierten Zustand (130) der Ausrüstung (2), der zum Zeitpunkt der prognostizierten Instandhaltung (7) dem Minimalzustand (17) entspricht.

4. Überwachungsverfahren nach Anspruch 2 und 3,
**dadurch gekennzeichnet, dass** es besteht aus
- Eingeben, wenn die Werte an das Modell (16) übermittelt werden, der ausgewählten Werte für die ausreichende Instandhaltungsentscheidung;
- Berechnen einer Maximalgrenze (18) des für diese ausreichende Instandhaltungsentscheidung prognostizierten Zustands (110), für den prognostizierten Zustand (130) der Ausrüstung (2), der dem Minimalzustand (17) zum Zeitpunkt der prognostizierten Instandhaltung (7) entspricht.

5. Überwachungsverfahren nach Anspruch 4,
**dadurch gekennzeichnet, dass** es besteht aus
- Bestimmen einer Nutzungsspanne für mindestens eine der prognostizierten Nutzungsbedingungen (110) des Szenarios (8), wobei es sich um die Diskrepanz (182) zwischen dem entsprechenden Wert und der entsprechenden Maximalgrenze (18) handelt.

6. Überwachungsverfahren nach Anspruch 5,
**dadurch gekennzeichnet, dass** es besteht aus
- Auswählen einer optimalen Entscheidung aus den ausreichenden Entscheidungen, die entweder die akzeptable Nutzungsspanne aufweist oder bei der mindestens eine der Diskrepanzen (182) akzeptabel ist.

7. Überwachungsverfahren nach Anspruch 6,
**dadurch gekennzeichnet, dass** es einen Schritt der
- grafischen Darstellung in Form eines Abakus umfasst, wobei mindestens eine Kurve mindestens einer ersten der prognostizierten Bedingungen (110) in Abhängigkeit von einer zweiten der prognostizierten Bedingungen (110) zugeordnet ist,
wobei der Abakus die Maximalgrenze (18) einer ersten prognostizierten Bedingung (110) bestimmt.

8. Überwachungsverfahren nach einem der vorstehenden Ansprüche, **dadurch gekennzeichnet, dass** es besteht aus
- Reduzieren, im Korrelationsschritt (14), der Fertigungs- und Instandhaltungshistorie (9) auf eine Historie kritischer Aufgaben (90) in Form von mindestens einer Liste aufeinanderfolgender Werte, wobei jeder der Werte der Liste die zu einem bestimmten Zeitpunkt der Instandhaltung betrachtete Aufgabe (90) charakterisiert,
Wählen, in jeder Liste, nur des Restwerts als den Wert, der bei der letzten Instandhaltung, bei der die betrachtete Aufgabe (90) durchgeführt wurde, als Wert angenommen wurde
- Beibehalten nur der Restwerte in der Historie (9) der kritischen Aufgaben (90).

9. Überwachungsverfahren nach einem der vorstehenden Ansprüche, **dadurch gekennzeichnet, dass**
die Funktionen der gemessenen physikalischen Größen der Nutzungsbedingungen (110) im Korrelationsschritt (14) umfassen
- eine Berechnung der Zeit des Vorliegens der gemessenen physikalischen Größen in mindestens einem Wertebereich;
und/oder
- eine Berechnung, die mindestens eine Schwankung der gemessenen physikalischen Größen repräsentiert:
und/oder
- eine Zählung der mindestens einen Schwankung.

10. Überwachungsverfahren nach einem der vorstehenden Ansprüche, **dadurch gekennzeichnet, dass** es,
in der Korrelation (14), bei Periodizität, besteht aus
- Wiederholen der Abfrage neuer Daten von mindestens einem Hersteller, Instandhaltungsanbieter und/oder Betreiber,
- dann einem Schritt der Extraktion dieser neuen Daten zum Erhalten eines vervollständigten Datensatzes (15),
- gefolgt von Aktualisieren des Trainings des Modells (16) auf der Basis des vervollständigten Datensatzes (15).

11. Überwachungsverfahren nach einem der vorstehenden Ansprüche, **dadurch gekennzeichnet, dass** es besteht aus
Übermitteln, nach Durchführung der Instandhaltung (6), der folgenden Werte an das Modell (16)
- einerseits, von mindestens einer der Aufgaben (90) der Fertigungs- und Instandhaltungshistorie (9), mindestens einer der Aufgaben (90) der durchgeführten Instandhaltung (6) und mindestens einer der Nutzungsbedingungen (110) der Nutzungshistorie (11) seit Durchführung der Instandhaltung (6)
- andererseits, von den prognostizierten Nutzungsbedingungen (11) des Szenarios (8), wobei das Modell (16) den prognostizierten Zustand (130) der Ausrüstung (2) aktualisiert, wobei dieser prognostizierte Zustand (130) mit einem Minimalzustand (17) verglichen wird, der für den Betrieb der Ausrüstung (2) als erforderlich identifiziert wurde.

12. Überwachungsverfahren nach den Ansprüchen 5 bis 11,
**dadurch gekennzeichnet, dass** es mindestens die folgenden Schritte umfasst:
- Annehmen, dass zumindest die ausreichende Entscheidung über die durchzuführende Instandhaltung (6) getroffen wurde und Annehmen, dass das Szenario (8) bis zur prognostizierten Instandhaltung (7) im Anschluss an die durchzuführende Instandhaltung (6) ausgeführt wurde;
- dann Durchführen mindestens einer Variante von mindestens einem der Werte der Aufgaben (90) der prognostizierten Instandhaltung (7);
- Eingeben, wenn die Werte an das Modell (16) übermittelt wurden, der Werte der Variante sowie der Werte eines nachfolgenden Szenarios (81), das für den prognostizierten Betriebszeitraum (710) nach der prognostizierten Instandhaltung (7) vorgesehen ist;
- Auswählen, unter allen Varianten, mindestens einer ausreichenden Entscheidung der prognostizierten Instandhaltung (7) für den prognostizierten Zustand (130) der Ausrüstung (2), der größer oder gleich dem Minimalzustand (17) zum Zeitpunkt der Instandhaltung (71) nach der prognostizierten Instandhaltung (7) ist;
- Bestimmen mindestens einer der Maximalgrenzen (18) sowie der Nutzungsspanne, die der somit ausgewählten ausreichenden Entscheidung über Instandhaltung und dem folgenden Szenario (81) zugeordnet sind;
dann regelmäßiges Wiederholen dieser Schritte für jede folgende prognostizierte Instandhaltung während der Lebensdauer des Ausrüstung (2).

13. Überwachungsverfahren nach Anspruch 6 und 12,
**dadurch gekennzeichnet, dass** es besteht aus
- Auswählen der optimalen Entscheidung aus mindestens der ausreichenden Entscheidung für die entsprechende Instandhaltung.

14. Überwachungsverfahren nach den Ansprüchen 2 bis 13,
**dadurch gekennzeichnet, dass** es besteht aus
- Bestimmen, wenn eine Instandhaltungsentscheidung mit einem prognostizierten Zustand (130) unterhalb des Minimalzustands (17) nicht ausreichend ist, des Ausfalltermins (19) für die entsprechende Instandhaltungsentscheidung.

15. Überwachungsverfahren nach Anspruch 14,
**dadurch gekennzeichnet, dass** es besteht aus
- Bestimmen, für eine durchzuführende Instandhaltung (6) oder für eine prognostizierte Instandhaltung (7, 71) ohne als ausreichend identifizierte Instandhaltungsentscheidung, und für mindestens eine nicht ausreichende Entscheidung über die durchzuführende Instandhaltung (6), des Termins für das Ende der Lebensdauer der Ausrüstung (2) als den dieser Instandhaltungsentscheidung zugeordneten Ausfalltermin (19).

16. Überwachungsverfahren nach Anspruch 15,
**dadurch gekennzeichnet, dass**
- für die durchzuführende Instandhaltung (6) oder für eine prognostizierte Instandhaltung, die als letzte Instandhaltung während der Lebensdauer der Ausrüstung (2) identifiziert ist,
Auswählen, aus den möglichen Instandhaltungsentscheidungen, derjenigen, die jede Kombination aus dem Ausfalltermin (19), einer Spanne für die letzte Nutzung und den Vorgaben der Aufgaben (90) der letzten Instandhaltung optimiert.

17. Überwachungsverfahren nach Anspruch 1,
**dadurch gekennzeichnet, dass** es besteht aus mindestens zwei fiktiven Ausrüstungen derselben Baureihe der Ausrüstung (2), die separaten Fertigungsentscheidungen zugeordnet sind
- Durchführen einer Simulation, indem dem Modell (16) mindestens zwei Fertigungsentscheidungen und mindestens ein Szenario (8) der prognostizierten Nutzung über die angenommene Lebensdauer der beiden fiktiven Ausrüstungen übermittelt werden;
- wobei das Modell (16) für jede der beiden fiktiven Ausrüstungen mindestens einen prognostizierten Zustand (130) generiert;
- Auswählen einer der mindestens zwei Fertigungsentscheidungen in Abhängigkeit von dem prognostizierten Zustand (130) der beiden fiktiven Ausrüstungen;
- wobei die ausgewählte Fertigungsentscheidung für einen Konstrukteur/Hersteller zugänglich ist.

18. Überwachungsverfahren nach einem der Ansprüche 12 bis 17, **dadurch gekennzeichnet, dass** es besteht aus,
für mindestens zwei fiktive Ausrüstungen derselben Baureihe von Ausrüstungen (2), die zwei getrennten Fertigungsentscheidungen zugeordnet sind;
- Durchführen in ähnlicher Weise, für jede der mindestens zwei Fertigungsentscheidungen, von wiederkehrenden Simulationen, um den optimalen Lebenszyklus zu ermitteln, der jeder der Fertigungsentscheidungen zugeordnet ist: eine Reihe optimaler Instandhaltungsentscheidungen, eine Reihe von Maximalgrenzen (18) und Nutzungsspanne, die diesen optimalen Instandhaltungsentscheidungen zugeordnet sind, sowie die optimale Lebensdauer, die der fiktiven Ausrüstung zugeordnet ist;
- Wählen der optimalen Fertigungsentscheidung in Abhängigkeit von den Ergebnissen dieser Simulationen;
- wobei die optimale ausgewählte Fertigungsentscheidung für den Konstrukteur/Hersteller zugänglich ist.

19. Überwachungsverfahren nach einem der vorstehenden Ansprüche, **dadurch gekennzeichnet, dass**
- es auf einen Bestand von mehreren Ausrüstungen (2) dieser Baureihe bei demselben Betreiber angewendet wird;
und dadurch, dass es besteht aus
- Kombinieren der für jede der Ausrüstungen (2) erzielten Ergebnisse;
- wobei die Ergebnisse zumindest dem Betreiber zugänglich sind.

20. Überwachungsverfahren nach einem der vorstehenden Ansprüche, **dadurch gekennzeichnet, dass**
- das Trainieren des Modells (16) in den Bereich der künstlichen Intelligenz fällt und es sich um maschinelles Lernen handeln kann.

## Claims

1. Digital method for supervision of the operation and maintenance of at least one item of industrial equipment (2) within a facility (3),
- said facility (3) comprising at least one item of industrial equipment (2) from a manufacturing process (4) and representative of a series,
- said equipment (2) being installed in the facility (3) and at least operated in the context of a period (5) up to a maintenance step (6) to be performed;
- for said equipment (2) at least one projected maintenance (7) subsequent to said maintenance (6) to be performed, after at least one scenario (8) with projected usage conditions (110) of said equipment (2) over a projected period (70) of operation,
- the facility (3) comprising multiple logs induced by the manufacture (4), installation, operation and maintenance of said equipment (2), said logs comprising at least:
- a manufacturing and maintenance log (9) comprising:
tasks (90) for manufacturing said at least one item of equipment (2) up to said installation,
optionally tasks (90) of at least one prior maintenance (10) of said equipment (2);
- a usage log (11) of said equipment (2) over said period (5) between the installation and said maintenance (6) to be performed, said usage log (11) comprising usage conditions (110) of said equipment (2) during said period (5); and
- a log (12) of statuses (13) of said equipment (2), said status log (12) comprising material indicators (120) of said equipment (2);
the method being executed by at least one computer terminal and being **characterized in that** it comprises the following steps:
by means of a technical analysis of said equipment (2), determining at least one correlation (14) between at least one of said tasks (90) and/or at least one of said usage conditions (110), and at least one of the material indicators (120) of said status (13), said correlation (14) establishing at least one link between causes of aging and consequences of aging of the equipment (2);
in the correlation (14):
- characterizing the tasks (90) by those identified as critical, and/or the usage conditions (110) by those to which the equipment (2) is sensitive and exposed during operation or when stopped, the tasks (90) and the conditions (110) in question impacting the status (13) of said equipment (2);
- characterizing the material status (13) of the equipment (2) by the indicators (120) identified as being representative of this status (13) of said equipment (2);
then, in the correlation (14), determining:
- measured physical quantities or functions of the measured physical quantities characterizing the usage conditions (110) to which said equipment (2) is sensitive and exposed during operation or when stopped;
- measured physical quantities or functions of the measured physical quantities characterizing the indicators (120) of the material status (13) of the equipment (2) at a given instant;
the status (13) of the equipment (2) at a given instant, **characterized by** the material indicators (120), reflects the physical integrity of the equipment (2), on which its ability to operate properly depends;
then
for the other items of equipment of said series, recovering and extracting data associated with these tasks (90), and data associated with the physical quantities or functions of physical quantities relating to these usage conditions (110) and to these material indicators (120), as identified in said correlation (14), so as to obtain a dataset (15);
- training at least one virtual model (16), on the basis of the dataset (15);
then
during the maintenance (6) to be performed of said equipment (2), submitting values to said model (16):
- of at least one of the tasks (90) of the manufacturing and maintenance log (9) and of at least one of the usage conditions (110) of the usage log (11),
- and at least one of the tasks (90) of the maintenance (6) to be performed and of said projected usage conditions (110) of the scenario (8);
- said model (16) generating a projected status (130) of said equipment (2) subsequent to said maintenance (6) to be performed,
- said projected status (130) being compared to a minimal status (17) identified as being required for the operation of said equipment (2).

2. Supervision method according to claim 1, **characterized in that** it consists in - carrying out at least one variation of at least one of the values of the tasks (90) of the maintenance (6) to be performed:
- when the values are submitted to said model (16), introducing the values of said variation;
- among all the variations, selecting at least one sufficient decision of the maintenance (6) to be performed, for the projected status (130) of said equipment (2), greater than or equivalent to the minimal status (17), at the time of said projected maintenance (7).

3. Supervision method according to one of claims 1 or 2,
**characterized in that** it consists in
- for a given maintenance decision, carrying out a modification of the value of at least one of the projected usage conditions (110) of the scenario (8);
- when said values are submitted to said model (16), introducing the values of said modification as well as the values of said maintenance decision;
- calculating a limit for at least one of said projected conditions (110) for the projected status (130) of said equipment (2) equivalent to the minimal status (17), at the time of the projected maintenance (7).

4. Supervision method according to claims 2 and 3, **characterized in that** it consists in
- when the values are submitted to said model (16), introducing the selected values of said sufficient maintenance decision;
- calculating a maximal limit (18) of said projected condition (110) for this sufficient maintenance decision, for the projected status (130) of said equipment (2) equivalent to the minimal status (17), at the time of the projected maintenance (7).

5. Supervision method according to claim 4, **characterized in that** it consists in
- determining a margin of usage for at least one of the projected usage conditions (110) of said scenario (8), as being the deviation (182) between the corresponding value and the corresponding maximal limit (18).

6. Supervision method according to claim 5, **characterized in that** it consists in
- selecting an optimal decision from among the sufficient decisions, as having the acceptable margin of usage or as having at least one of said acceptable deviations (182).

7. Supervision method according to claim 6, **characterized in that** it comprises a step of
- graphic representation in the form of a chart, with at least one curve associated with at least a first one of the projected conditions (110) as a function of a second one of said projected conditions (110),
said chart determining the maximal limit (18) of a first projected condition (110).

8. Supervision method according to any of the preceding claims, **characterized in that** it consists in
- in the correlation step (14), reducing the manufacturing and maintenance log (9) to a log of critical tasks (90) in the form of at least one list of successive values, each of the values of the list characterizing the task (90) in question in a given maintenance operation,
in each list, choosing only the persistent value as being the value adopted in the last maintenance operation during which the task (90) in question was performed
- only retaining the persistent values in the log (9) of critical tasks (90).

9. Supervision method according to any of the preceding claims,
**characterized in that**
in the correlation step (14), the functions of the measured physical quantities of the usage conditions (110) comprise
- a calculation of the time of presence of the measured physical quantities in at least one range of values;
and/or
- a calculation representative of at least one fluctuation of the measured physical quantities:
and/or
- a counting of said at least one fluctuation.

10. Supervision method according to any of the preceding claims, **characterized in that** it consists in,
in the correlation (14), periodically,
- repeating the recovery of new data from at least one manufacturer, maintenance technician and/or operator,
- then a step of extracting said new data to obtain a completed dataset (15),
- followed by updating the training of said model (16) on the basis of said completed dataset (15).

11. Supervision method according to any of the preceding claims, **characterized in that** it consists in
subsequent to said maintenance (6) once it has been performed, submitting values to said model (16)
- of at least one of the tasks (90) of the manufacturing and maintenance log (9), of at least one task (90) of the maintenance (6) performed and of at least one of the usage conditions (110) of the usage log (11) since said maintenance (6) performed
- and of said projected usage conditions (11) of the scenario (8), said model (16) refreshing the projected status (130) of said equipment (2), said projected status (130) being compared to a minimal status (17) identified as being required for the operation of said equipment (2).

12. Supervision method according to claims 5 to 11, **characterized in that** it comprises at least the following steps:
- assuming that at least said sufficient decision of the maintenance (6) to be performed has been performed and assuming that the scenario (8) has been executed up to the projected maintenance (7) following said maintenance (6) to be performed;
- then, making at least one variation to at least one of the values of the tasks (90) of said projected maintenance (7);
- when the values are submitted to said model (16), introducing the values of said variation as well as the values of a following scenario (81) foreseen for the projected period (710) of operation following said projected maintenance (7);
- among all the variations, selecting at least one sufficient decision for said projected maintenance (7), for the projected status (130) of said equipment (2) greater than or equivalent to the minimal status (17), at the time of the maintenance (71) following said projected maintenance (7);
- determining at least one of the maximal limits (18) as well as the margin of usage associated with said sufficient maintenance decision thus selected and with said following scenario (81);
then repeating said steps in a recurrent manner for every other following projected maintenance in the life of the equipment (2).

13. Supervision method according to claims 6 and 12, **characterized in that** it consists in
- selecting said optimal decision from at least said sufficient decision for the corresponding maintenance.

14. Supervision method according to claims 2 to 13, **characterized in that** it consists in
- when a maintenance decision is insufficient with a projected status (130) that is less than said minimal status (17), determining the failure date (19) for said corresponding maintenance decision.

15. Supervision method according to claim 14, **characterized in that** it consists in
- for the maintenance (6) to be performed or for a projected maintenance (7,71) without any maintenance decision identified as sufficient, and for at least one given insufficient decision of said maintenance (6) to be performed, determining the date of the end of the service life of the equipment (2) as being said failure date (19) associated with said maintenance decision.

16. Supervision method according to claim 15, **characterized in that**
- for the maintenance (6) to be performed or for a projected maintenance identified as last maintenance in the life of the equipment (2),
selecting among the possible maintenance decisions the one that optimizes any combination among said failure date (19), a margin of last usage and the constraints of the tasks (90) of said last maintenance.

17. Supervision method according to claim 1, **characterized in that** it consists in, for at least two dummy items of equipment of the same series of said equipment (2), associated with separate manufacturing decisions
- performing a simulation by submitting to said model (16) said at least two manufacturing decisions and at least one projected usage scenario (8) over the assumed service life of said two dummy items of equipment;
- the model (16) generating at least one projected status (130) for each of said two dummy items of equipment;
- selecting one of said at least two manufacturing decisions as a function of the projected status (130) of said two dummy items of equipment;
- the selected manufacturing decision being accessible to a designer/manufacturer.

18. Supervision method according to any of claims 12 to 17,
**characterized in that** it consists in
for at least two dummy items of equipment of the same series of said equipment (2), associated with two separate manufacturing decisions;
- performing recurring simulations in a similar manner for each of said at least two manufacturing decisions, to determine the optimal life cycle associated with each of said manufacturing decisions: a series of optimal maintenance decisions, a series of maximal limits (18) and margin of usage associated with these optimal maintenance decisions as well as the associated optimal service life of the dummy item of equipment;
- choosing the optimal manufacturing decision as a function of the results of said simulations;
- the selected optimal manufacturing decision being accessible to said designer/manufacturer.

19. Supervision method according to any of the preceding claims, **characterized in that**
- it is applied to a fleet of multiple items of equipment (2) of said series belonging to a single operator;
**and in that** it consists in
- combining the results obtained for each of said items of equipment (2);
- said results being accessible at least to said operator.

20. Supervision method according to any of the preceding claims, **characterized in that**
- the training of said model (16) falls within the field of artificial intelligence and can be machine learning.
